(19) Europäisches Patentamt
European Patent Office
Office européen des brevets

(11) EP 1 838 783 B1

(12) EUROPÄISCHE PATENTSCHRIFT

(45) Veröffentlichungstag und Bekanntmachung des Hinweises auf die Patenterteilung:
**09.07.2008 Patentblatt 2008/28**

(21) Anmeldenummer: **06707691.9**

(22) Anmeldetag: **10.01.2006**

(51) Int Cl.:
***C08L 59/00*** (2006.01)

(86) Internationale Anmeldenummer:
**PCT/EP2006/050121**

(87) Internationale Veröffentlichungsnummer:
**WO 2006/074997 (20.07.2006 Gazette 2006/29)**

# (54) POLYOXYMETHYLEN UND ZEOLITH ENTHALTENDE FORMMASSE

MOULDING COMPOUND COMPRISING POLYOXYMETHYLENE AND ZEOLITE

MATIERE DE MOULAGE CONTENANT UN POLYOXYMETHYLENE ET UNE ZEOLITHE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.01.2005 DE 102005001793**

(43) Veröffentlichungstag der Anmeldung:
**03.10.2007 Patentblatt 2007/40**

(73) Patentinhaber: **BASF SE
67056 Ludwigshafen (DE)**

(72) Erfinder:
- **URTEL, Melanie
68535 Edingen-Neckarhausen (DE)**
- **MÜLLER, Ulrich
67435 Neustadt (DE)**
- **SAUERER, Wolfgang
67134 Birkenheide (DE)**
- **ASSMANN, Jens
68165 Mannheim (DE)**

(74) Vertreter: **Huhn, Michael
Isenbruck Bösl Hörschler
Wichmann Huhn
Patentanwälte
Theodor-Heuss-Anlage 12
68165 Mannheim (DE)**

(56) Entgegenhaltungen:
**US-A- 4 517 319** **US-B1- 6 753 363**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 838 783 B1

## Beschreibung

Die vorliegende Erfindung betrifft Formmassen, insbesondere thermoplastische Formmassen, die Polyoxymethylenpolymer und zeolithisches Material enthalten. Additiv können die erfindungsgemäßen Formmassen weitere Bestandteile wie beispielsweise thermoplastische Polyurethane enthalten. Weiter betrifft die vorliegende Erfindung die Herstellung der genannten Formmassen. Ebenso betrifft die vorliegende Erfindung die Verwendung von zeolithischem Material als Bestandteil einer Polyoxymethylen enthaltenden Formmasse zur Reduzierung der Formaldehydemission. Insbesondere bevorzugt betrifft die vorliegende Erfindung Polyoxymethylen enthaltende Formmassen, die als Formaldehydfänger ausschließlich zeolithisches Material enthalten.

Polyoxymethylenpolymere werden im Allgemeinen durch Polymerisation von Formaldehyd oder Trioxan hergestellt, vorzugsweise in der Gegenwart von geeigneten Katalysatoren (siehe beispielsweise Römpp Chemie-Lexikon, Georg Thieme Verlag, 10. Auflage 1999, Bd. V, Seiten 3490 und 3406 bis 3407).

Die EP 0 789 049 A1 beschreibt antistatisch ausgerüstete Polymere, wobei als Polymere - neben vielen anderen - Polyacetale wie Polyoxymethylen beschrieben sind. Diese Polymere enthalten weiter ein polares adsorptives anorganisches oder organisches Material. Als anorganisches Material sind - wiederum neben vielen anderen - Zeolithe genannt. Bevorzugt Teilchengrößen dieser Zeolithe liegen im Bereich von 50 bis 500 μm. In keinem der Beispiele dieser Schrift sind Zusammensetzungen offenbart, die zeolithisches Material enthalten.

Die US 6,753,363 B1 beschreibt eine Polyacetalharz-Zusammensetzung, die durch eine Kombination aus Phosphor enthaltender Verbindung und basischer Stickstoffverbindung flammhemmend wirkt. Es wird beschrieben, dass die Zusammensetzungen eine ganze Reihe von Zusatzstoffen wie Antioxidantien wie beispielsweise gehinderte Phenole, Lichtstabilisatoren oder Hitzestabilisatoren enthalten können. Als Hitzestabilisatoren sind wiederum eine ganze Reihe von Verbindungen offenbart, wozu beispielsweise Metallsalze organischer Säuren, Metallhydroxide, Silikate, Zeolithe und Hydrotalcite gehören. Hinsichtlich der Zeolithe sind wiederum eine Reihe verschiedener Strukturtypen beschrieben wie beispielsweise Zeolithen der Typen A, X, Y, L oder ZSM. Besonders bevorzugte Gehalte der Polyacetalharz-Zusammensetzungen an Zeolith liegen im Bereich von 1 bis 10 Gewichtsteilen, bezogen auf 100 Gewichtsteile Polyacetal. Nur in einem einzigen Beispiel der 6,753,363 B1 ist eine Polyacetalharz-Zusammensetzung beschrieben, die sowohl ein gehindertes Phenol als auch einen Zeolithen als Hitzestabilisator enthält, wobei das Gewichtsverhältnis von Zeolith zu Phenol bei 14:1 liegt. Weiter wird in der 6,753,363 B1 beschrieben, dass die basische Stickstoffverbindung in Kombination mit insbesondere dem Antioxidans, die Entstehung von Formaldehyd verhindert.

Die EP 0 288 063 A2 beschreibt ein antibiotisches Polymerharz, das einen antibiotischen Zeolithen enthält. In diesem Zeolith sind ein Teil oder alle der austauschbaren Ionen durch Ammonium- oder antibiotische Metallionen wie Silber, Kupfer, Zink, Quecksilber, Zinn, Blei, Wismuth, Cadmium, Chrom oder Thallium ersetzt. Gemäß eines Beispiels der EP 0 288 063 A2 wird pro 100 Gewichtsteilen des Harzes 1 Gewichtsteil des antibiotischen Zeolithen eingesetzt.

Die EP 1 264 858 A1 beschreibt eine Polyacetalharz-Zusammensetzung, die eine hohe thermische Stabilität und eine geringe Formaldehydemission aufweist. Diese geringe Formaldehydemission wird durch die Verwendung einer spezifischen Kombination aus Polyacetalharz, gehindertem Phenol, einem lichtresistenten Stabilisator und einer Spiroverbindung, die einen Triazin-Ring enthält, erreicht. Weiter können die Zusammensetzungen gemäß EP 1 264 858 A1 Hitzestabilistoren enthalten. Neben einer ganzen Reihe möglicher Hitzestabilisatoren sind etwa Zeolithe mit Strukturtypen A, X, Y, L oder ZSM beschrieben.

Wie die EP 1 264 858 A1 beschreibt auch die US 2004/0010064 A1 Polyacetalharz-Zusammensetzungen, die als Hitzestabilisator - neben vielen anderen - etwa einen Zeolithen enthalten können. In keinem der Beispiele wird jedoch eine Zusammensetzung offenbart, die einen Zeolithen enthält.

Die EP 0 789 049 A1 beschreibt antistatisch ausgerüstete Polymere, die neben einem thermoplastischen, strukturvernetzten elastomeren oder duroplastischen Polymer entweder ein polares adsorptives anorganisches oder ein polares adsorptives organisches Material sowie mindestens eine polare organische Verbindung mit mindestens 5 Kohlenstoffatomen und mindestens 3 Heteroatomen und darüber hinaus das Salz einer anorganischen Protonensäure enthalten. Beispiele für polare adsorptive anorganische Materialien sind, neben vielen anderen, beispielsweise Zeolithe. Bevorzugte Teilchengrößen der polaren adsorptiven anorganischen Materialien liegen im Bereich von 50 bis 500 μm. Weiter bevorzugt sind Teilchen, die nicht sphärisch sind. Demgemäß werden in den Beispielen der EP 0 789 049 A1 als adsorptive Materialien ausschließlich Fasern verwendet.

Die US 5,710,189 und US 5,847,017 beschreiben eine Treibmittelzusammensetzung, die einen Molekularsieb und einen Schaumbildner umfasst. Weiterhin beschreiben die US 5,710,189 und die US 5,847,017 eine schäumbare Mischung aus Harz und Treibmittelzusammensetzung. Die Zusammensetzung zeichnet sich dadurch aus, dass zwei Molekularsiebe verschiedener Porengrößen kombiniert werden, wobei der erste Molekularsieb dazu dient, Moleküle wie beispielsweise Wasser und Ammoniak aufzunehmen und der zweite Molekularsieb das Treibmittel enthält, mit dem das Harz geschäumt werden soll.

In vielen Verwendungsformen von Formmassen oder Formkörpern auf Polyoxymethylenbasis sind bestimmte thermische und mechanische Eigenschaften wie beispielsweise eine hohe thermische Stabilität, eine hohe Steifigkeit,

ein hohes Zug-E-Modul und/oder eine hohe Streckspannung erwünscht.

Weiterhin ist im Hinblick auf eine kostengünstige Herstellung der Formmassen eine gute Nukleierung und somit eine hohe Kristallisationsgeschwindigkeit einer Polyoxymethylen-Polymermasse erwünscht.

Insbesondere für die Eignung von Formmassen oder Formkörpern, die im Lebensmittelbereich, im Haushaltsbereich, im Bereich des Hausbaus, insbesondere im Hausinnenraum, im Bereich des Automobilbaus, insbesondere hinsichtlich der im Autoinnenraum verbauten Teile, oder im medizinischen Bereich ist die Formaldehyd-Emission ein wesentliches Kriterium. Auch aus toxikologischer Sicht ist es erstrebenswert, die Formaldehyd-Emission der derart verwendeten Formmassen oder Formkörpern zu minimieren. Gemäß des Standes der Technik werden dazu spezielle Verbindungen als Bestandteile zu den Polyoxymethylen enthaltenden Formmassen oder Formkörpern gegeben, die mit Formaldehyd eine chemische Reaktion eingehen und diesen durch chemische Umwandlung aus der Formmasse oder dem Formkörper entfernen. Derartige Zusätze können jedoch zu einer Beeinträchtigung der Polymereigenschaften wie beispielsweise der mechanischen und thermischen Stabilität sowie Verfärbung und Fogging führen. Ein weiterer Nachteil ist etwa in der Tatsache zu sehen, dass die durch chemische Reaktion gebildeten Produkte im System verbleiben, was ebenfalls zu den genannten Beeinträchtigungen führen kann, oder aufwändig aus dem System entfernt werden müssen.

Eine der vorliegenden Erfindung zugrunde liegenden Aufgabe war es daher, neue Formmassen und Formkörper bereitzustellen, die mindestens eine der oben genannten vorteilhaften Eigenschaften aufweisen.

Eine weitere der vorliegenden Erfindung zugrunde liegenden Aufgabe war es insbesondere, neue Formmassen und Formkörper bereitzustellen, die in einfach zu realisierender Weise eine geringe Formaldehyd-Emission aufweisen.

Eine weitere der vorliegenden Erfindung zugrunde liegenden Aufgabe war es insbesondere auch, eine neue Formmasse bereitzustellen, die in einfach zu realisierender Weise eine geringe Formaldehyd-Emission aufweist und gleichzeitig eine hohe thermische Stabilität aufweist.

Demgemäß betrifft die vorliegende Erfindung eine Formmasse, enthaltend 10 bis 99,999 Gew.-% mindestens eines Polyoxymethylens als Komponente (A1) und von 0,001 bis 10 Gew.-%, bezogen auf das Gewicht der in der Formmasse enthaltenen Komponente (A1), mindestens eines zeolithischen Materials mit einem Porendurchmesser im Bereich von 0,3 bis 0,5 nm, bestimmt gemäß DIN 66134 und DIN 66135, wobei die Partikel des zeolithischen Materials eine Größe im Bereich von 3 bis 7 μm, bestimmt gemäß ISO 13320, aufweisen.

Die Norm ISO 13320, auf die im Rahmen der vorliegenden Erfindung Bezug genommen wird, ist die Norm in der Version vom 1999-11-01. Als Dispersionsmittel zur Bestimmung der Partikelgröße wurde VE-Wasser verwendet. Als Apparat wurde ein Malvern Mastersizer 2000 (Modul Hydro 2000G) verwendet. Die Präparation der Proben erfolgte bei einem Feststoffgehalt von 1 bis 2 Gew.-% in Wasser und anschließendem Rühren mit einem Magnetrührer, wobei für 1 min gerührt wurde. Als Partikelgröße wurde die Größe der Partikel bei einem Durchgang von 50 % festgelegt.

Der Begriff "zeolithisches Material", wie er im Rahmen der vorliegenden Erfindung verwendet wird, bezeichnet kristalline Alumosilikate mit geordneten Kanal- und Käfigstrukturen. Das Netzwerk solcher Zeolithe ist aufgebaut aus $SiO_4^-$ und $AlO_4^-$ -Tetraedern, die über die gemeinsamen Sauerstoffbrücken verbunden sind. Eine Übersicht der bekannten Strukturen findet sich beispielsweise bei M. W. Meier, D. H. Olson, Ch. Baerlocher "Atlas of Zeolite Structure Types" 5. revidierte Auflage, Elsevier, London, 2001. Eine weitere Aufstellung befindet sich, über Internet zugänglich, unter der URL http://topaz.ethz.ch/IZA-SC/SearchRef.htm, wo unter anderem folgende Strukturen beschrieben sind: ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AWO, AWW, BCT, BEA, BEC, BIK, BOG, BPH, BRE, CAN, CAS, CDO, CFI, CGF, CGS, CHA, CHI, CLO, CON, CZP, DAC, DDR, DFO, DFT, DOH, DON, EAB, EDI, EMT, EPI, ERI, ESV, ETR, EUO, FAU, FER, FRA, GIS, GIU, GME, GON, GOO, HEU, IFR, ISV, ITE, ITH, ITW, IWR, IWW, JBW, KFI, LAU, LEV, LIO, LOS, LOV, LTA, LTL, LTN, MAR, MAZ, MEI, MEL, MEP, MER, MFI, MFS, MON, MOR, MSO, MTF, MTN, MTT, MTW, MWW, NAB, NAT, NES, NON, NPO, OBW, OFF, OSI, OSO, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN SFO, SGT, SOD, SSY, STF, STI, STT, TER, THO, TON, TSC, UEI, UFI, UOZ, USI, UTL, VET, VFI, VNI, VSV, WEI, WEN, ***YNU,*** YUG oder ZON.

Zum Ausgleich der negativen Elektrovalenz, die durch den Einbau von Al(III) in das Si(IV)-Silicatgitter entsteht, findet man bei zeolithischen Materialien austauschfähige Kationen. Insbesondere kann es sich dabei - je nach Herstellverfahren des zeolithischen Materials - beispielsweise um Kationen des Natriums, Kaliums, Lithiums, Rubidiums oder Cäsiums handeln. Auch Ammoniumionen können als Kationen im zeolithischen Material enthalten sein. Ersetzt man diese Kationen gegen Protonen, beispielsweise durch einen Ionenaustausch, so erhält man die entsprechenden Materialien in der so genannten aciden Form, der H-Form.

Der Porendurchmesser des zeolithischen Materials liegt bevorzugt in einem Bereich von 0,31 bis 0,49 nm, weiter bevorzugt in einem Bereich von 0,32 bis 0,48 nm, weiter bevorzugt in einem Bereich von 0,33 bis 0,47 nm, weiter bevorzugt in einem Bereich von 0,34 bis 0,46 nm und besonders bevorzugt in einem Bereich von 0,35 bis 0,45 nm. Insbesondere bevorzugte Porendurchmesser liegen beispielsweise bei 0,36 nm oder 0,37 nm oder 0,38 nm oder 0,39 nm oder 0,40 nm oder 0,41 nm oder 0,42 nm oder 0,43 nm oder 0,44 nm.

Demgemäß betrifft die vorliegende Erfindung auch eine wie oben beschriebene Formmasse, wobei der Porendurchmesser des zeolithischen Materials im Bereich von 0,37 bis 0,43 nm liegt.

Die Partikelgröße des zeolithischen Material liegt bevorzugt in einem Bereich von 3,1 bis 6,9 µm, weiter bevorzugt in einem Bereich von 3,2 bis 6,8 µm, weiter bevorzugt in einem Bereich von 3,3 bis 6,7 µm, weiter bevorzugt in einem Bereich von 3,4 bis 6,6 µm, weiter bevorzugt in einem Bereich von 3,5 bis 6,5 µm, weiter bevorzugt in einem Bereich von 3,6 bis 6,4 µm, weiter bevorzugt in einem Bereich von 3,7 bis 6,3 µm, weiter bevorzugt in einem Bereich von 3,8 bis 6,2 µm, weiter bevorzugt in einem Bereich von 3,9 bis 6,1 µm, und insbesondere bevorzugt in einem Bereich von 4,0 bis 6,0 µm.

Demgemäß betrifft die vorliegende Erfindung auch eine wie oben beschriebene Formmasse, wobei die Partikel des zeolithischen Materials eine Größe im Bereich von 4 bis 6 µm, bestimmt gemäß ISO 13320, aufweisen.

Beispielsweise besonders bevorzugte Partikelgröße des zeolithischen Material liegen bei 4,1 µm oder 4,2 µm oder 4,3 µm oder 4,4 µm oder 4,5 µm oder 4,6 µm oder 4,7 µm oder 4,8 µm oder 4,9 µm oder 5,0 µm oder 5,1 µm oder 5,2 µm oder 5,3 µm oder 5,4 µm oder 5,5 µm oder 5,6 µm oder 5,7 µm oder 5,8 µm oder 5,9 µm.

Gemäß einer besonders bevorzugten Ausführungsform enthält die erfindungsgemäße Formmasse ein zeolithisches Material mit Porendurchmesser im Bereich von 0,35 bis 0,45 nm, weiter bevorzugt im Bereich von 0,36 bis 0,44 nm und weiter bevorzugt im Bereich von 0,37 bis 0,43 nm, wobei die Partikelgröße im Bereich von 3,5 bis 6,5 µm, weiter bevorzugt im Bereich von 3,6 bis 6,4 µm, weiter bevorzugt im Bereich von 3,7 bis 6,3 µm, weiter bevorzugt im Bereich von 3,8 bis 6,2 µm, weiter bevorzugt im Bereich von 3,9 bis 6,1 µm und insbesondere im Bereich von 4,0 bis 6,0 µm liegt.

Ganz besonders bevorzugt enthält die erfindungsgemäße Formmasse daher ein zeolithisches Material mit einem Porendurchmesser im Bereich von 0,37 bis 0,43 nm und einer Partikelgröße im Bereich von 4,0 bis 6,0 µm.

Grundsätzlich ist es denkbar, dass die Formmassen der vorliegenden Erfindung ein einziges zeolithisches Material oder zwei, drei, vier oder mehr voneinander verschiedene zeolithische Materialien enthalten, solange gewährleistet ist, dass mindestens ein zeolithisches Material die oben beschriebenen Spezifikationen hinsichtlich Porendurchmesser und Partikelgröße aufweist. Dabei sind grundsätzlich auch Ausführungsformen von der Erfindung umfasst, gemäß denen die Formmasse mindestens zwei voneinander verschiedene zeolithische Materialien umfasst, wobei mindestens ein zeolithisches Material die oben genannten Spezifikationen hinsichtlich Porendurchmesser und Partikelgröße aufweist und mindestens ein weiteres zeolithisches Material entweder einen davon verschiedenen Porendurchmesser oder eine davon verschiedene Partikelgröße oder sowohl einen davon verschiedenen Porendurchmesser als auch eine davon verschiedene Partikelgröße aufweist.

Demgemäß umfasst die vorliegende Erfindung Formmassen, die mindestens ein zeolithisches Material enthalten, das einen Porendurchmesser im Bereich von 0,3 bis 0,5 nm, bestimmt gemäß DIN 66134 und DIN 66135, wobei die Partikel des zeolithischen Materials eine Größe im Bereich von 3 bis 7 µm, bestimmt gemäß ISO 13320, aufweist, wobei die Formmasse zusätzlich mindestens ein weiteres, davon verschiedenes zeolithisches Material aufweist, das eine Partikelgröße im Bereich von 3 bis 7 µm und einen Porendurchmesser von kleiner 0,3 nm oder von größer 0,5 nm oder das einen Porendurchmesser im Bereich von 0,3 bis 0,5 nm und eine Partikelgröße von kleiner 3 µm oder größer 7 µm aufweist oder das einen Porendurchmesser von kleiner 0,3 oder größer 0,5 nm und eine Partikelgröße von kleiner 3 µm oder größer 7 µm aufweist. Letztere Ausführungsform umfasst daher Formassen, die mindestens ein zeolithisches Material enthalten, das einen Porendurchmesser im Bereich von 0,3 bis 0,5 nm, bestimmt gemäß DIN 66134 und DIN 66135, aufweist, wobei die Partikel des zeolithischen Materials eine Größe im Bereich von 3 bis 7 µm, bestimmt gemäß ISO 13320, aufweisen, und die zusätzlich mindestens ein weiteres zeolithisches Material enthalten, das einen Porendurchmesser von kleiner 0,3 nm und eine Partikelgröße von kleiner 3 µm aufweist oder das einen Porendurchmesser von kleiner 0,3 nm und eine Partikelgröße von größer 7 µm aufweist oder das einen Porendurchmesser von größer 0,5 nm und eine Partikelgröße von kleiner 3 µm aufweist oder das einen Porendurchmesser von größer 0,5 nm und eine Partikelgröße von größer 7 µm aufweist.

Im Fall, dass die erfindungsgemäße Formmasse zwei oder mehr verschiedene zeolithische Materialien enthält, von denen jedes Material einen Porendurchmesser im Bereich von 0,3 bis 0,5 nm, bestimmt gemäß DIN 66134 und DIN 66135, aufweist, wobei die Partikel des zeolithischen Materials eine Größe im Bereich von 3 bis 7 µm, bestimmt gemäß ISO 13320, aufweisen, so können sich diese zeolithischen Materialien sowohl hinsichtlich des Porendurchmessers als auch hinsichtlich der Partikelgröße als auch hinsichtlich des Porendurchmessers und der Partikelgröße unterscheiden.

Gemäß einer bevorzugten Ausführungsform der erfindungsgemäßen Formmasse enthält diese neben mindestens einem zeolithischen Material, das einen Porendurchmesser im Bereich von 0,3 bis 0,5 nm, bestimmt gemäß DIN 66134 und DIN 66135, aufweist, wobei die Partikel des zeolithischen Materials eine Größe im Bereich von 3 bis 7 µm, bestimmt gemäß ISO 13320, aufweisen, kein weiteres zeolithisches Material.

Gemäß einer besonders bevorzugten Ausführungsform der erfindungsgemäßen Formmasse enthält diese neben mindestens einem zeolithischen Material, das einen Porendurchmesser im Bereich von 0,37 bis 0,43 nm, bestimmt gemäß DIN 66134 und DIN 66135, aufweist, wobei die Partikel des zeolithischen Materials eine Größe im Bereich von 4 bis 6 µm, bestimmt gemäß ISO 13320, aufweisen, kein weiteres zeolithisches Material.

Gemäß einer weiter bevorzugten Ausführungsform enthält die erfindungsgemäße Formmasse, bezogen auf

das Gewicht der in der Formmasse enthaltenen Komponente (A1), das zeolithische Material in einer Menge im Bereich von 0,002 bis 9 Gew.-%, weiter bevorzugt im Bereich von 0,003 bis 8 Gew.-%, weiter bevorzugt im Bereich von 0,004 bis 7 Gew.-%, weiter bevorzugt im Bereich von 0,005 bis 6 Gew.-%, weiter bevorzugt im Bereich von 0,006 bis 5 Gew.-%, weiter bevorzugt im Bereich von 0,007 bis 4 Gew.-%, weiter bevorzugt im Bereich von 0,008 bis 3 Gew.-%, weiter bevorzugt im Bereich von 0,009 bis 2 Gew.-%, weiter bevorzugt im Bereich von 0,01 bis 1 Gew.-%, weiter bevorzugt im Bereich von 0,02 bis 0,9 Gew.-%, weiter bevorzugt im Bereich von 0,03 bis 0,8 Gew.-%, weiter bevorzugt im Bereich von 0,04 bis 0,7 Gew.-%, weiter bevorzugt im Bereich von 0,05 bis 0,6 Gew.-% und insbesondere bevorzugt im Bereich von 0,05 bis 0,50 Gew.-%.

Demgemäß betrifft die vorliegende Erfindung auch eine wie oben beschriebene Formmasse, enthaltend von 0,05 bis 0,50 Gew.-% des zeolithischen Materials, bezogen auf das Gewicht der in der Formmasse enthaltenen Komponente (A1).

Besonders bevorzugte Gehalte der erfindungsgemäßen Formmasse an zeolithischem Material, bezogen auf das Gewicht der in der Formmasse enthaltenen Komponente (A1), liegen beispielsweise bei 0,05 Gew.-%, 0,10 Gew.-%, 0,15 Gew.-%, 0,20 Gew.-%, 0,25 Gew.-%, 0,30 Gew.-%, 0,35 Gew.-%, 0,40 Gew.-%, 0,45 Gew.-% oder 0,50 Gew.-%.

Gemäß einer bevorzugten Ausführungsform der erfindungsgemäßen Formmasse enthält diese 0,05 bis 0,50 Gew.-%, bezogen auf den Gehalt der Formmasse an Komponente (A1), mindestens eines zeolithischen Materials, das einen Porendurchmesser im Bereich von 0,3 bis 0,5 nm, bestimmt gemäß DIN 66134 und DIN 66135, aufweist, wobei die Partikel des zeolithischen Materials eine Größe im Bereich von 3 bis 7 $\mu$m, bestimmt gemäß ISO 13320, aufweisen.

Gemäß einer weiter bevorzugten Ausführungsform der erfindungsgemäßen Formmasse enthält diese neben 0,05 bis 0,50 Gew.-%, bezogen auf den Gehalt der Formmasse an Komponente (A1), mindestens eines zeolithischen Materials, das einen Porendurchmesser im Bereich von 0,3 bis 0,5 nm, bestimmt gemäß DIN 66134 und DIN 66135, aufweist, wobei die Partikel des zeolithischen Materials eine Größe im Bereich von 3 bis 7 $\mu$m, bestimmt gemäß ISO 13320, aufweisen, kein weiteres zeolithisches Material.

Gemäß einer weiter bevorzugten Ausführungsform der erfindungsgemäßen Formmasse enthält diese 0,05 bis 0,50 Gew.-%, bezogen auf den Gehalt der Formmasse an Komponente (A1), mindestens eines zeolithischen Materials, das einen Porendurchmesser im Bereich von 0,37 bis 0,43 nm, bestimmt gemäß DIN 66134 und DIN 66135, aufweist, wobei die Partikel des zeolithischen Materials eine Größe im Bereich von 4 bis 6 $\mu$m, bestimmt gemäß ISO 13320, aufweisen.

Gemäß einer besonders bevorzugten Ausführungsform der erfindungsgemäßen Formmasse enthält diese neben 0,05 bis 0,50 Gew.-%, bezogen auf den Gehalt der Formmasse an Komponente (A1), mindestens eines zeolithischem Materials, das einen Porendurchmesser im Bereich von 0,37 bis 0,43 nm, bestimmt gemäß DIN 66134 und DIN 66135, aufweist, wobei die Partikel des zeolithischen Materials eine Größe im Bereich von 4 bis 6 $\mu$m, bestimmt gemäß ISO 13320, aufweisen, kein weiteres zeolithisches Material.

Das zeolithische Material mit einem Porendurchmesser im Bereich von 0,3 bis 0,5 nm und einer Partikelgröße im Bereich von 3 bis 7 $\mu$m, beispielsweise bevorzugt mit einem Porendurchmesser im Bereich von 0,37 bis 0,43 nm und einer Partikelgröße im Bereich von 4 bis 6 $\mu$m, kann grundsätzliches jedes molare Verhältnis Si:Al, berechnet als molares Verhältnis $SiO_2$:$Al_2O_3$, aufweisen.

Besonders bevorzugt ist ein Si:Al-Verhältnis, berechnet als molares Verhältnis $SiO_2$:$Al_2O_3$, im Bereich von bis zu 5:1.

Demgemäß betrifft die vorliegende Erfindung auch eine wie oben beschriebene Formmasse, wobei das zeolithische Material ein molares Si:Al-Verhältnis, berechnet als molares Verhältnis $SiO_2$:$Al_2O_3$, im Bereich von bis zu 5:1 aufweist.

Bevorzugt weist das zeolithische Material ein molares Si:Al-Verhältnis, berechnet als molares Verhältnis $SiO_2$:$Al_2O_3$, im Bereich von 0,9:1 bis 5:1, weiter bevorzugt im Bereich von 0,9:1 bis 4:1, weiter bevorzugt im Bereich von 0,9:1 bis 3:1, weiter bevorzugt im Bereich von 0,9:1 bis 2:1 und insbesondere bevorzugt im Bereich von 1:1 bis 2:1 auf. Beispielsweise besonders bevorzugt ist ein molares Si:Al-Verhältnis, berechnet als molares Verhältnis $SiO_2$:$Al_2O_3$, von in etwa 1:1.

Gemäß einer Ausführungsform der erfindungsgemäßen Formmasse enthält diese 0,05 bis 0,50 Gew.-%, bezogen auf den Gehalt der Formmasse an Komponente (A1), mindestens eines zeolithischen Materials, das einen Porendurchmesser im Bereich von 0,3 bis 0,5 nm, bestimmt gemäß DIN 66134 und DIN 66135, aufweist, wobei die Partikel des zeolithischen Materials eine Größe im Bereich von 3 bis 7 $\mu$m, bestimmt gemäß ISO 13320, aufweisen und das molare Si:Al-Verhältnis, berechnet als molares Verhältnis $SiO_2$:$Al_2O_3$, im Bereich von 0,9:1 bis 5:1 liegt.

Gemäß einer weiteren Ausführungsform der erfindungsgemäßen Formmasse enthält diese neben 0,05 bis 0,50 Gew.-%, bezogen auf den Gehalt der Formmasse an Komponente (A1), mindestens eines zeolithischen Materials, das einen Porendurchmesser im Bereich von 0,3 bis 0,5 nm, bestimmt gemäß DIN 66134 und DIN 66135, aufweist, wobei die Partikel des zeolithischen Materials eine Größe im Bereich von 3 bis 7 $\mu$m, bestimmt gemäß ISO 13320, aufweisen und das molare Si:Al-Verhältnis, berechnet als molares Verhältnis $SiO_2$:$Al_2O_3$, im Bereich von 0,9:1 bis 5:1 liegt, kein weiteres zeolithisches Material.

Gemäß einer weiteren Ausführungsform der erfindungsgemäßen Formmasse enthält diese 0,05 bis 0,50 Gew.-%, bezogen auf den Gehalt der Formmasse an Komponente (A1), mindestens eines zeolithischen Materials, das einen Porendurchmesser im Bereich von 0,37 bis 0,43 nm, bestimmt gemäß DIN 66134 und DIN 66135, aufweist, wobei die Partikel des zeolithischen Materials eine Größe im Bereich von 4 bis 6 μm, bestimmt gemäß ISO 13320, aufweisen und das molare Si:Al-Verhältnis, berechnet als molares Verhältnis $SiO_2:Al_2O_3$, im Bereich von 0,9:1 bis 2:1 liegt.

Gemäß einer weiteren Ausführungsform der erfindungsgemäßen Formmasse enthält diese neben 0,05 bis 0,50 Gew.-%, bezogen auf den Gehalt der Formmasse an Komponente (A1), mindestens eines zeolithischem Materials, das einen Porendurchmesser im Bereich von 0,37 bis 0,43 nm, bestimmt gemäß DIN 66134 und DIN 66135, aufweist, wobei die Partikel des zeolithischen Materials eine Größe im Bereich von 4 bis 6 μm, bestimmt gemäß ISO 13320, aufweisen und das molare Si:Al-Verhältnis, berechnet als molares Verhältnis $SiO_2:Al_2O_3$, im Bereich von 0,9:1 bis 2:1 liegt, kein weiteres zeolithisches Material.

Die oben beschriebenen Partikelgrößen des zeolithischen Materials im Bereich von 3 bis 7 μm, bestimmt gemäß ISO 13320, können grundsätzlich die Größe von Primärkristallen des zeolithischen Materials oder die Größe von aus diesen Primärkristallen gebildeten Sekundärstrukturen wiedergeben. Demgemäß können sich grundsätzlich die Größen der Primärkristalle des zeolithischen Materials, bestimmt gemäß SEM, von den Partikelgrößen, bestimmt gemäß ISO 13320, unterscheiden.

Gemäß einer bevorzugten Ausführungsform der vorliegenden Erfindung liegen die mittleren Größen der Primärkristalle des zeolithischen Materials mit einem Porendurchmesser im Bereich von 0,3 bis 0,5 nm, bestimmt gemäß DIN 66134 und DIN 66135, und einer Partikelgröße im Bereich von 3 bis 7 μm, bestimmt gemäß ISO 13320, wobei die Größen der Primärkristalle über SEM bestimmt werden, bei Werten unterhalb der Partikelgrößen.

Besonders bevorzugt liegen die mittleren Größen der Primärkristalle des zeolithischen Materials mit einem Porendurchmesser im Bereich von 0,3 bis 0,5 nm, bestimmt gemäß DIN 66134 und DIN 66135, und einer Partikelgröße im Bereich von 3 bis 7 μm, bestimmt gemäß ISO 13320, im Bereich von bis zu 3 μm, weiter bevorzugt im Bereich von 1,5 bis 3,0 μm, weiter bevorzugt im Bereich von 1,75 bis 2,75 μm und insbesondere bevorzugt im Bereich von 2,0 bis 2,5 μm, jeweils bestimmt über SEM.

Der Begriff "Größe der Primärkristalle", wie er im Rahmen der vorliegenden Erfindung verwendet wird, bezeichnet bei in etwa kugelförmigen Primärkristallen den Durchmesser der Kristalle, bei in etwa quaderförmigen Kristallen die Länge der längsten Kante der Kristalle.

Weiter bevorzugt weisen mindestens 90 %, weiter bevorzugt mindestens 91 %, weiter bevorzugt mindestens 92 %, weiter bevorzugt mindestens 93 %, weiter bevorzugt mindestens 94 % und insbesondere bevorzugt mindestens 95 % der Primärkristalle des zeolithischen Materials mit einem Porendurchmesser im Bereich von 0,3 bis 0,5 nm, bestimmt gemäß DIN 66134 und DIN 66135, und einer Partikelgröße im Bereich von 3 bis 7 μm, bestimmt gemäß ISO 13320, eine Größe im Bereich von 1,5 bis 3,0 μm, bestimmt über SEM, auf.

Weiter bevorzugt weisen mindestens 90 %, weiter bevorzugt mindestens 91 %, weiter bevorzugt mindestens 92 %, weiter bevorzugt mindestens 93 %, weiter bevorzugt mindestens 94 % und insbesondere bevorzugt mindestens 95 % der Primärkristalle des zeolithischen Materials mit einem Porendurchmesser im Bereich von 0,3 bis 0,5 nm, bestimmt gemäß DIN 66134 und DIN 66135, und einer Partikelgröße im Bereich von 3 bis 7 μm, bestimmt gemäß ISO 13320, eine Größe im Bereich von 1,75 bis 2,75 μm, bestimmt über SEM, auf.

Demgemäß betrifft die vorliegende Erfindung auch eine wie oben beschriebene Formmasse, wobei mindestens 90 % der Primärkristalle des zeolithischen Materials eine Größe im Bereich von 1,5 bis 3,0 μm, bestimmt über SEM, aufweisen.

Gemäß einer Ausführungsform der erfindungsgemäßen Formmasse enthält diese 0,05 bis 0,50 Gew.-%, bezogen auf den Gehalt der Formmasse an Komponente (A1), mindestens eines zeolithischen Materials, das einen Porendurchmesser im Bereich von 0,3 bis 0,5 nm, bestimmt gemäß DIN 66134 und DIN 66135, aufweist, wobei die Partikel des zeolithischen Materials eine Größe im Bereich von 3 bis 7 μm, bestimmt gemäß ISO 13320, aufweisen,
wobei mindestens 90 % der Primärkristalle des zeolithischen Materials eine Größe im Bereich von 1,5 bis 3,0 μm, bestimmt über SEM, aufweisen und das molare Si:Al-Verhältnis, berechnet als molares Verhältnis $SiO_2:Al_2O_3$, im Bereich von 0,9:1 bis 5:1 liegt.

Gemäß einer weiteren Ausführungsform der erfindungsgemäßen Formmasse enthält diese neben 0,05 bis 0,50 Gew.-%, bezogen auf den Gehalt der Formmasse an Komponente (A1), mindestens eines zeolithischen Materials, das einen Porendurchmesser im Bereich von 0,3 bis 0,5 nm, bestimmt gemäß DIN 66134 und DIN 66135, aufweist, wobei die Partikel des zeolithischen Materials eine Größe im Bereich von 3 bis 7 μm, bestimmt gemäß ISO 13320, aufweisen, wobei mindestens 90 % der Primärkristalle des zeolithischen Materials eine Größe im Bereich von 1,5 bis 3,0 μm, bestimmt über SEM, aufweisen und das molare Si:Al-Verhältnis, berechnet als molares Verhältnis $SiO_2:Al_2O_3$, im Bereich von 0,9:1 bis 5:1 liegt, kein weiteres zeolithisches Material.

Gemäß einer weiteren Ausführungsform der erfindungsgemäßen Formmasse enthält diese 0,05 bis 0,50 Gew.-%, bezogen auf den Gehalt der Formmasse an Komponente (A1), mindestens eines zeolithischen Materials, das einen Porendurchmesser im Bereich von 0,37 bis 0,43 nm, bestimmt gemäß DIN 66134 und DIN 66135, aufweist, wobei die

Partikel des zeolithischen Materials eine Größe im Bereich von 4 bis 6 μm, bestimmt gemäß ISO 13320, aufweisen, wobei mindestens 95 % der Primärkristalle des zeolithischen Materials eine Größe im Bereich von 1,75 bis 2,75 μm, bestimmt über SEM, aufweisen und das molare Si:Al-Verhältnis, berechnet als molares Verhältnis $SiO_2$:$Al_2O_3$, im Bereich von 0,9:1 bis 2:1 liegt.

Gemäß einer weiteren Ausführungsform der erfindungsgemäßen Formmasse enthält diese neben 0,05 bis 0,50 Gew.-%, bezogen auf den Gehalt der Formmasse an Komponente (A1), mindestens eines zeolithischen Materials, das einen Porendurchmesser im Bereich von 0,37 bis 0,43 nm, bestimmt gemäß DIN 66134 und DIN 66135, aufweist, wobei die Partikel des zeolithischen Materials eine Größe im Bereich von 4 bis 6 μm, bestimmt gemäß ISO 13320, aufweisen, wobei mindestens 95 % der Primärkristalle des zeolithischen Materials eine Größe im Bereich von 1,75 bis 2,75 μm, bestimmt über SEM, aufweisen und das molare Si:Al-Verhältnis, berechnet als molares Verhältnis $SiO_2$:$Al_2O_3$, im Bereich von 0,9:1 bis 2:1 liegt, kein weiteres zeolithisches Material.

Gemäß einer insbesondere bevorzugten Ausführungsform liegen mindestens 75 Gew.-% des in der erfindungsgemäßen enthaltenen zeolithischen Materials nicht in der H-Form vor. Dieser Gehalt bezieht sich insbesondere auf das zeolithische Material mit einem Porendurchmesser im Bereich von 0,3 bis 0,5 nm, bestimmt gemäß DIN 66134 und DIN 66135, und einer Partikelgröße im Bereich von 3 bis 7 μm, bestimmt gemäß ISO 13320, schließt jedoch auch gegebenenfalls davon verschiedenes, wie oben beschriebenes zeolithisches Material ein.

Demgemäß betrifft die vorliegende Erfindung auch eine wie oben beschriebene Formmasse, wobei mindestens 75 Gew.-% des zeolithischen Materials nicht in der H-Form vorliegen.

Weiter bevorzugt liegen in der Formmasse mindestens 80 Gew.-%, weiter bevorzugt mindestens 85 Gew.-%, weiter bevorzugt mindestens 90 Gew.%, weiter bevorzugt mindestens 95 Gew.-%, weiter bevorzugt mindestens 96 Gew.-%, weiter bevorzugt mindestens 97 Gew.-%, weiter bevorzugt mindestens 98 Gew.-%, und insbesondere bevorzugt mindestens 99 Gew.-% des zeolithischen Materials nicht in der H-Form vor.

Demgemäß betrifft die vorliegende Erfindung auch eine wie oben beschriebene Formmasse, wobei das zeolithische Material, das einen Porendurchmesser im Bereich von 0,3 bis 0,5 nm, bestimmt gemäß DIN 66134 und DIN 66135, aufweist, wobei die Partikel des zeolithischen Materials eine Größe im Bereich von 3 bis 7 μm, bestimmt gemäß ISO 13320, aufweisen, ein molares Si:Al-Verhältnis, berechnet als molares Verhältnis $SiO_2$:$Al_2O_3$, im Bereich von 0,9: 1 bis 2:1 aufweist, mindestens 95 % der Primärkristalle des zeolithischen Materials eine Größe im Bereich von 1,75 bis 2,75 μm, bestimmt über SEM, aufweisen und mindestens 95 Gew.-% des zeolithischen Materials nicht in der H-Form vorliegen.

Als zeolithische Materialien sind grundsätzlich sämtliche Materialien geeignet, die die oben beschriebenen Spezifikationen erfüllen.

Insbesondere bevorzugt sind erfindungsgemäß zeolithische Materialien mit Strukturen der röntgenographischen Zuordnung zu den Typen BEA, FER, FAU, LTA, MEL, MFI oder MOR. Ebenso sind Mischstrukturen aus zwei oder mehr dieser Typen zu nennen, wie beispielsweise ein zeolithisches Material mit MEUMFI-Mischstruktur. Unter anderem besonders bevorzugt ist ein zeolithisches Material vom LTA-Typ.

Demgemäß beschreibt die vorliegende Erfindung auch eine wie oben beschriebene Formmasse, die als zeolithisches Material ein Material vom Strukturtyp LTA mit einem Porendurchmesser im Bereich von 0,3 bis 0,5 nm, bestimmt gemäß DIN 66134 und DIN 66135, aufweist, wobei die Partikel des zeolithischen Materials eine Größe im Bereich von 3 bis 7μ m, bestimmt gemäß ISO 13320, aufweisen, wobei bevorzugt mindestens 90 % der Primärkristalle des zeolithischen Materials eine Größe im Bereich von 1,5 bis 3,0 μm, bestimmt über SEM, aufweisen und/oder das molare Si: Al-Verhältnis, berechnet als molares Verhältnis $SiO_2$:$Al_2O_3$, im Bereich von 0,9:1 bis 5:1 liegt.

Gemäß einer weiter bevorzugten Ausführungsform der vorliegenden Erfindung weist das zeolithische Material, wie oben beschrieben, 8-Ring-Kanäle auf. Weiter bevorzugt weist das zeolithische Material im Wesentlichen 8-Ring-Kanäle auf. Insbesondere bevorzugt weist das zeolithische Material, wie oben beschrieben, im Wesentlichen keine 10-Ringkanäle und/oder keine 12-Ring-Kanäle auf.

Demgemäß beschreibt die vorliegende Erfindung auch eine wie oben beschriebene Formmasse, insbesondere eine Formmasse, die 0,05 bis 0,50 Gew.%, bezogen auf den Gehalt der Formmasse an Komponente (A1), mindestens eines zeolithischen Materials, das einen Porendurchmesser im Bereich von 0,3 bis 0,5 nm, bestimmt gemäß DIN 66134 und DIN 66135, aufweist, wobei die Partikel des zeolithischen Materials eine Größe im Bereich von 3 bis 7 μm, bestimmt gemäß ISO 13320, aufweisen, und wobei das zeolithische Material als Kanäle im Wesentlichen 8-Ring-Kanäle aufweist.

Als Komponente (A1) enthält die erfindungsgemäße Formmasse mindestens ein Polyoxymethylen.

Der Begriff "Polyoxymethylen", wie er im Rahmen der vorliegenden Erfindung verwendet wird, bezeichnet sowohl ein Polyoxymethylen-Homopolymer als auch ein Polyoxymethylen-Copolymer.

Demgemäß betrifft die vorliegende Erfindung auch eine wie oben beschriebene Formmasse, enthaltend 10 bis 99,999 Gew.-% mindestens eines Polyoxymethylens, wobei das mindestens eine Polyoxymethylen mindestens ein Polyoxymethylen-Homopolymer oder mindestens ein Polyoxymethylen-Copolymer oder eine Mischung aus mindestens einem Polyoxymethylen-Homopolymer und mindestens einem Polyoxymethylen-Copolymer ist.

Unter dem Begriff "Polyoxymethylenhomopolymer" werden im Rahmen der vorliegenden Erfindung Polymere

verstanden, die nur wiederkehrende $-CH_2O$-Monomer-Einheiten aufweisen.

Unter dem Begriff "Polyoxymethylencopolymer" werden im Rahmen der vorliegenden Erfindung Polymere verstanden, die neben den $-CH_2O$-Monomer-Einheiten auch mindestens eine andere Einheit, bevorzugt mindestens eine andere wiederkehrende Einheit aufweisen. Bevorzugt weisen diese Polymere mindestens 50 Mol-% an wiederkehrenden $-CH_2O$- Einheiten in der Polymerhauptkette auf.

Im Rahmen der vorliegenden Erfindung werden Polyoxymethylencopolymere bevorzugt, insbesondere solche, die neben den wiederkehrenden $-CH_2O$- Einheiten noch bis zu 50 mol-%, weiter bevorzugt bis zu 40 mol-%, weiter bevorzugt bis zu 30 Mol-%, weiter bevorzugt bis zu 20 Mol-%, weiter bevorzugt von 0,01 bis 20 Mol-%, weiter bevorzugt von 0,1 bis 10 Mol-%, weiter bevorzugt von 0,2 bis 5 Mol-% und insbesondere bevorzugt von 0,5 bis 3 Mol-% an wiederkehrenden Einheiten

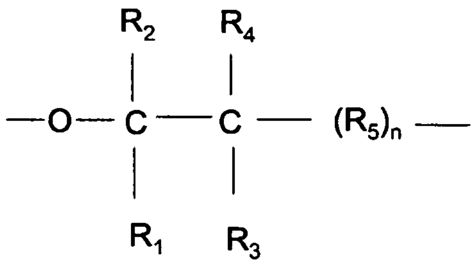

enthalten. Dabei können die Reste $R_1$, $R_2$, $R_3$, und $R_4$ gleich oder voneinander verschieden sein und unabhängig voneinander H, eine $C_1$-$C_4$-Alkylgruppe wie beispielsweise eine Methylgruppe, eine Ethylgruppe, eine Propylgruppe wie beispielsweise eine n-Propylgruppe oder eine iso-Propylgruppe, oder eine Butylgruppe wie beispielsweise eine n-Butylgruppe, iso-Butylgruppe oder tert-Butylgruppe, oder eine halogensubstituierte $C_1$-$C_4$-Alkylgruppe wie beispielsweise eine halogensubstituierte Methylgruppe, Ethylgruppe, Propylgruppe wie beispielsweise eine n-Propylgruppe oder eine iso-Propylgruppe, oder Butylgruppe wie beispielsweise eine n-Butylgruppe, iso-Butylgruppe oder tert-Butylgruppe sein, wobei im Falle, dass zwei oder mehr Halogensubstituenten vorhanden sind, diese gleich oder voneinander verschieden sein können, und wobei das Halogen beispielsweise F, Cl, Br oder I sein kann, und wobei $R_5$ eine Methylengruppe $-CH_2$-, eine Oxymethylengruppe $-CH_2O$-, eine $C_1$-$C_4$-Alkyl- oder $C_1$-$C_4$-Haloalkyl-substituierte Methylengruppe oder eine $C_1$-$C_4$-Alkyl- oder $C_1$-$C_4$-Haloalkyl-substituierte Oxymethylengruppe darstellen, wobei die gegebenenfalls als Substituenten an der Methylengruppe und/oder der Oxymethylengruppe vorhandenen $C_1$-$C_4$-Alkyl- oder $C_1$-$C_4$-Haloalkylgruppen beispielsweise eine Methylgruppe, eine Ethylgruppe, eine Propylgruppe wie beispielsweise eine n-Propylgruppe oder eine iso-Propylgruppe, oder eine Butylgruppe wie beispielsweise eine n-Butylgruppe, iso-Butylgruppe oder tert-Butylgruppe oder eine halogensubstituierte Methylgruppe, Ethylgruppe, Propylgruppe wie beispielsweise eine n-Propylgruppe oder eine iso-Propylgruppe, oder Butylgruppe wie beispielsweise eine n-Butylgruppe, iso-Butylgruppe oder tert-Butylgruppe sein können, wobei im Falle, dass zwei oder mehr Halogensubstituenten vorhanden sind, diese gleich oder voneinander verschieden sein können, und wobei das Halogen beispielsweise F, Cl, Br oder I sein kann. Dabei kann n einen Wert von 0 bis 3 wie 0, 1, 2 oder 3 haben.

Vorteilhafterweise können diese Gruppen durch Ringöffnung von zyklischen Ethern und zyklischen Formalen in die Copolymere eingeführt werden. Bevorzugte zyklische Ether sind solche der Formel

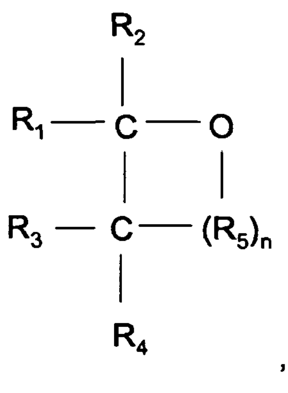

,

wobei die Reste $R_1$ bis $R_5$ und der Index n die oben genannte Bedeutung haben.

Beispiele für erfindungsgemäße zyklische Ether und zyklische Formale sind etwa Ethylenoxid, 1,2-Propylenoxid, 1,2-Butylenoxid, 1,3-Butylenoxid, 1,3-Dioxan, 1,3-Dioxolan und 1,3-Dioxepan, sowie lineare Oligo- oder Polyformale, wie beispielsweise Polydioxolan oder Polydioxepan, als Comonomere genannt. Bevorzugte Comonomere sind $C_2$ bis $C_4$-Comonomere.

Als Komponente (A1) ebenfalls geeignet sind Oxymethylen-ter-Polymerisate, die beispielsweise durch Umsetzung von Trioxan, einem der vorstehend beschriebenen zyklischen Ether oder zyklischen Formalen, mit einem dritten Monomeren, vorzugsweise einer bifunktionellen Verbindung der Formel

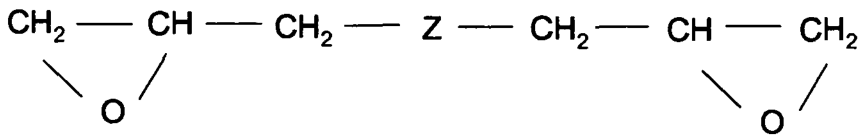

und/oder

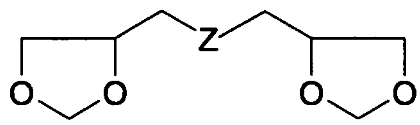
,

wobei Z eine chemische Bindung, -O- oder -OR- ist, hergestellt werden können. In diesem Zusammenhang bezeichnet R eine gegebenenfalls geeignet substituierte Alkylengruppe mit bevorzugt 1 bis 8 Kohlenstoffatomen wie beispielsweise eine Methylen-, Ethylen-, Propylen-, Butylen-, Pentylen-, Hexylen-, Heptylen- oder Octylengruppe oder eine gegebenenfalls geeignet substituierte Cycloalkylengruppe mit bevorzugt 3 bis 8 Kohlenstoffatomen wie beispielsweise eine Cyclopropylen-, Cyclobutylen-, Cyclopentylen-, Cyclohexylen-, Cycloheptylen- oder Cyclooctylengruppe.

Bevorzugte Monomere dieser Art sind beispielsweise Ethylendiglycid, Diglycidylether und Diether aus Glycidylen und Formaldehyd, Dioxan oder Trioxan im Molverhältnis 2 : 1 sowie Diether aus 2 Mol Glycidyl-Verbindung und 1 Mol eines aliphatischen Diols mit 2, 3, 4, 5, 6, 7 oder 8 C-Atomen, wie beispielsweise Diglycidylether von Ethylenglycol, 1,4-Butandiol, 1,3-Butandiol, Cyclobutan-1,3-diol, 1,2-Propandiol und Cyclohexan-1,4-diol.

Endgruppen-stabilisierte Polyoxymethylenpolymere, die an den Kettenenden C-C-Bindung aufweisen, sind erfindungsgemäß besonders bevorzugt.

Die Schmelztemperatur der erfindungsgemäß eingesetzten Komponente (A1) liegt bevorzugt in einem Bereich von 150 bis 200 °C. Ist die Komponente (A1) ein Polyoxymethylen-Homopolymer, so liegt die Schmelztemperatur weiter bevorzugt in einem Bereich von 170 bis 190 °C. Ist die Komponente (A1) ein Polyoxymethylen-Copolymer, so liegt die Schmelztemperatur weiter bevorzugt in einem Bereich von 160 bis 180 °C. Diese Schmelztemperaturen verstehen sich als über DSC gemäß ISO 3146 bestimmte Temperaturen.

Die Molmasse (Gewichtsmittel Mw; bestimmt über die untenstehend unter dem Punkt "Beispiele - Weitere Messverfahren - Molmassenbestimmung" beschriebene Methode) der Komponente (A1) liegt bevorzugt in einem Bereich von 11.500 bis 240.000 g/mol $\pm$ 10 %, die Molmasse (Zahlenmittel Mn) bevorzugt in einem Bereich von 18.000 bis 85.000. Weiter bevorzugt weist die Komponente (A1) als Polyoxymethylen-Homopolymer eine Molmasse (Mw) im Bereich von 11.500 bis 240.000 g/mol $\pm$ 10 % und eine Molmasse (Mn) im Bereich von 35.000 bis 85.000 auf. Als Polyoxymethylen-Copolymer weist die Komponente (A1) weiter bevorzugt eine Molmasse (Mw) im Bereich von 80.000 bis 220.000 g/mol $\pm$ 10 % und eine Molmasse (Mn) im Bereich von 18.000 bis 38.000 auf. Bevorzugt weist die Komponente (A1) ein Verhältnis Mw:Mn im Bereich von 0,14 bis 12,2 g/mol auf. Weiter bevorzugt weist die Komponente (A1) als Polyoxymethylen-Homopolymer ein Verhältnis Mw:Mn im Bereich von 0,14 bis 6,9 g/mol auf. Weiter bevorzugt weist die Komponente (A1) als Polyoxymethylen-Copolymer ein Verhältnis Mw:Mn im Bereich von 2,1 bis 12,2 g/mol auf.

Als Komponente (A1) geeignete Polymere weisen üblicherweise eine Dichte von 1,37 bis 1,45 g/cm$^3$, bestimmt gemäß ISO 1183, auf.

Demgemäß beschreibt die vorliegende Erfindung auch eine wie oben beschriebene Formmasse, wobei die Komponente (A1) einen Schmelzpunkt im Bereich von 150 bis 200 °C, bestimmt über DSC gemäß ISO 3146, aufweist.

Insbesondere umfasst daher die vorliegende Erfindung eine Formmasse, enthaltend 10 bis 99,999 Gew.-% mindestens eines Polyoxymethylens als Komponente (A1), wobei die Komponente (A1) einen Schmelzpunkt im Bereich von 150 bis 200 °C, bestimmt über DSC gemäß ISO 3146, aufweist, und von 0,001 bis 10 Gew.-%, bezogen auf das

Gewicht der in der Formmasse enthaltenen Komponente (A1), mindestens eines zeolithischen Materials mit einem Porendurchmesser im Bereich von 0,3 bis 0,5 nm, bestimmt gemäß DIN 66134 und DIN 66135, wobei die Partikel des zeolithischen Materials eine Größe im Bereich von 3 bis 7 μm, bestimmt gemäß ISO 13320, aufweisen.

Weiter bevorzugt umfasst die vorliegende Erfindung eine Formmasse, enthaltend 10 bis 99,95 Gew.-% mindestens eines Polyoxymethylens als Komponente (A1), wobei die Komponente (A1) einen Schmelzpunkt im Bereich von 150 bis 200 °C, bestimmt über DSC gemäß ISO 3146, aufweist, und von 0,05 bis 0,5 Gew.-%, bezogen auf das Gewicht der in der Formmasse enthaltenen Komponente (A1), mindestens eines zeolithischen Materials mit einem Porendurchmesser im Bereich von 0,37 bis 0,43 nm, bestimmt gemäß DIN 66134 und DIN 66135, wobei die Partikel des zeolithischen Materials eine Größe im Bereich von 4 bis 6 μm, bestimmt gemäß ISO 13320, aufweisen.

Weiter bevorzugt umfasst die vorliegende Erfindung daher eine Formmasse, enthaltend 10 bis 99,999 Gew.-% mindestens eines Polyoxymethylens als Komponente (A1), wobei die Komponente (A1) einen Schmelzpunkt im Bereich von 150 bis 200 °C, bestimmt über DSC gemäß ISO 3146, aufweist, und von 0,05 bis 0,5 Gew.-%, bezogen auf das Gewicht der in der Formmasse enthaltenen Komponente (A1), mindestens eines zeolithischen Materials mit einem Porendurchmesser im Bereich von 0,37 bis 0,43 nm, bestimmt gemäß DIN 66134 und DIN 66135, wobei die Partikel des zeolithischen Materials eine Größe im Bereich von 4 bis 6 μm, bestimmt gemäß ISO 13320, aufweisen, und wobei mindestens 90 % der Primärkristalle des zeolithischen Materials eine Größe im Bereich von 1,5 bis 3,0 μm, bestimmt über SEM, aufweisen und das molare Si:Al-Verhältnis, berechnet als molares Verhältnis $SiO_2$:$Al_2O_3$, im Bereich von 0,9:1 bis 5:1 liegt, und wobei die Formmasse kein weiteres zeolithisches Material enthält.

Weiter bevorzugt enthält die erfindungsgemäße Formmasse von 15 bis 99,999 Gew.-%, weiter bevorzugt von 20 bis 99,99 Gew.-%, weiter bevorzugt von 25 bis 99,9 Gew.-%, weiter bevorzugt von 30 bis 99 Gew.-%, weiter bevorzugt von 35 bis 98,5 Gew.-% und insbesondere bevorzugt von 40 bis 98 Gew.-% an Komponente (A1), jeweils bezogen auf das Gesamtgewicht der Formmasse.

Gemäß einer ebenfalls bevorzugten Ausführungsform enthält die erfindungsgemäße Formmasse von 15 bis 99,999 Gew.-%, weiter bevorzugt von 20 bis 99,99 Gew.-%, weiter bevorzugt von 25 bis 99,9 Gew.-%, weiter bevorzugt von 30 bis 99,7 Gew.-%, weiter bevorzugt von 35 bis 99,6 Gew.-% und insbesondere bevorzugt von 40 bis 99,5 Gew.-% an Komponente (A1), jeweils bezogen auf das Gesamtgewicht der Formmasse.

Die erfindungsgemäßen Polyoxymethylen-Formmassen zeichnen sich insbesondere beispielsweise durch eine geringe Formaldehyd-Emission aus.

Bevorzugt liegt die Formaldehyd-Emission der Formmassen bei höchstens 8 ppm, weiter bevorzugt bei höchstens 7 ppm, weiter bevorzugt bei höchstens 6 ppm und insbesondere bevorzugt bei höchstens 5 ppm, jeweils bestimmt über die Vorschrift VDA 275. Beispielsweise weisen etwa die erfindungsgemäßen Formmassen Formaldehyd-Emissionswerte von 2, 3, 4, oder 5 ppm auf. Ebenso können die Formmassen Formaldehyd-Emissionswerte von 6, 7 oder 8 ppm aufweisen.

Demgemäß betrifft die vorliegende Erfindung auch eine wie oben beschriebene Formmasse, die eine Formaldehyd-Emission von höchstens 8 ppm, bevorzugt von höchstens 7 ppm, bestimmt über VDA 275, aufweist.

Die Norm VDA 275, auf die im Rahmen der vorliegenden Erfindung Bezug genommen wird, ist die Norm in der Version vom Juli 1994. Zur Probenvorbereitung werden mittels einer Spritzgussmaschine (Krauss Maffei KM 250 (56)) aus Polymergranulat Platten hergestellt. Die Parameter beim Spritzguss werden folgendermaßen gewählt: Schneckendurchmesser 50 mm, Düsenart: Nadelverschlussdüse, Düsendurchmesser 4 mm, Plattenwerkzeug mit 2 Kavitäten zu je 110* 110* 2 mm wie in Figur 8 untenstehend abgebildet, Werkzeugbezeichnung P10/2,0 mm, Massetemperatur 200 °C, Werkzeugoberflächentemperatur 90 °C, Schneckendrehzahl 100 l/min, Schneckenvorlaufgeschwindigkeit 50 mm/s, Staudruck 50 bar, Zykluszeit 50 s, davon Nachdruckzeit 25 s und Kühlzeit 16 s. Die Zykluszeit setzt sich zusammen aus der Einspeisezeit (1 s), der Nachdruckzeit (25 s), der Kühlzeit (16 s) und der Dosierzeit (5 s). Aus den spritzgegossenen Platten werden nach dem Spritzgießen Platten mit den Abmessungen 40 x 100 $mm^2$ ausgearbeitet, die an allen Kanten einen frischen Sägeschnitt aufweisen. Zusätzlich wird ein Loch mit dem Durchmesser von 2,5-3 mm mittig im Bereich des oberen Randes gebohrt. Diese ausgearbeiteten Plättchen werden in einem Klimaraum für 24 h bei 23 °C und 50 % relativer Luftfeuchtigkeit gelagert, bevor die Emissionsmessung durchgeführt wird. Bei der Emissionsmessung werden die Probenplatten in einer verschließbaren 1L-Polyethylenflasche fixiert und 50 ml VE-Wasser zugegeben. Die Probe wird dann in der verschlossenen Flasche für 3 Stunden bei 60°C verwahrt. Anschließend wird die Flasche über 60 min bei Raumtemperatur abgekühlt, und der Formaldehydgehalt wird in dem destillierten Wasser photometrisch nach dem Acetyl-acetonat-Verfahren bestimmt. Die Formaldehydemission wird dann in ppm als Formaldehydgehalt (im VE-Wasser) pro kg der trockenen Probe (mg (Formaldehyd)/ kg Probe = ppm) ausgedrückt.

Überraschend wurde im Rahmen der vorliegenden Erfindung gefunden, dass diese geringe Formaldehyd-Emission der Polyoxymethylen-Formmassen durch den Zusatz des wie oben beschriebenen zeolithischen Materials zur Komponenten (A1) erreicht werden kann, während der Stand der Technik auf dem Gebiet der Polyoxymethylene, wie oben beschrieben, Zeolithe anderer Art lediglich und ganz spezifisch als Hitzestabilisatoren offenbart. Im Rahmen dieses Standes der Technik werden, falls geringe Formaldehyd-Emissionswerte erreicht werden sollen, stets Substanzen zugegeben, die auf chemischem Weg mit Formaldehyd reagieren und diesen so aus der Formmasse entfernen. Wie bereits

oben geschildert, kann der Einsatz solcher Formaldehyd-Fänger jedoch zu Unwägbarkeiten und Nachteilen hinsichtlich der Eigenschaften der Formmassen wie beispielsweise der mechanischen und/oder der thermischen Stabilität oder zu Verfärbungen nach Bewitterung oder Fogging führen.

Die Formmassen gemäß der vorliegenden Erfindung zeichnen sich daher unter anderem dadurch aus, dass der Zusatz des wie oben beschriebenen zeolithischen Materials unter Verzicht auf die gemäß des Standes der Technik üblichen Formaldehyd-Fänger zu einer geringen Formaldehyd-Emission führt.

Als Verbindungen des Standes der Technik, die auf chemischem Weg mit Formaldehyd reagieren und diesen so aus Polyoxymethylen-Formmassen entfernen, sind generell Verbindungen mit mindestens einer primären und/oder sekundären Aminogruppe, insbesondere organische Verbindungen mit mindestens einer primären und/oder sekundären Aminogruppe und vor allem organische Verbindungen mit einer monodispersen Molmassenverteilung mit mindestens einer primären und/oder sekundären Aminogruppe zu nennen.

Spezifische Beispiele solcher Verbindungen aus dem Stand der Technik sind hierbei etwa:

(aa) aminsubstituierte Triazin-Verbindungen wie etwa aminsubstituierte Triazin-Verbindungen, die mindestens eine aromatische Gruppe enthalten wie etwa Verbindungen der folgenden Struktur

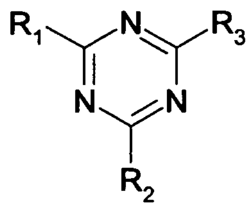

wobei die Reste $R_1$, $R_2$ und $R_3$ dieser Struktur gleich oder unterschiedlich sind und jeweils Wasserstoff, Halogenatome, eine Hydroxylgruppe, eine Alkylgruppe, eine Alkoxygruppe, eine Arylgruppe, eine Arylalkyloxygruppe oder eine substituierte oder unsubstituierte Amingruppe mit der Maßgabe bedeuten, dass mindestens einer der Reste $R_1$, $R_2$ und $R_3$ eine substituierte oder unsubstituierte Amingruppe ist und mindestens ein Rest $R_2$, $R_1$ und $R_3$ aus einer aromatischen $C_5$-$C_{20}$-Gruppe, welche gegebenenfalls substituiert sein kann, aufgebaut ist. Dabei ist das Halogenatom beispielsweise Chlor oder Brom, vorzugsweise Chlor. Beispiele für die Alkylgruppe sind solche mit 1 bis 6 Kohlenstoffatomen, vorzugsweise 1 bis 4 Kohlenstoffatomen. Beispiele für Alkoxygruppen sind solche mit 1 bis 6 Kohlenstoffatomen, vorzugsweise 1 bis 4 Kohlenstoffatomen. Die Phenylgruppe, Naphthylgruppe und Fluorenylgruppe werden als Arylgruppe bevorzugt, und Phenylalkyloxygruppen, insbesondere Benzyloxy- oder Phenylethyloxygruppen, werden als Arylalkyloxygruppen bevorzugt. Beispiele für Substituenten an der substituierten Aminogruppe umfassen niedere Alklygruppen mit 1 bis 6 Kohlenstoffatomen, wie Methyl-, Ethyl-, Butyl- oder Hexylgruppen, Phenylgruppen, niedere Alkylengruppen mit 3 bis 6 Kohlenstoffatomen, wie Allyl- oder Hexenylgruppen, Hydroxyalkylgruppen mit 1 oder 2 Kohlenstoffatomen, wie Hydroxymethyl- oder Hydroxyethylgruppen, und Cyanalkylgruppen mit 3 bis 6 Kohlenstoffatomen, wie Cyanethyl- oder Cyanbutylgruppen. Beispiele für aminsubstituierte und aromatische substituierte Triazine umfassen 2,4-Diamino-6(o,m,p)chlorphenyltrazin, 2-Amino-4-chlor-6-phenyltriazin, 2-Amino-4,6-diphenyltriazin, 2,4-Diamino-6-naphthyltriazin, 2,4-Diamino-6-fluorenyltriazin, 2,4-Diamino-6(o,m,p)alkylphenyltriazine, wobei der Methylrest als Substituent bevorzugt ist, 2,4-Diamino-6(o,m,p)methoxyphenyltriazin und 2,4-Diamino-6(o,m,p)carboxylphenyltriazine, N-Phenylmelamin, N,N'-Diphenylmelamin, wobei Benzoguanamin, d.h. 2,4-Diamino-6-phenyl-sym.-triazin, 2,4-Diamino-6-benzyloxy-sym.-triazin besonders bevorzugt sind. Besonders bevorzugte Verbindungen dieser Art sind gemäß Stand der Technik solche, die mindestens zwei Reste $R_1$, $R_2$ oder $R_3$ enthalten, die aus (un)substituierten Aminogruppen aufgebaut sind und/oder in denen der aromatische Rest $R_1$, $R_2$ oder $R_3$ aus mindestens einem Phenylring besteht. Ganz besonders bevorzugt ist Benzoguanamin.

(bb) Spezifische Stickstoff enthaltende polymere Verbindungen: Polyethylenimine, Polyvinylamine, Polyallylamine, Polyaminomethylstyrol, Polyaminoethylstyrol, Aminharze, die über Reaktion mit Formaldehyd gebildet werden (beispielsweise Guanaminharz, Melaminharz, Guanidinharz, Benuoguanamin-Melaminharz, aromatische Polyamin-Melaminharze, Harnstoff-Melaminharz, Harnstoff-Benzoguanaminharz), Hydrazid enthaltende Verbindungen, Polyaminothioether, Polyharnstoffe, Poly-5-methylenhydantoin, Polypyrrole.

(cc) Spiroverbindungen, die mindestens einen, beispielsweise 1 bis 4 Triazinringe, bevorzugt 1 bis 2 und insbesondere 2 Triazinringe enthalten. Besonders bevorzugt sind hierbei Verbindungen, bei denen zwei Triazinringe über

eine Spiroverbindung miteinander verknüpft sind. Der Triazinring umfasst 1,2,3-Triazine, 1,2,4-Triazine und 1,3,5-Triazine, wobei 1,3,5-Triazine bevorzugt sind. Darüber hinaus kann der Triazinring Substituenten wie beispielsweise eine Alkylgruppe, etwa eine $C_1$-$C_4$-Alkylgruppe, eine Arylgruppe, eine Aminogruppe oder eine substituierte Aminogruppe enthalten. Als Triazinring ist ein Triazinring mit einer Aminogruppe oder einer substituierten Aminogruppe, insbesondere der Guanaminring, bevorzugt. Der Spiro-Teil kann ausschließlich aus Kohlenstoffatomen bestehen. Bevorzugt sind Spiroteile, die ein oder mehrere Heteroatome wie insbesondere Sauerstoff enthalten. Solche Verbindungen sind etwa

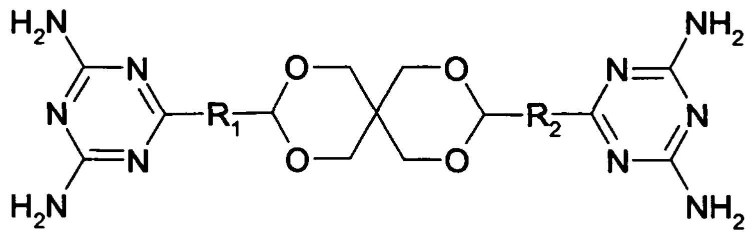

In obiger Formel umfassen die Alkylengruppen $R_1$ und $R_2$ eine unverzweigte oder verzweigte $C_{1-10}$-Alkylengruppe wie beispielsweise Methylen, Ethylen, Propylen, Isopropylen, Butylen und Isobutylen. Arylengruppen $R_1$ und $R_2$ umfassen $C_{6-10}$-Arylengruppen wie Phenylen oder Naphthylen. Aralkylengruppen $R_1$ und $R_2$ umfassen Gruppen, bei denen eine Alkylengruppe an eine Arylengruppe gebunden ist. Bevorzugt Gruppen $R_1$ und $R_2$ sind Alkylengruppen (beispielsweise $C_{1-6}$-Alkylengruppen), insbesondere $C_{1-3}$-Alkyfengruppen wie Ethylen und andere. Weiterhin können die Gruppen $R_1$ und $R_2$ weitere Substituenten wie beispielsweise $C_{1-6}$-Alkylgruppen wie etwa Methyl, ein Phenylgruppe, Aminogruppe, eine N-substituierte Aminogruppe aufweisen. Spezifische Beispiele für solche Spiroverbindungen sind etwa 3,9-bis[(3,5-Diamino-2,4,6-triazaphenyl)$C_{1-6}$alkyl]-2,4,8,10-tetraoxaspiro[5.5]undecan wie beispielsweise 3,9-bis[2-(3,5-Diamino-2,4,6-triazaphenyl)ethyl]-2,4,8,10-tetraoxaspiro[5.5]undecan (CTU Guanamin), 3,9-bis[1-(3,5-Diamino-2,4,6-triazaphenyl)methyl]-2,4,8,10-tetraoxaspiro[5.5]un-decan (CMTU Guanamin), 3,9-bis[2-(3,5-Diamino-2,4,6-triazaphenyl)-2-methylethyl]2,4,8,10-tetraoxaspiro[5.5]undecan, 3,9-bis[1-(3,5-Diamino-2,4,6-triazaphenyl)-1,1-dimethylmethyl]-2,4,8,10-tetraoxaspiro[5.5]undecane, 3,9-bis[3-(3,5-diamino-2,4,6-triazaphenyl)-1,1-dimethylpropyl]-2,4,8,10-tetraoxaspiro[5.5]-undecane und 3,9-bis[3-(3,5-Diamino-2,4,6-triazaphenyl)-2,2-dimethylpropyl]-2,4,8,10-tetraoxaspiro[5.5]undecan. Hinsichtlich der Spiroverbindungen sind 3,9-bis[(3,5-Diamino-2,4,6-triazaphenyl) gerad- oder verzweigtkettiges $C_{1-5}$-Alkyl]-2,4,8,10-tetraoxaspiro[5.5]undecan, beispielsweise CTU Guanamin, CMTU Guanamin, 3,9-bis[3-(3,5-Diamino-2,4,6-triazaphenyl)-1,1-d imethyl propyl]-2,4,8,10-tetraoxaspiro[5.5]undecan bevorzugt. Insbesondere bevorzugt ist CTU Guan-amin.

(dd) Aminosäuren wie α-, β-, γ- oder δ-Aminosäuren. α-Aminosäuren sind etwa Monoaminomonocarbonsäuren wie beispielsweise Glycin, Alanin, Valin, Norvalin, Leucin, Norleucin, Isoleucin, Phenylalanin, Tyrosin, Diiodotyrosin, Surinamin, Threonin, Serin, Prolin, Hydroxyprolin, Tryptophan, Methionin, Cystin, Cystein, Citrullin, α-Aminobutansäure, Hexahydropicolinsäure, Teanin, Monoaminodicarbonsäuren wie beispielsweise Aspartsäure, Glutamsäure, Asparagin, Glutamin, Hexahydrodipicolinsäure, Hexahydrochinolinsäure, Diaminomonocarbonsäuren wie beispielsweise Lysin, Hydroxylysin, Arginin, Histidin. β-, γ- oder δ-Aminosäuren sind etwa β-Alanin, β-Aminobutansäure, Hexahydrochinomeronsäure, γ-Aminobutansäure, δ-Amino-n-Valeriansäure. Die Aminosäuren können in D-, L- oder DL-Form vorliegen. Die Aminosäuren umfassen auch Derivate, bei denen eine Carboxylgruppe als Metallsalz wie etwa als Alkalimetallsalz oder Erdalkalimetallsalz, als Amid, Hydrazid oder Ester wie beispielsweise Methyl- oder Ethylester vorliegt. Weiterhin können die Aminosäuren auch geträgert auf einem porösen Material vorliegen wie etwa auf Silikagel, Aluminiumoxid, Titanoxid, Zirkonoxid, Sepiolit, Smektit, Palygorskit, Imogolit, Zeolith, Aktivkohle. Weiterhin können die Aminosäuren eine Inklusion oder ein Clathrat mit einem Wirt wie etwa mit α-, β-, γ- oder δ-Cyclodextrin bilden.

(ee) Verbindungen mit einer oder zwei Hydrazid-Gruppen, insbesondere mit zwei Hydrazidgruppen, wie polymere Dihydrazid-Verbindungen wie Polyacrylsäurehydrazid, oder Oxalsäuredihydrazid, Malonsäuredihydrazid, Adipinsäuredihydrazid, Succinsäuredihydrazid, Glutarsäuredihydrazid, Pimelinsäuredihydrazid, Suberinsäuredihydrazid, Azelainsäuredihydrazid, Sebazinsäuredihydrazid, Terephthalsäuredihydrazid, I-sophthalsäuredihydrazid.

(ff) Poly-β-alanine, umfassend die Struktureinheit

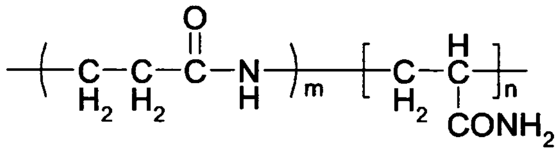

Daher betrifft die vorliegende Erfindung auch eine Formmasse, enthaltend 10 bis 99,999 Gew.-% mindestens eines Polyoxymethylens als Komponente (A1) und von 0,001 bis 10 Gew.-%, bezogen auf das Gewicht der in der Formmasse enthaltenen Komponente (A1), mindestens eines zeolithischen Materials mit einem Porendurchmesser im Bereich von 0,3 bis 0,5 nm, bestimmt gemäß DIN 66134 und DIN 66135, wobei die Partikel des zeolithischen Materials eine Größe im Bereich von 3 bis 7 μm, bestimmt gemäß ISO 13320, aufweisen, wobei die Formmasse keine der Verbindungen gemäß (aa) und keine der Verbindungen gemäß (bb) und keine der Verbindungen gemäß (cc) und keine der Verbindungen gemäß (dd) und keine der Verbindungen gemäß (ee) und keine der Verbindungen gemäß (ff) enthält, wobei weiter bevorzugt diese Formmasse eine Formaldehyd-Emission von höchstens 8 ppm, weiter bevorzugt von höchstens 7 ppm, weiter bevorzugt von höchstens 6 ppm und insbesondere bevorzugt von höchstens 5 ppm wie beispielsweise von 2, 3, 4 oder 5 ppm, oder beispielsweise von 6, 7 oder 8 ppm, jeweils bestimmt gemäß VDA 275, aufweist. Hinsichtlich weiter bevorzugter Spezifikationen des zeolithischen Materials wie beispielsweise Gehalt an zeolithischem Material bezogen auf das Gewicht des Polyoxymethylens und/oder der Größe der Primärkristalle und/oder des molaren Verhältnisses Si:Al und/oder des Gehaltes an zeolithischem Material in der H-Form und die unterschiedlichen Kombinationen dieser Parameter sei auf obige Ausführungen verwiesen.

Gemäß einer besonders bevorzugten Ausführungsform betrifft die vorliegende Erfindung auch eine Formmasse, enthaltend 10 bis 99,999 Gew.-% mindestens eines Polyoxymethylens als Komponente (A1) und von 0,001 bis 10 Gew.-%, bezogen auf das Gewicht der in der Formmasse enthaltenen Komponente (A1), mindestens eines zeolithischen Materials mit einem Porendurchmesser im Bereich von 0,3 bis 0,5 nm, bestimmt gemäß DIN 66134 und DIN 66135, wobei die Partikel des zeolithischen Materials eine Größe im Bereich von 3 bis 7 μm, bestimmt gemäß ISO 13320, aufweisen, wobei die Formmasse keine der Verbindungen gemäß (cc) enthält, wobei weiter bevorzugt diese Formmasse eine Formaldehyd-Emission von höchstens 8 ppm, weiter bevorzugt von höchstens 7 ppm, weiter bevorzugt von höchstens 6 ppm und insbesondere bevorzugt von höchstens 5 ppm wie beispielsweise von 2, 3, 4 oder 5 ppm, oder beispielsweise von 6, 7 oder 8 ppm, jeweils bestimmt gemäß VDA 275, aufweist. Hinsichtlich weiter bevorzugter Spezifikationen des zeolithischen Materials wie beispielsweise Gehalt an zeolithischem Material bezogen auf das Gewicht des Polyoxymethylens und/oder der Größe der Primärkristalle und/oder des molaren Verhältnisses Si:Al und/oder des Gehaltes an zeolithischem Material in der H-Form und die unterschiedlichen Kombinationen dieser Parameter sei auf obige Ausführungen verwiesen.

Demgemäß betrifft die vorliegende Erfindung auch eine wie oben beschriebene Formmasse, wobei die Formmasse keine Spiro-Verbindung, umfassend mindestens einen Triazi n-ring, enthält.

Weiter betrifft die vorliegende Erfindung daher auch eine wie oben beschriebene Formmasse, wobei die Formmasse keine organische Verbindung mit einer monodispersen Molmassenverteilung, umfassend mindestens eine primäre Aminogruppe und/oder mindestens eine sekundäre Aminogruppe, bevorzugt mindestens eine primäre Aminogruppe, enthält.

Weiter betrifft die vorliegende Erfindung auch eine wie oben beschriebene Formmasse, wobei die Formmasse, abgesehen von mindestens einem Polyamid, keine organische Verbindung mit einer polydispersen Molmassenverteilung, umfassend mindestens eine Aminogruppe, enthält.

Wie bereits ausführlich diskutiert, wurde im Rahmen der vorliegenden Erfindung überraschend gefunden, dass die im Stand der Technik als Stabilisatoren eingesetzten und beschriebenen Zeolithe als Formaldehydfänger verwendet werden können. Daher kann in den erfindungsgemäßen Formmassen auf den Zusatz von weiteren Formaldehydfängern verzichtet werden.

Daher betrifft die vorliegende Erfindung gemäß eines weiteres Aspektes die Verwendung eines zeolithischen Materials als Bestandteil einer mindestens ein Polyoxymethylen enthaltenden Formmasse zur Verringerung der Formaldehyd-Emission der Formmasse. Ebenso betrifft die vorliegende Erfindung damit auch ein Verfahren zur Verringerung der Formaldehyd-Emission einer mindestens ein Polyoxymethylen enthaltenden Formmasse durch Verwendung mindestens eines zeolithischen Materials als Bestandteil der Formmasse.

Hinsichtlich dieser Verwendung sind grundsätzlich sämtliche Gehalte der Formmasse an Polyoxymethylen und an zeolithischem Material umfasst. Ebenso gelten hinsichtlich dieser erfinderischen Verwendung grundsätzlich keine Einschränkungen in Bezug auf die Art und die Spezifikationen des zeolithischen Materials, solange gewährleistet ist, dass zumindest ein Teil des zeolithischen Materials in der Lage ist, Formaldehyd adsorptiv zu binden.

Geeignete zeolithische Materialien für die erfindungsgemäße Verwendung sind beispielsweise Zeolithe der folgenden Zusammensetzungen a) und b):

a) $Q_{X+Y}Al_XM_YSiO_4 \cdot z\ H_2O$
wobei

$Q = Na^+, K^+, Li^+, Cs^+, NH_4^+$ oder eine Mischung aus zwei oder mehr dieser Ionen;
$M = Fe^{3+}, B^{3+}, Ga^{3+}, Ti^{4+}, V^{4+}, Zn^{2+}$ oder $Ge^{4+}$ oder eine Mischung aus zwei oder mehr dieser Ionen;
X = 0 - 1,0 und
Y = 0 - 0,05 bedeuten

oder

b) $Q_XAl_XM_YPO_4 \cdot z\ H_2O$
wobei

$Q = Na^+, K^+, Li^+, Cs^+$ oder $NH_4^+$ oder eine Mischung aus zwei oder mehr dieser Ionen;
$M = Fe^{3+}, B^{3+}, Li^+, Be^{2+}, Mg^{2+}, Ti^{4+}, V^{4+}, Zn^{2+}, Mn^{2+}, Co^{2+}$ oder $Si^{4+}$ oder eine Mischung aus zwei oder mehr dieser Ionen;
X = 0,9 - 1,0 und
Y = 0 - 0,10 bedeuten.

In beiden Strukturen gemäß a) und b) steht z für die Anzahl der Kristallwassermolekülen, wobei z = 0 sein kann und wobei X und Y nicht gleichzeitig 0 sein können. X und Y sind hierbei so gewählt, dass eine ausgeglichene Elektrovalenz erhalten wird.

Zeolithische Materialien im Rahmen der erfindungsgemäßen Verwendung sind beispielsweise zur Adsorption von Formaldehyd geeignete Zeolithe vom Typ A, Typ X, Typ Y, Typ T, Sodalite, Mordenite, Analzite, Clinoptilolite, Chabazite und/oder Erionite. Beispiele für Strukturtypen sind etwa Zeolithe mit röntgenographischer Zuordnung zu den Typen ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AWO, AWW, BCT, BEA, BEC, BIK, BOG, BPH, BRE, CAN, CAS, CDO, CFI, CGF, CGS, CHA, CHI, CLO, CON, CZP, DAC, DDR, DFO, DFT, DOH, DON, EAB, EDI, EMT, EPI, ERI, ESV, ETR, EUO, FAU, FER, FRA, GIS, GIU, GME, GON, GOO, HEU, IFR, ISV, ITE, ITH, ITW, IWR, IWW, JBW, KFI, LAU, LEV, LIO, LOS, LOV, LTA, LTL, LTN, MAR, MAZ, MEI, MEL, MEP, MER, MFI, MFS, MON, MOR, MSO, MTF, MTN, MTT, MTW, MWW, NAB, NAT, NES, NON, NPO, OBW, OFF, OSI, OSO, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN SFO, SGT, SOD, SSY, STF, STI, STT, TER, THO, TON, TSC, UEI, UFI, UOZ, USI, UTL, VET, VFI, VNI, VSV, WEI, WEN, YNU, YUG oder ZON, wie sie oben beschrieben sind.

Von diesen Strukturen sind für die erfinderische Verwendung insbesondere Strukturen der röntgenographischen Zuordnung zu den Typen BEA, FER, FAU, LTA, MEL, MFI oder MOR bevorzugt. Ebenso sind Mischstrukturen aus zwei oder mehr dieser Typen zu nennen wie beispielsweise ein zeolithisches Material mit MEUMFI-Mischstruktur. Unter anderem besonders bevorzugt ist ein zeolithisches Material vom LTA-Typ.

Für die erfinderische Verwendung sind zeolithische Materialien bevorzugt, die einen Porendurchmesser im Bereich von 0,3 bis 0,5 nm, bevorzugt in einem Bereich von 0,31 bis 0,49 nm, weiter bevorzugt in einem Bereich von 0,32 bis 0,48 nm, weiter bevorzugt in einem Bereich von 0,33 bis 0,47 nm, weiter bevorzugt in einem Bereich von 0,34 bis 0,46 nm und besonders bevorzugt in einem Bereich von 0,35 bis 0,45 nm aufweisen. Insbesondere bevorzugte Porendurchmesser liegen beispielsweise bei 0,36 nm oder 0,37 nm oder 0,38 nm oder 0,39 nm oder 0,40 nm oder 0,41 nm oder 0,42 nm oder 0,43 nm oder 0,44, jeweils bestimmt gemäß DIN 66134 und DIN 66135.

Daher betrifft die vorliegende Erfindung auch die wie oben beschriebene Verwendung, wobei das zeolithische Material einen Porendurchmesser im Bereich von 0,3 bis 0,5 nm, bestimmt gemäß DIN 66134 und DIN 66135, aufweist. Ebenso betrifft die vorliegende Erfindung damit auch ein wie oben beschriebenes Verfahren zur Verringerung der Formaldehyd-Emission einer mindestens ein Polyoxymethylen enthaltenden Formmasse durch Verwendung mindestens eines zeolithischen Materials als Bestandteil der Formmasse, wobei das zeolithische Material einen Porendurchmesser im Bereich von 0,3 bis 0,5 nm, bestimmt gemäß DIN 66134 und DIN 66135, aufweist.

Für die erfinderische Verwendung sind weiter zeolithische Materialien bevorzugt, die eine Partikelgröße, bestimmt über ISO 13320, in einem Bereich von 3,0 bis 7,0 $\mu$m, weiter bevorzugt in einem Bereich von 3,1 bis 6,9 $\mu$m, weiter bevorzugt in einem Bereich von 3,2 bis 6,8 $\mu$m, weiter bevorzugt in einem Bereich von 3,3 bis 6,7 $\mu$m, weiter bevorzugt in einem Bereich von 3,4 bis 6,6 $\mu$m, weiter bevorzugt in einem Bereich von 3,5 bis 6,5 $\mu$m, weiter bevorzugt in einem Bereich von 3,6 bis 6,4 $\mu$m, weiter bevorzugt in einem Bereich von 3,7 bis 6,3 $\mu$m, weiter bevorzugt in einem Bereich von 3,8 bis 6,2 $\mu$m, weiter bevorzugt in einem Bereich von 3,9 bis 6,1 $\mu$m, und insbesondere bevorzugt in einem Bereich von 4,0 bis 6,0 $\mu$m aufweisen.

Daher betrifft die vorliegende Erfindung auch die wie oben beschriebene Verwendung, wobei die Partikel des

zeolithischen Materials eine Größe im Bereich von 3 bis 7 μm, bestimmt gemäß ISO 13320, aufweisen. Ebenso betrifft die vorliegende Erfindung damit auch ein wie oben beschriebenes Verfahren zur Verringerung der Formaldehyd-Emission einer mindestens ein Polyoxymethylen enthaltenden Formmasse durch Verwendung mindestens eines zeolithischen Materials als Bestandteil der Formmasse, wobei das zeolithische Material eine Partikelgröße im Bereich von 3 bis 7 μm, bestimmt über ISO 13320, aufweist.

Bevorzugt wird im Rahmen der erfinderischen Verwendung ein Wert der Formaldehyd-Emission von Polyoxymethylen enthaltenden Formmassen von höchstens 8 ppm, weiter bevorzugt von höchstens 7 ppm, weiter bevorzugt von höchstens 6 ppm, weiter bevorzugt von höchstens 5 ppm wie beispielsweise von 2 ppm, 3 ppm, 4 ppm oder 5 ppm erreicht, oder beispielsweise 6, 7 oder 8 ppm, jeweils bestimmt über VDA 275.

Daher betrifft die vorliegende Erfindung auch die wie oben beschriebene Verwendung, wobei die Formaldehyd-Emission der Formmasse auf einen Wert von höchstens 8 ppm, bevorzugt höchstens 7 ppm, bestimmt über bestimmt über VDA 275, verringert wird. Ebenso betrifft die vorliegende Erfindung damit auch ein wie oben beschriebenes Verfahren zur Verringerung der Formaldehyd-Emission einer mindestens ein Polyoxymethylen enthaltenden Formmasse durch Verwendung mindestens eines zeolithischen Materials als Bestandteil der Formmasse, wobei die Formaldehyd-Emission der Formmasse auf einen Wert von höchstens 8 ppm, weiter bevorzugt von höchstens 7 ppm, bestimmt über bestimmt über VDA 275, verringert wird.

Besonders bevorzugt ist die erfinderische Verwendung im Hinblick auf Polyoxymethylen enthaltende Formmassen, die keine Verbindung gemäß (aa) und keine Verbindung gemäß (bb) und keine Verbindung gemäß (cc) und keine Verbindung gemäß (dd) und keine Verbindung gemäß (ee) und keine Verbindung gemäß (ff), insbesondere keine Verbindung gemäß (cc), weiter bevorzugt keine Spiro-Verbindung, umfassend mindestens einen Triazinring, und/oder keine organische Verbindung mit einer monodispersen Molmassenverteilung, umfassend mindestens eine primäre Aminogruppe und/oder mindestens eine sekundäre Aminogruppe, bevorzugt mindestens eine primäre Aminogruppe, und/oder, abgesehen von mindestens einem Polyamid, keine organische Verbindung mit einer polydispersen Molmassenverteilung, umfassend mindestens eine Aminogruppe, enthält.

Weiter bevorzugt ist hierbei die erfinderische Verwendung im Hinblick auf Polyoxymethylen enthaltende Formmassen, wobei die Formmassen das zeolithische Material in einer Menge im Bereich von 0,002 bis 9 Gew.-%, weiter bevorzugt im Bereich von 0,003 bis 8 Gew.-%, weiter bevorzugt im Bereich von 0,004 bis 7 Gew.-%, weiter bevorzugt im Bereich von 0,005 bis 6 Gew.-%, weiter bevorzugt im Bereich von 0,006 bis 5 Gew.-%, weiter bevorzugt im Bereich von 0,007 bis 4 Gew.-%, weiter bevorzugt im Bereich von 0,008 bis 3 Gew.-%, weiter bevorzugt im Bereich von 0,009 bis 2 Gew.%, weiter bevorzugt im Bereich von 0,01 bis 1 Gew.-%, weiter bevorzugt im Bereich von 0,02 bis 0,9 Gew.-%, weiter bevorzugt im Bereich von 0,03 bis 0,8 Gew.-%, weiter bevorzugt im Bereich von 0,04 bis 0,7 Gew.-%, weiter bevorzugt im Bereich von 0,05 bis 0,6 Gew.-% und insbesondere bevorzugt im Bereich von 0,05 bis 0,50 Gew.-%, jeweils bezogen auf die in den Formmassen enthaltene Gesamtmenge an Polyoxymethylen, enthalten. Dabei enthalten die Formmassen das Polyoxymethylen als Komponente (A1) bevorzugt von 10 bis 99,999 Gew.-%, weiter bevorzugt von 15 bis 99,999 Gew.-%, weiter bevorzugt von 20 bis 99,99 Gew.-%, weiter bevorzugt von 25 bis 99,9 Gew.-%, weiter bevorzugt von 30 bis 99 Gew.-%, weiter bevorzugt von 35 bis 98,5 Gew.-% und insbesondere bevorzugt von 40 bis 98 Gew.-% an Komponente (A1), jeweils bezogen auf das Gesamtgewicht der Formmasse. Ebenso können die Formmassen das Polyoxymethylen als Komponente (A1) von 15 bis 99,999 Gew.-%, weiter bevorzugt von 20 bis 99,99 Gew.%, weiter bevorzugt von 25 bis 99,9 Gew.-%, weiter bevorzugt von 30 bis 99,7 Gew.-%, weiter bevorzugt von 35 bis 99,6 Gew.-% und insbesondere bevorzugt von 40 bis 99,5 Gew.-% enthalten, jeweils bezogen auf das Gesamtgewicht der Formmasse.

Die Formmassen der vorliegenden Erfindung können zusätzlich zu dem oben beschriebenen zeolithischen Material und dem mindestens einem Polyoxymethylen von bis zu 89,99 Gew.-%, bevorzugt von 0,5 bis 89,99 Gew.-%, weiter bevorzugt von 1 bis zu 89,99 Gew.-%, weiter bevorzugt von 1 bis 80 Gew.-%, weiter bevorzugt von 1 bis 70 Gew.-%, weiter bevorzugt von 1 bis 60 Gew.-%, weiter bevorzugt von 1 bis 50 Gew.-% und insbesondere bevorzugt von 1 bis 40 Gew.-%, bezogen auf das Gewicht der Formmasse, weitere Komponenten enthalten.

Derartige Zusatzstoffe können beispielsweise Stabilisatoren, Füllstoffe, Farbstoffe und andere, üblicherweise in Polyoxymethylen-Formmassen verwendete Stoffe sein.

Gemäß einer bevorzugten Ausführungsform der vorliegenden Erfindung enthalten die Formmassen zusätzlich als Komponente (D1) mindestens einen Stabilisator. Stabilisatoren im Sinne der vorliegenden Erfindung sind Verbindungen, die eine Oxidation beziehungsweise eine Photooxidation des mindestens einen Polyoxymethylens und/oder mindestens einer weiteren, gegenüber Oxidation beziehungsweise Photooxidation empfindlichen weiteren Komponente, verhindern oder reduzieren können.

Im Rahmen der vorliegenden Erfindung besonders bevorzugt eingesetzte Stabilisatoren sind beispielsweise sterisch gehinderte Phenole. Als sterisch gehinderte Phenole eignen sich hierbei grundsätzlich alle Verbindungen mit phenolischer Struktur, die am phenolischen Ring mindestens eine sterisch anspruchsvolle Gruppe aufweisen.

Im Rahmen dieser Verbindungsklasse sind unter anderem monozyklische und polyzyklische gehinderte Phenole zu nennen. Dabei sind bei den polyzyklischen gehinderten Phenolen die entsprechenden Ringe beispielsweise

über eine Kohlenwasserstoffgruppe oder über eine ein Schwefelatom enthaltende Kohlenwasserstoffgruppe verbunden.

Vorzugsweise werden im Rahmen der vorliegenden Erfindung beispielsweise Verbindungen der Struktur

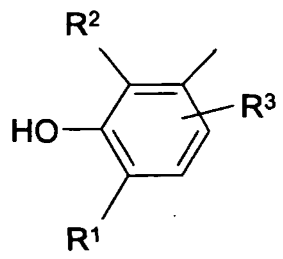

eingesetzt. In dieser Struktur sind $R^1$ und $R^2$ gleich oder voneinander verschieden, wobei $R^1$ und $R^2$ für eine Alkylgruppe, eine substituierte Alkylgruppe oder eine substituierte Triazolgruppe stehen. Dabei bezeichnet $R^3$ eine Alkylgruppe, eine substituierte Alkylgruppe, eine Alkoxygruppe oder eine substituierte Aminogruppe. Stabilisatoren (Antioxidantien) der genannten Art werden beispielsweise in der DE 27 02 661 A1 oder der US 4,360,617 beschrieben. Als Beispiel ist etwa 2,6-Di-t-butyl-p-Kresol zu nennen.

Eine weitere Gruppe bevorzugter sterisch gehinderter Phenole leitet sich von substituierten Benzolcarbonsäuren ab, insbesondere von substituierten Benzolpropionsäuren.

Besonders bevorzugte Verbindungen aus dieser Klasse sind Verbindungen der Formel

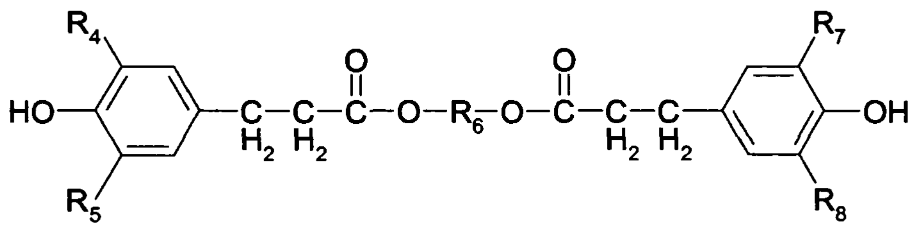

wobei $R_4$, $R_5$, $R_7$ und $R_8$ unabhängig voneinander Alkylgruppen mit 1, 2, 3, 4, 5, 6, 7 oder 8 C-Atomen sein können, die gegebenenfalls geeignet substituiert sein können. Dabei ist mindestens eine der Gruppen $R_4$, $R_5$, $R_7$ und $R_8$ eine sterisch anspruchsvolle Gruppe wie beispielsweise bevorzugt eine Isopropyl-, tert-Butyl-, Phenyl- oder eine nicht-reaktive Gruppe vergleichbarer Größe. $R_6$ stellt bevorzugt einen zweiwertigen aliphatischen Rest mit 1, 2, 3, 4, 5, 6, 7, 8, 9 oder 10 C-Atomen dar, der in der Hauptkette auch C-O-Bindungen aufweisen kann.

Im Rahmen der vorliegenden Erfindung werden als Komponente (D1) besonders bevorzugt Verbindungen der Struktur

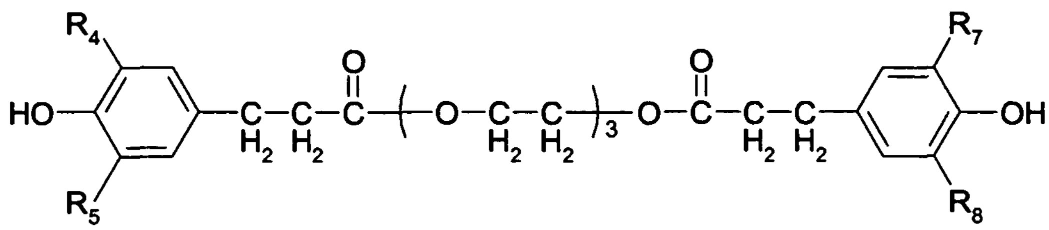

eingesetzt, wobei $R_4$ = $R_7$ = tert-Butyl und $R_5$ =$R_8$ = Methyl, und/oder

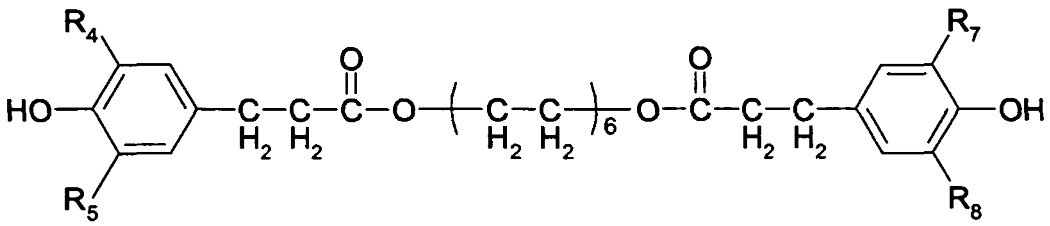

mit $R_4 = R_5 = R_7 = R_8$ = tert-Butyl.

Weitere Beispiele sterisch gehinderter Phenole sind:

2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl) propionat], Distiaryl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-di-tert.-butyl-4-hydroxyhydrocinnamat, 3,5-Di-tert.-butyl-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin und N, N'-Hexamethylen-bis-3,5-di-tert.-butyl-4-hydroxyhydrocinnamid.

Im Rahmen der vorliegenden Erfindung werden besonders bevorzugt 2,2'-Methylen-bis-(4-methyl-6-tert.-butylphenyl), 1,6-Hexandiol-bis-[3-(3,5-di-tert-butyl-4-hydroxyphe-nyl]-propionat, Pentaerythrityl-tetrakis[3-(3,5-di-tert-butyl-4-hydroxyphenyl)-propionat] und Triethylenglykol-bis-[3-(3-t-butyl-5-methyl-4-hydroxy)phenyl]propionat zu nennen.

Ebenfalls bevorzugt können erfindungsgemäß sterisch gehinderte Phenole mit nicht mehr als einer sterisch gehinderten Gruppe in ortho-Stellung zur phenolischen Hydroxygruppe eingesetzt werden. Insbesondere bei der Beurteilung der Farbstabilität der erfindungsgemäßen Formmassen erweisen sich diese gehinderten Phenole, vor allem bei Lagerung in diffusem Licht über längere Zeiträume, als vorteilhafte Komponenten (D1).

Die Stabilisatoren, die einzeln oder als Gemische aus zwei oder mehr voneinander verschiedenen Verbindungen eingesetzt werden können, werden bevorzugt in einer Menge von 0,005 bis 2 Gew.-%, weiter bevorzugt von 0,01 bis 1,0 Gew.-%, und besonders bevorzugt von 0,05 bis 0,6 Gew. %, jeweils bezogen auf das Gewicht der Komponente (A1), eingesetzt.

Demgemäß betrifft die vorliegende Erfindung auch eine wie oben beschriebene Formmasse, wobei die Formmasse zusätzlich als Komponente (D1) 0,005 bis 2 Gew.-%, bezogen auf das Gewicht der Komponente (A1), eines Stabilisators, bevorzugt eines sterisch gehinderten Phenols, weiter bevorzugt eines sterisch gehinderten Phenols der Struktur

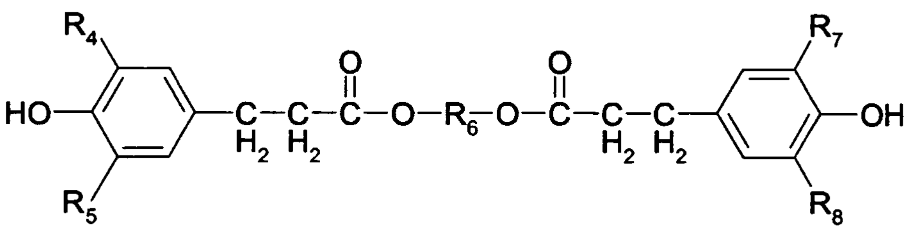

und insbesondere eines sterisch gehinderten Phenols, ausgewählt aus der Gruppe bestehend aus 2,2'-Methylen-bis-(4-methyl-6-ter.-butylphenyl), 1,6-Hexandiol-bis-(3,5-di-tert-butyl-4-hydroxyphenyl]-propionat, Pentaerythrityl-tetrakis [3-3,5-di-tert-butyl-4-hydroxyphenyl)-propionat] und Triethylenglykol-bis-[3-(3-t-butyl-5-methyl-4-hydroxy)phenyl]propionat und einem Gemisch aus zwei, drei oder vier dieser Verbindungen, enthält.

Vorzugsweise liegt das Gewichtsverhältnis von Komponente (D1) zu zeolithischem Material in der Formmasse im Bereich von 20:1 bis 1:10, weiter bevorzugt von 10:1 bis 1:5, und besonders bevorzugt von 7:1 bis 1:2.

Demgemäß betrifft die vorliegende Erfindung auch eine wie oben beschriebene Formmasse, wobei die Komponente (D1) ein sterisch gehindertes Phenol ist und das Gewichtsverhältnis von (D1) zu zeolithischem Material im Bereich von 7:1 bis 1:2 liegt.

Beispielsweise insbesondere bevorzugt ist hierbei ein Bereich von 4:1 bis 1:2.

Gemäß einer weiteren bevorzugten Ausführungsform der vorliegenden Erfindung enthalten die Formmassen

zusätzlich, gegebenenfalls zusätzlich zu Komponente (D1), als Komponente (D2) mindestens ein Polyamid.

Beispiele für erfindungsgemäß geeignete Polyamide sind etwa halbkristalline oder amorphe Harze, wie sie beispielsweise in der Encyclopedia of Polymer Science and Engineering, Vol. 11, John Wiley & Sons, Inc., 1988, S. 315 bis 489, beschrieben werden. Bevorzugt liegt der Schmelzpunkt der erfindungsgemäß eingesetzten Polyamide bei unter 225 °C, weiter bevorzugt bei unter 215 °C.

Beispiele für geeignete Polyamide sind etwa Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methan-dodekansäurediamid oder die durch Ringöffnung von Lactamen, z.B. oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicyclohexylmethan und Adipinsäure genannt. Beispiele hierfür sind die unter der Bezeichnung Ultramid® 1 C, Ultramid® C 31, Ultramid® C 31 01, und Ultramid® C 33 von der BASF Aktiengesellschaft vertriebenen Produkte.

Weiter geeignete Polyamide werden von der Firma DuPont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Die Polyamide, die einzeln oder als Gemische aus zwei oder mehr voneinander verschiedenen Verbindungen eingesetzt werden können, werden bevorzugt in einer Menge von 0,001 bis 2 Gew.-%, weiter bevorzugt von 0,005 bis 1,2 Gew.-% und besonders bevorzugt von 0,01 bis 0,08 Gew.-%, jeweils bezogen auf das Gewicht der Komponente (A1), eingesetzt.

Demgemäß betrifft die vorliegende Erfindung auch eine Formmasse, wie oben beschrieben, zusätzlich als Komponente (D2), gegebenenfalls zusätzlich zu Komponente (D1) enthaltend von 0,001 bis 2 Gew.-%, bezogen auf das Gewicht der Komponente (A1), mindestens eines Polyamids.

Vorzugsweise liegt das Gewichtsverhältnis des zeolithischen Materials zu Komponente (D2) in der Formmasse im Bereich von 1:1 bis 1:25, weiter bevorzugt im Bereich von 1:1 bis 1:15 und insbesondere im Bereich von 1:1 bis 1:5.

Durch die Mitverwendung eines Polykondensationsprodukts aus 2,2-Di(4-hydroxyphenyl)propan (Bisphenol A) und Epichlorhydrin kann in manchen Fällen die Dispergierbarkeit der verwendeten Polyamide verbessert werden.

Derartige Kondensationsprodukte aus Epichlorhydrin und Bisphenol A sind kommerziell erhältlich. Handelsbezeichnungen der Polykondensate sind Phenoxy® (Union Carbide Corporation) oder Epikote® (Shell). Das Molekulargewicht der Polykondensate kann in weiten Grenzen variieren; prinzipiell sind sämtliche im Handel erhältlichen Typen geeignet. Gemäß einer weiteren bevorzugten Ausführungsform der vorliegenden Erfindung enthalten die Formmassen zusätzlich, gegebenenfalls zusätzlich zu Komponente (D1) und/oder Komponente (D2), als Komponente (D3) mindestens ein Erdalkalisilikat und/oder ein Erdalkaliglycerophosphat.

Bevorzugt enthalten die erfindungsgemäßen Formmassen das mindestens ein Erdalkalisilikat und/oder ein Erdalkaliglycerophosphat in einer Menge im Bereich von 0,002 bis 2,0 Gew.-%, weiter bevorzugt von 0,005 bis 0,5 Gew.-% und insbesondere bevorzugt von 0,01 bis 0,3 Gew.-%, jeweils bezogen auf das Gewicht der Komponente (A1)

Besonders bevorzugt werden im Rahmen der vorliegenden Erfindung Calicumsilikate, Calciumglycerophosphate, Magnesiumsilikate und Magnesiumglycerophosphate eingesetzt. Insbesondere bevorzugt sind Magnesiumsilikate und Magnesiumglycerophosphate.

Allgemein bevorzugt sind Erdalkalisilikate der Struktur

$$MeO \cdot x\ SiO_2 \cdot n\ H_2O$$

wobei

Me ein Erdalkalimetall, vorzugsweise Calcium und Magnesium und insbesondere Magnesium,
x eine Zahl von 1,4 bis 10, vorzugsweise 1,4 bis 6, und
n eine Zahl gleich oder größer als 0, vorzugsweise 0, 1, 2, 3, 4, 5, 6, 7 oder 8.

Die besonders bevorzugten Silikate und Glycerophosphate können wie folgt charakterisiert werden:

Calcium- bzw. Magnesiumsilikat:

Gehalt an CaO bzw. MgO: 4 bis 32 Gew.-%, vorzugsweise 8 bis 30 Gew.-% und insbesondere 12 bis 25 Gew.-%,
Verhältnis $SiO_2$ : CaO bzw. $SiO_2$ MgO (mol/mol) : 1,4 bis 10, vorzugsweise 1,4 bis 6 und insbesondere 1,4 bis 4,
Schüttgewicht: 10 bis 80 g /100 ml, vorzugsweise 10 bis 40 g / 100 ml,
durchschnittliche Korngröße: kleiner als 100 μm, vorzugsweise kleiner als 50 μm.

Calcium- bzw. Magnesiumglycerophosphate:

Gehalt an CaO bzw. MgO: größer als 70 Gew.-%, vorzugsweise größer als 80 Gew.-%
Glührückstand: 45 bis 65 Gew.-%,
Schmelzpunkt: größer als 300 °C,
durchschnittliche Korngröße: kleiner als 100 μm, vorzugsweise kleiner als 50 μm.

Demgemäß betrifft die vorliegende Erfindung auch eine Formmasse, wie oben beschrieben, zusätzlich als Komponente (D3), gegebenenfalls zusätzlich zu Komponente (D1) und/oder (D2) enthaltend von 0,002 bis 2 Gew.-%, bezogen auf das Gewicht der Komponente (A1), mindestens eines Erdalkalisilikates und/oder ein Erdalkaliglycerophosphates.

Diese Gewichtsprozentangabe bezieht sich auf die Summe der Gewichte sämtlicher eingesetzter Erdalkalisilikate und Erdalkaliglycerophosphate.

Gemäß einer weiteren bevorzugten Ausführungsform der vorliegenden Erfindung enthalten die Formmassen zusätzlich, gegebenenfalls zusätzlich zu Komponente (D1) und/oder Komponente (D2) und/oder Komponente (D3), als Komponente (D4)

- mindestens einen Ester, erhältlich durch Umsetzung mindestens einer gesättigten oder ungesättigten aliphatischen Carbonsäure mit 10 bis 40 C-Atomen mit mindestens einem Polyol oder mindestens einem aliphatischen gesättigten Alkohol mit 2 bis 40 C-Atomen,
  und/oder
- mindestens ein Amid, erhältlich durch Umsetzung mindestens einer gesättigten oder ungesättigten aliphatischen Carbonsäure mit 10 bis 40 C-Atomen mit einem Amin mit 2 bis 20 C-Atomen;
  und/oder
- mindestens einen Ether, erhältlich durch Umsetzung mindestens eines Alkohols mit mindestens einem Ethylenoxid.

Bevorzugt wird ein Ester eingesetzt, erhältlich durch Umsetzung mindestens einer gesättigten oder ungesättigten aliphatischen Carbonsäure mit 12 bis 30, weiter bevorzugt mit 14 bis 24 und insbesondere mit 16 bis 22 C-Atomen mit mindestens einem Polyol oder mindestens einem aliphatischen gesättigten Alkohol mit 2 bis 30, weiter bevorzugt mit 2 bis 20, weiter bevorzugt mit 2 bis 10 und insbesondere mit 2 bis 6 wie etwa 2, 3, 4, 5 oder 6 C-Atomen.

Bevorzugt wird ein Amid eingesetzt, erhältlich durch Umsetzung mindestens einer gesättigten oder ungesättigten aliphatischen Carbonsäure mit 12 bis 30, weiter bevorzugt mit 14 bis 24 und insbesondere mit 16 bis 22 C-Atomen mit einem Amin mit 2 bis 10 und insbesondere mit 2 bis 6 wie etwa 2, 3, 4, 5 oder 6 C-Atomen.

Die zur Herstellung der Ester und/oder Amide verwendeten Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung aus Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)-amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilautrat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weiterhin geeignet sind Polyetherpolyole oder Polyesterpolyole, welche mit ein- oder mehrwertigen Carbonsäuren, vorzugsweise Fettsäuren verestert bzw. verethert sind. Geeignete Produkte sind im Handel beispielsweise als Loxiol® EP 728 der Firma Henkel KGaA erhältlich.

Bevorzugte Ether, die sich von Alkoholen und Ethylenoxid ableiten, weisen die allgemeine Formel

$RO-(CH_2-CH2-O)_n-H$

auf, in der R eine Alkylgruppe mit 6 bis 40 Kohlenstoffatomen und n eine ganze Zahl grö-ßer oder gleich 1 bedeutet.

Insbesondere bevorzugt für R ist ein gesättigter $C_{16}$ bis $C_{18}$ Fettalkohol mit n = 50, der als Lutensol® AT 50 der Firma BASF im Handel erhältlich ist.

Die erfindungsgemäßen Formmassen enthalten die Komponente (D4) bevorzugt von 0,01 bis 5 Gew.-%, weiter bevorzugt von 0,09 bis 2 und besonders bevorzugt von 0,1 bis 0,7 Gew.-%, bezogen auf das Gewicht der Komponente (A1).

Die Gew.%-Angabe bezieht sich hierbei auf das Gesamtgewicht der als Komponente (D4) eingesetzten Ester, Amide und Ether.

Demgemäß betrifft die vorliegende Erfindung auch eine wie oben beschriebene Formmasse, zusätzlich als Komponente (D4), gegebenenfalls zusätzlich zu Komponente (D1) und/oder (D2) und/oder (D3) enthaltend von 0,01 bis 5 Gew.-%, bezogen auf das Gewicht der Komponente (A1),

- mindestens eines Esters, erhältlich durch Umsetzung mindestens einer gesättigten oder ungesättigten aliphatischen Carbonsäure mit 10 bis 40 C-Atomen mit mindestens einem Polyol oder mindestens einem aliphatischen gesättigten Alkohol mit 2 bis 40 C-Atomen,
  und/oder
- mindestens eines Amids, erhältlich durch Umsetzung mindestens einer gesättigten oder ungesättigten aliphatischen Carbonsäure mit 10 bis 40 C-Atomen mit einem Amin mit 2 bis 20 C-Atomen;
  und/oder
- mindestens eines Ethers, erhältlich durch Umsetzung mindestens eines Alkohols mit mindestens einem Ethylenoxid.

Gemäß einer weiteren bevorzugten Ausführungsform der vorliegenden Erfindung enthalten die Formmassen zusätzlich, gegebenenfalls zusätzlich zu Komponente (D1) und/oder Komponente (D2) und/oder Komponente (D3) und/ oder Komponente (D4) als Komponente (C) Talkum.

Talkum ist ein hydratisiertes Magnesiumsilikat in der Zusammensetzung $Mg_3[(OH)_2/Si_4O_{10}]$ oder 3 MgO · 4 $SiO_2 \cdot H_2O$. Diese so genannten Dreischicht-Phyllosilikate weisen einen triklinen, monoklinen oder rhombischen Kristallaufbau mit blättchenförmigem Erscheinungsbild auf. Außerdem können, vorzugsweise als Spurenelemente, Mn, Ti, Cr, Ni, Na und/oder K anwesend sein. Zusätzlich kann die OH-Gruppe teilweise durch Fluorid ersetzt sein. Besonders bevorzugt wird Talkum eingesetzt, dessen Teilchengröße zu 100 % < 20 μm ist. Die Teilchengrößenverteilung wird üblicherweise durch Sedimentationsanalyse (DIN 6616-1) bestimmt und beträgt vorzugsweise:

| | |
|---|---|
| < 20 μm | 100 Gew.-% |
| < 10 μm | 99 Gew.-% |
| < 5 μm | 85 Gew.-% |
| < 3 μm | 60 Gew.-% |
| < 2 mm | 43 Gew.-% |

Derartige Produkte sind im Handel als Micro-Talc I.T. extra (Fa. Norwegian Talc Minerals) erhältlich.

Bevorzugt enthalten die erfindungsgemäßen Formmassen 0,01 bis 5 Gew.-%, weiter bevorzugt von 0,01 bis 4 Gew.-%, weiter bevorzugt von 0,01 bis 3 Gew.-% und insbesondere bevorzugt von 0,02 bis 2 Gew.-%, bezogen auf das Gewicht der Komponente (A1), an Talkum.

Demgemäß betrifft die vorliegende Erfindung auch eine wie oben beschriebene Formmasse, zusätzlich als Komponente (C), gegebenenfalls zusätzlich zu Komponente (D1) und/oder (D2) und/oder (D3) und/oder (D4) enthaltend von 0,01 bis 5 Gew.-%, bezogen auf das Gewicht der Komponente (A1), Talkum.

Gemäß einer weiteren Ausführungsform der vorliegenden Erfindung enthalten die erfindungsgemäßen Formmassen als weitere Komponente (D5), neben dem Zeolithen, mindestens ein weiteres Nukleierungsmittel. Vorzugsweise enthalten die erfindungsgemäßen Formmassen von 0,0001 bis 1 Gew.-%, weiter bevorzugt von 0,001 bis 0,8 Gew.-% und besonders bevorzugt von 0,01 bis 0,3 Gew.-%, bezogen auf das Gewicht der Komponente (A1), des weiteren Nukleierungsmittels. Als solche Nukleierungsmittel kommen alle für diesen Zweck bekannten Verbindungen in Frage, beispielsweise Melamincyanurat, Borverbindungen wie Bornitrid, Kieselsäure, Pigmente wie z.B. Heliogenblau® (Kupferphthalocyaninpigment; eingetragenes Warenzeichen der BASF Aktiengesellschaft).

Daher beschreibt die vorliegende Erfindung auch eine wie oben beschriebene Formmasse, zusätzlich als Komponente (D5), gegebenenfalls zusätzlich zu Komponente (D1) und/oder (D2) und/oder (D3) und/oder (D4) und/oder (C), enthaltend von 0,0001 bis 1 Gew.-%, bezogen auf das Gewicht der Komponente (A1), neben dem zeolithischen Material mindestens

ein weiteres Nukleierungsmittel.

Der Begriff "Nukleierungsmittel", wie er im Rahmen der vorliegenden Erfindung verwendet wird, bezeichnet eine keimbildende Verbindung, die die Kristallisationsgeschwindigkeit teilkristalliner Polymere wie beispielsweise Polyoxymethylen erhöht. Diesbezüglich sei auf H. Zweifel (Herausgeber), "Plastics Additives Handbook", 5. Auflage, Hanser Verlag, München & Cincinnati, 2001, Kapitel 18 "Nucleating Agents for Semicrystalline Polymers", S. 949 ff, insbesondere S. 956 bis 969 verwiesen. Darüber hinaus finden sich polyoxymethylenspezifische Angaben im Kunststoffhandbuch 3/1, "Polycarbonate, Polyacetale, Polyester, Celluloseester", Hanser Verlag, München & Wien, 1992, S.323.

Gemäß einer weiteren Ausführungsform der vorliegenden Erfindung enthalten die erfindungsgemäßen Formmassen als weitere Komponente (D6) mindestens einen geeigneten Füllstoff. Vorzugsweise enthalten die erfindungsgemäßen Formmassen bis zu 50 Gew.-%, vorzugsweise von 5 bis 40 Gew.-%, bezogen auf das Gewicht der Komponente (A1), eines Füllstoffs. Als geeignete Füllstoffe seien beispielsweise Kaliumtitanat-Whisker, Wollastonit, Kohlenstoff- und vorzugsweise Glasfasern genannt, wobei die Glasfasern beispielsweise in Form von Glasgeweben, Glasmatten, Glasvliesen und/oder Glasseidenrovings oder geschnittener Glasseide aus alkaliarmem E-Glas mit einem Durchmesser von 5 bis 200 μm, vorzugsweise 8 bis 50 μm, eingesetzt werden können, wobei die faserförmigen Füllstoffe nach ihrer Einarbeitung vorzugsweise eine mittlere Länge von 0,05 bis 1 mm, insbesondere 0,1 bis 0,5 μm, aufweisen.

Andere geeignete Füllstoffe sind beispielsweise Calciumcarbonat oder Glaskugeln, vorzugsweise in gemahlener Form oder Mischungen dieser Füllstoffe.

Daher beschreibt die vorliegende Erfindung auch eine wie oben beschriebene Formmasse, zusätzlich als Komponente (D6), gegebenenfalls zusätzlich zu Komponente (D1) und/oder (D2) und/oder (D3) und/oder (D4) und/oder (D5) und/oder (C), enthaltend bis zu 50 Gew.-%, bezogen auf das Gewicht der Komponente (A1), mindestens einen Füllstoff.

Gemäß einer weiteren Ausführungsform der vorliegenden Erfindung enthalten die erfindungsgemäßen Formmassen als weitere Komponente (A2) der vorliegenden Erfindung zusätzlich, gegebenenfalls zusätzlich zu Komponente (D1) und/oder Komponente (D2) und/oder Komponente (D3) und/oder Komponente (D4) und/oder Komponente (D5) und/oder Komponente (D6), als Komponente (A2) mindestens ein thermoplastisches Polyurethan (TPU). Weiter bevorzugt wird dieses mindestens eine thermoplastische Polyurethan als schlagzäh modifizierendes Polymer eingesetzt.

Bevorzugt enthalten die erfindungsgemäßen Formmassen die Komponente (A2) in einer Menge von bis zu 55 Gew.-%, weiter bevorzugt von bis zu 50 Gew.-% und insbesondere von bis zu 45 Gew.-%, jeweils bezogen auf das Gewicht der Komponente (A1). Bevorzugt enthalten die erfindungsgemäßen Formmassen die Komponente (A2) in einer Menge von mindestens 10 Gew.-%, weiter bevorzugt von mindestens 12 Gew.-%, jeweils bezogen auf das Gewicht der Komponente (A1). Bevorzugt enthalten die erfindungsgemäßen Formmassen die Komponente (A2) in einer Menge von 10 bis 55 Gew.-%, weiter bevorzugt von 12 bis 45 Gew.-%, jeweils bezogen auf das Gewicht der Komponente (A1).

Bevorzugt werden in den erfindungsgemäßen Formmassen thermoplastische Polyurethane eingesetzt, die durch ein wie folgt beschriebenes Verfahren erhältlich sind.

Beispielsweise können TPU durch Umsetzung von (a) Isocyanaten mit (b) gegenüber Isocyanaten reaktiven Verbindungen mit einem Molekulargewicht von 500 bis 10.000 g/mol und gegebenenfalls (c) Kettenverlängerungsmitteln mit einem Molekulargewicht von 50 bis 499 g/mol, gegebenenfalls in Gegenwart von (d) Katalysatoren und/oder (e) üblichen Hilfs- und/oder Zusatzstoffen herstellt werden. Unter die Komponente (e) fallen auch Hydrolyseschutzmittel wie beispielsweise polymere und niedermolekulare Carbodiimide.

Im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten (a), (b) sowie gegebenenfalls (c), (d) und/oder (e) sollen im Folgenden beispielhaft beschrieben werden:

a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendüsocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophorondiisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendüsocyanat (TDI), Diphenylmethandiisocyanat, 3,3'-Dimethyl-diphenyldiisocyanat, 1,2-Diphenylethandiisocyanat und/oder Phenylendiisocyanat.

b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten von 500 bis 8.000 g/mol, bevorzugt 600 bis 6.000 g/mol, insbesondere 800 bis 4.000 g/mol, und bevorzugt einer mittleren Funktionalität von 1,8 bis 2,3, bevorzugt 1,9 bis 2,2, insbesondere 2. Bevorzugt setzt man Polyetherpolyole ein,

beispielsweise solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylen-glykole. Die Polyetherole weisen den Vorteil auf, dass sie eine höhere Hydrolysestabilität als Polyesterole besitzen.

c) Als Kettenverlängerungsmittel (c) können allgemein bekannte aliphatische, araliphatische, aromatische und/oder cycloaliphatische Verbindungen mit einem Molekulargewicht von 50 bis 499 g/mol, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.

e) Neben Katalysatoren (d) können den Aufbaukomponenten (a) bis (c) auch übliche Hilfsmittel und/oder Zusatzstoffe (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Inhibitoren weitere Stabilisatoren, z.B. gegen Hydrolyse, Licht, Hitze oder Verfärbung, anorganische und/oder organische Füllstoffe, Verstärkungsmittel und Weichmacher. In einer bevorzugten Ausführungsform fallen unter die Komponente (e) auch Hydrolyseschutzmittel wie beispielsweise polymere und niedermolekulare Carbodiimide.

Neben den genannten Komponenten a) und b) und gegebenenfalls c), d) und e) können auch Kettenregler, üblicherweise mit einem Molekulargewicht von 31 bis 499 g/mol, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten bei den TPU gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente c).

Nähere Angaben über die oben genannten Hilfsmittel- und Zusatzstoffe sind der Fachliteratur zu entnehmen.

Zur Einstellung von Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Bevorzugt werden zur Herstellung der TPU auch Kettenverlängerer (c) verwendet.

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor.

Die Herstellung der TPU kann nach den bekannten Verfahren kontinuierlich, beispielsweise mit Reaktionsextrudern oder dem Bandverfahren nach one-shot oder dem Prepolymerverfahren, oder diskontinuierlich nach dem bekannten Prepolymerprozeß erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt.

Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert.

Ganz besonders bevorzugt werden im Rahmen der vorliegenden Erfindung als Komponente (A2) thermoplastische Polyester-Polyurethane mit einer Shore-Härte A, bestimmt gemäß DIN 53505, im Bereich von 75 bis 90. Als

Komponenten solcher thermoplastischer Polyester-Polyurethane sind MDI (Diphenylmethandiisocyanat) und Polyester aus Adipinsäure und Butandiol weiter besonders bevorzugt.

Als weitere geeignete Elastomere seien beispielsweise thermoplastische Polyurethane genannt, welche z.B. in der EP 0 115 846 A2, EP 0 115 847 A2 sowie EP 0 117 664 A1 beschrieben sind.

Demgemäß betrifft die vorliegende Erfindung auch eine wie oben beschriebene Formmasse, zusätzlich als Komponente (A2), gegebenenfalls zusätzlich zu Komponente (D1) und/oder (D2) und/oder (D3) und/oder (D4) und/oder (D5) und/oder (D6) und/oder (C), enthaltend bis zu 50 Gew.-%, bezogen auf das Gewicht der Komponente (A1), mindestens ein Polyurethan.

Weiter bevorzugt betrifft die vorliegende Erfindung auch eine wie oben beschriebene Formmasse, zusätzlich als Komponente (A2), gegebenenfalls zusätzlich zu Komponente (D1) und/oder (D2) und/oder (D3) und/oder (D4) und/oder (D5) und/oder (D6) und/oder (C), enthaltend bis zu 50 Gew.-%, bezogen auf das Gewicht der Komponente (A1), mindestens ein thermoplastisches Polyurethan.

Weiter betrifft die vorliegende Erfindung daher auch eine wie oben beschriebene Formmasse, zusätzlich als Komponente (A2), gegebenenfalls zusätzlich zu Komponente (D1) und/oder (D2) und/oder (D3) und/oder (D4) und/oder (D5) und/oder (C), enthaltend bis zu 50 Gew.-%, bezogen auf das Gewicht der Komponente (A1), mindestens ein thermoplastisches Polyester-Polyurethane mit einer Shore-Härte A, bestimmt gemäß DIN 53505, im Bereich von 75 bis 90.

Gemäß einer weiteren Ausführungsform der vorliegenden Erfindung enthalten die erfindungsgemäßen Formmassen zusätzlich, gegebenenfalls zusätzlich zu Komponente (D1) und/oder Komponente (D2) und/oder Komponente (D3) und/oder Komponente (D4) und/oder Komponente (D5) und/oder Komponente (D6), Komponente (C) und/oder Komponente (A2), als Komponente (A3) mindestens ein kautschukelastisches Polymerisat oder Elastomer. Weiter bevorzugt wird dieses mindestens eine kautschukelastische Polymerisat oder Elastomer als schlagzäh modifizierendes Polymer eingesetzt.

Bevorzugt enthalten die erfindungsgemäßen Formmassen die Komponente (A3) in einer Menge von bis zu 50 Gew.-%, weiter bevorzugt von bis zu 45 Gew.-% und insbesondere von bis zu 40 Gew.-%, jeweils bezogen auf das Gewicht der Komponente (A1).

Bevorzugte Arten von solchen Elastomeren sind so genannte Ethylen-Propylen-(EPM)-bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen pro 100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen und Tricyclodiene wie 3-Methyltricyclo(5.2.1.0.2.6)-3,8-decadien oder deren Mischungen genannt. Bevorzugt sind Hexa-1,5-dien, 5-Ethyliden-norbornen und Dicyclopentadien. Der Diengehalt der EPDM-Kautschuke beträgt vorzugsweise von 0,5 bis 50 Gew.-%, weiter bevorzugt von 0,75 bis 20 Gew.-% und insbesondere von 1 bis 8 Gew.-%, bezogen auf das Gesamtgewicht des Kautschuks.

Die EPDM-Kautschuke können auch mit weiteren Monomeren gepfropft sein. Beispielsweise seien als solche Monomere etwa Glycidyl(meth)acrylate, (Meth)acrylsäureester und (Meth)acrylamide genannt.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltenden Monomere werden vorzugsweise durch Zugabe von Epoxygruppen enthaltenden Monomeren der allgemeinen Formeln I oder II zum Monomerengemisch in den Kautschuk eingebaut.

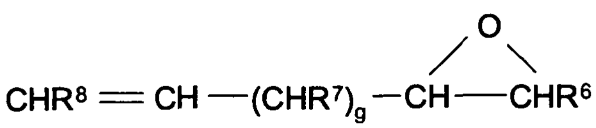

(I)

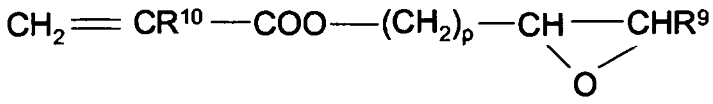

(II),

wobei $R_6$ - $R_{10}$ Wasserstoff oder Alkylgruppen mit 1, 2, 3, 4, 5 oder 6 C-Atomen darstellen und m gleich 0, 1, 2, 3, 4, 5, 6, 7, 8, 9, 10,11,12, 13, 14, 15, 16,17, 18, 19 oder 20, g gleich 0, 1, 2, 3, 4, 5, 6, 7, 8, 9 oder 10 und p gleich 0, 1, 2, 3, 4 oder 5 ist.

Vorzugsweise sind die Reste $R_6$ bis $R_8$ gleich Wasserstoff, wobei m gleich 0 oder 1 und g gleich 1 ist. Die entsprechenden Verbindungen sind Allylglycidylether und Vinylglycidylether.

Bevorzugte Verbindungen der Formel (II) sind Epoxygruppen enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidylmethacrylat, (Meth)acrylsäure und/oder Maleinsäureanhydrid und |
| 1 bis 50, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei D.C. Blackley in der Monographie "Emulsion Polymerization" Applied Science Publishers LTD, London 1975 beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird u.a. durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von besonders bevorzugt unter 0 °C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im Allgemeinen durch Polymerisation von Styrol, Acrylnitril, Methacrylnitril, o-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino- oder Amidgruppen sowie funktionelle Gruppen, die durch Mitverwendung von Monomeren der allgemeinen Formel

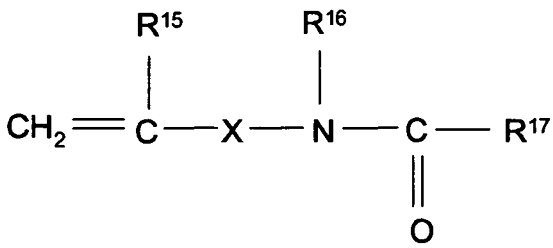

eingeführt werden können, wobei die Substituenten folgende Bedeutung haben können:

$R^{15}$ Wasserstoff oder eine Alkylgruppe mit 1, 2, 3,oder 4 C-Atomen,

$R^{16}$ Wasserstoff, eine Alkylgruppe mit 1, 2, 3, 4, 5, 6, 7 oder 8 C-Atomen oder eine Arylgruppe mit 6,7,8,9,10, 11 oder 12 C-Atomen, insbesondere Phenyl,

$R^{17}$ Wasserstoff, eine Alkylgruppe mit 1, 2, 3, 4, 5, 6, 7, 8, 9 oder 10 C-Atomen, eine Arylgruppe mit 6, 7,8,9,10, 11 oder 12 C-Atomen oder $-OR^{18}$,

$R^{18}$ eine Alkylgruppe mit 1, 2, 3, 4, 5, 6, 7 oder 8 C-Atomen oder ein Arylgruppe mit 6, 7, 8, 9, 10, 11 oder 12 C-Atomen, die gegebenenfalls mit O- oder N-haltigen Gruppen substituiert sein können,

X eine chemische Bindung, eine Alkylengruppe mit 1, 2, 3, 4, 5, 6, 7, 8, 9 oder 10 C-Atomen oder Arylengruppe mit 6, 7, 8, 9, 10, 11 oder 12 C-Atomen oder

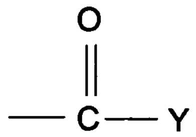

Y OZ oder NH-Z und

Z eine Alkylengruppe mit 1, 2, 3, 4, 5, 6, 7, 8, 9 oder 10 C-Atomen eine Arylengruppe mit 6, 7, 8, 9, 10, 11 oder 12 C-Atomen.

Auch die in der EP 0 208 187 A2 beschriebenen Pfropfmonomeren der Struktur

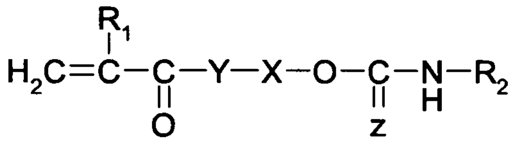

sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat, Butandioldiacrylat und Dihydrodicyclopentadienylacrylat sowie die in der EP 0 050 265 A1 beschriebenen zyklischen monomeren Verbindungen, die mindestens drei ethylenisch ungesättigte Gruppen gleicher Polymerisationsgeschwindigkeit wie beispielsweise Triallylcyanurat,Triallylisocyanaurat, Trivinylcyanurate, Triallylbenzole, Trivinylbenzole und 1,3,5-Triacryloylhexahydro-s-triazin.

Ferner können auch so genannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktiven Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft. Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomeren; für nähere Einzelheiten bezüglich dieser Verbindungen sei hier beispielsweise auf den entsprechenden Inhalt der US 4,148,846, beispielsweise auf Spalte 4, Zeile 56 bis Spalte 5, Zeile 58, verwiesen, die diesbezüglich vollumfänglich in den Kontext der vorliegenden Anmeldung durch Bezugnahme aufgenommen wird.

Im Allgemeinen beträgt der Anteil dieser vernetzenden Monomeren an den schlagzäh modifizierenden Polymeren bis zu 5 Gew.-%, vorzugsweise nicht mehr als 3 Gew.-%, bezogen auf das Gesamtgewicht der schlagzäh modifizierenden Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere können auch nach anderen üblichen Verfahren, z.B. durch Suspensionspolymerisation, hergestellt werden.

Selbstverständlich können auch Mischungen der vorstehend aufgeführten Kautschuktypen eingesetzt werden.

Demgemäß betrifft die vorliegende Erfindung auch eine wie oben beschriebene Formmasse, zusätzlich als Komponente (A3), gegebenenfalls zusätzlich zu Komponente (D1) und/oder (D2) und/oder (D3) und/oder (D4) und/oder (D5) und/oder (D6) und/oder (C) und/oder (A2), enthaltend bis zu 50 Gew.-%, bezogen auf das Gewicht der Komponente (A1), mindestens ein kautschukelastisches Polymerisat oder Elastomer.

Die erfindungsgemäßen Formmassen enthalten gemäß einer bevorzugten Ausführungsform entweder die Komponente (A2) oder die Komponente (A3). Gemäß einer weiteren Ausführungsform enthalten die erfindungsgemäßen Formmassen sowohl die Komponente (A2) als auch die Komponente (A3), wobei in diesem Fall gemäß einer weiter bevorzugten Ausführungsform die Formmassen bis zu 50 Gew.-%, bezogen auf das Gewicht der Komponente (A1), an Komponente (A2) und (A3) enthalten und die Gewichtsprozentangabe sich auf die Summe der Gewichtsprozente von (A2) und (A3) bezieht.

Die erfindungsgemäßen Formmassen können noch weitere übliche Zusatzstoffe und Verarbeitungshilfsmittel enthalten. Nur beispielhaft seien hier genannt:

als eine Komponente (D7):

Weichmacher, in den erfindungsgemäßen Formmassen bevorzugt enthalten von 0,001 bis 5 Gew.-%, bezogen auf die Komponente (A1);

als eine Komponente (D8):

Haftvermittler, in den erfindungsgemäßen Formmassen bevorzugt enthalten von 0,001 bis 5 Gew.-%, bezogen auf die Komponente (A1). Als Beispiele für Haftvermittler sind unterem anderem etwa geeignete Paraffine wie etwa Weißöle zu nennen;

als Komponente (D9):

Pigmente, in den erfindungsgemäßen Formmassen bevorzugt enthalten von 0,001 bis 5 Gew.-%, bezogen auf die Komponente (A1);

als Komponente (D10):

mindestens eine Verbindung aus der Klasse der 2-Hydroxyphenylbenzotriazol-Derivate und/oder der Klasse der 2,2,6,6-Tetramethyl-1-piperidin-Derivate, bevorzugt als UV-Stabilisatoren, in den erfindungsgemäßen Formmassen bevorzugt enthalten von 0,001 bis 5 Gew.-%, bezogen auf die Komponente (A1). Ist eine Verbindung gemäß Komponente (D10) in der erfindungsgemäßen Formmasse enthalten und weist eine sekundäre Amingruppe auf, so enthält weiter bevorzugt die erfindungsgemäße Formmasse keine weitere organische Verbindung mit monodisperser Molmassenverteilung und einer sekundären Amingruppe und keine organische Verbindung mit monodisperser Molmassenverteilung und einer primären Amingruppe. Ist eine Verbindung gemäß Komponente (D10) in der erfindungsgemäßen Formmasse enthalten und weist eine sekundäre Amingruppe auf, so enthält weiter bevorzugt die erfindungsgemäße Formmasse keine weitere organische Verbindung mit monodisperser Molmassenverteilung und einer sekundären Amingruppe, keine organische Verbindung mit

monodisperser Molmassenverteilung und einer primären Amingruppe und, abgesehen von gegebenenfalls einem Polyamid, keine organische Verbindung mit polydisperser Molmassenverteilung und einer primären Amingruppe und keine organische Verbindung mit polydisperser Molmassenverteilung und einer sekundären Amingruppe.

Gemäß einer insbesondere bevorzugten Ausführungsform betrifft die vorliegende Erfindung auch eine wie oben beschriebene Formmasse, zusätzlich als Komponente (D8), gegebenenfalls zusätzlich zu Komponente (D1) und/oder (D2) und/oder (D3) und/oder (D4) und/oder (D5) und/oder (D6) und/oder (D7) und/oder (D9) und/oder (D10) und/oder (A2) und/oder (A3) und/oder (C), enthaltend 0,001 bis 5 Gew.-%, bevorzugt 0,01 bis 4 Gew.-, weiter bevorzugt 0,1 bis 2 Gew.-%, weiter bevorzugt von 0,2 bis 1 Gew.-%, bezogen auf das Gewicht der Komponente (A1), mindestens einen Haftvermittler, bevorzugt mindestens ein geeignetes Paraffin, weiter bevorzugt mindestens ein Weißöl. Insbesondere bevorzugt sind hierbei Formmassen, im Wesentlichen bestehend aus den Komponenten (A1), (D1), (D2), (D4) und (D8) sowie dem zeolithischen Material.

Die Herstellung der erfindungsgemäßen thermoplastischen Formmassen erfolgt durch Mischen der Komponenten in an sich bekannter Weise. Dabei kann das zeolithische Material gleichzeitig oder später zu der Komponente (A1) gegeben werden. Die Komponente (A1) kann vor, während oder nach der Zugabe des zeolithischen Materials zerkleinert, zermahlen oder granuliert wird. Vor, während oder nach der Zugabe des zeolithischen Materials liegt die Komponente (A1) in flüssiger Form vor, beispielsweise als Schmelze, als Lösung in einem geeigneten Lösungsmittel oder als Dispersion in einem geeigneten Dispergierungsmittel.

Nach dem Vermengen von (A1) mit dem zeolithischen Material wird, sofern Lösungsmittel vorhanden war, dieses zumindest teilweise, vorzugsweise im Wesentlichen vollständig entfernt.

Die Komponenten (C) sowie (D1), (D2), (D3), (D4), (D5), (D6), (D7), (D8), (D9) und/oder (D10) werden, sofern sie keine Flüssigkeiten sind, vorteilhafterweise in fein gemahlener Form eingesetzt. Produkte mit einer durchschnittlichen Teilchengröße von kleiner als 100 μm, vorzugsweise von kleiner als 50 μm, sind besonders gut geeignet. Die Komponenten C sowie (D1), (D2), (D3), (D4), (D5), (D6), (D7), (D8), (D9) und/oder (D10) können ebenfalls gleichzeitig, zusammen oder nacheinander zur der Komponente (A1) gegeben werden und zwar vor, während oder nach der Zugabe des zeolithischen Materials.

Vorteilhaft erfolgt die Mischung der Komponenten auf einem Extruder und vorzugsweise erfolgt die Vermengung bei geschmolzener Komponente (A1).

Demgemäß betrifft die vorliegende Erfindung auch ein Verfahren zur Herstellung einer wie oben beschriebenen Formmasse, umfassend Vermischen mindestens eines Polyoxymethylens mit einem zeolithischem Material mit einem Porendurchmesser im Bereich von 0,3 bis 0,5 nm, bestimmt gemäß DIN 66134 und DIN 66135, wobei die Partikel des zeolithischen Materials eine Größe im Bereich von 3 bis 7 μm, bestimmt gemäß ISO 13320, aufweisen.

Weiter betrifft die vorliegende Erfindung dieses Verfahren, weiter umfassend Extrudieren einer Masse, enthaltend Polyoxymethylen und zeolithisches Material, bei einer Temperatur im Bereich von 100 bis 270 °C.

Ein Vorteil dieses erfindungsgemäßen Extrudierens ist beispielsweise in der Tatsache zu sehen, dass als zeolithisches Ausgangsmaterial ein Zeolith mit einem vergleichsweise hohen Wassergehalt eingesetzt werden kann und dieser im Laufe des Extrudierens durch die gewählten Temperaturen getrocknet wird. Eine Vorbehandlung des zeolithischen Materials im Sinne einer Vortrocknung ist somit nicht erforderlich.

Außerdem betrifft die vorliegende Erfindung ein Verfahren zur Herstellung der erfindungsgemäßen Formmasse, umfassend die Schritte:

(i) Schmelzen der Komponente (A1) und/oder Lösen der Komponente (A1) in mindestens einem geeigneten Lösungsmittel;
(ii) Vermischen der Komponente (A1) während und/oder anschließend an (i) mit zeolithischem Material;
(iii) optional im Falle, dass die Komponente (A1) gemäß (i) in mindestens einem Lösungsmittel gelöst wurde, zumindest teilweises Entfernen des mindestens einen Lösungsmittels.

Weiterhin betrifft die vorliegende Erfindung auch eine Formmasse, erhältlich durch die wie oben beschriebenen Verfahren.

Der Begriff "Formmasse", wie er im Rahmen der vorliegenden Erfindung verwendet wird, bezeichnet eine Masse gemäß einer er oben genannten Zusammensetzungen, die durch mindestens einen geeigneten Schritt verformt werden kann. Aus den erfindungsgemäßen Formmassen lassen sich demgemäß durch Verformung Formkörper herstellen. Die Formmassen lassen sich auch in Folien, Filme und Schäume umwandeln. Deshalb weisen die Formmassen für eine derartige Verwendung vorteilhafte mechanische Eigenschaften auf. Beispielsweise im Fall von entsprechend verstärkten Formmassen wie unter anderem durch Glasfaserzusatz geeignet verstärkten Formmassen weisen diese ein Zug-E-Modul, bestimmt über ISO 527, von mindestens 2.400 MPa, bevorzugt von mindestens 2.600 MPa und eine Streckspannung (yield stress) von mindestens 59,5 MPa, bevorzugt von mindestens 62,5 MPa, vorzugsweise mindestens

63,0 MPa, jeweils bestimmt über ISO 527, auf.

Die Formmassen können durch einen formgebenden Schritt, beispielsweise durch Sprühtrocknung, Spritzgießen, Extrusion, Pressen, Pelletieren in Formkörper wie beispielsweise Granulate, Kugeln, Pellets, Tabletten geformt werden.

Aus den erfindungsgemäßen Formkörpern können weitere Formkörper hergestellt werden. Beispielsweise ist es möglich, ein erfindungsgemäßes Granulat zu schmelzen und, gegebenenfalls unter Zusatz mindestens eines geeigneten Zusatzstoffes, zu einem weiteren Formkörper zu verarbeiten. Als geeignete Zusatzstoffe sind beispielsweise die oben genannten Komponenten (C) und (D1), (D2), (D3), (D4), (D5), (D6), (D7), (D8), (D9) und/oder (D10) zu nennen. Weiter ist es möglich, bei der Herstellung des weiteren Formkörpers mindestens ein zeolithisches Material wie beispielsweise das wie oben beschriebene bevorzugte zeolithische Material und/oder zusätzliche Komponente (A1) und/oder (A2) und/oder (A3) zuzugeben. Beispielsweise bevorzugt ist die weitere Zugabe von Komponente (D6) wie beispielsweise von Glasfasern, wobei die Glasfasern beispielsweise in Form von Glasgeweben, Glasmatten, Glasvliesen und/oder Glasseidenrovings oder geschnittener Glasseide aus alkaliarmem E-Glas mit einem Durchmesser von 5 bis 200 μm, vorzugsweise 8 bis 50 μm, eingesetzt werden können.

Demgemäß betrifft die vorliegende Erfindung auch einen Formkörper, der mindestens 10 Gew.-%, bevorzugt mindestens 20 Gew.-%, weiter bevorzugt mindestens 50 Gew.-% und insbesondere bevorzugt mindestens 90 Gew.-% wie beispielsweise 90, 91, 92, 93, 94, 95, 96, 97, 98, 99 oder 100 Gew.-% der erfindungsgemäßen Formmasse enthält. Ein erfindungsgemäß besonders bevorzugter Formkörper ist ein Granulat, das zu 100 Gew.-% die erfindungsgemäße Formmasse enthält. Weiter bevorzugt weisen die Granulatteilchen eine Größe im Bereich von 1 bis 6 mm, weiter bevorzugt von 1,5 bis 5 mm und insbesondere bevorzugt von 2 bis 4 mm auf. Die Geometrie der Formkörper ist im Wesentlichen keinen Beschränkungen unterworfen und kann, je nach spezifischer Herstellung, beispielsweise zylindrisch, linsenförmig, kugelförmig oder auch anders ausgestaltet sein.

Besonders bevorzugt werden im Rahmen der vorliegenden Erfindung Formkörper bereitgestellt, die eine Formaldehydemission von höchstens 8 ppm, bevorzugt von höchstens 7 ppm, weiter bevorzugt von höchstens 6 ppm und insbesondere von höchstens 5 ppm, bestimmt nach VDA 275, aufweisen.

Die Formmasse gemäß der vorliegenden Erfindung und die erfinderische Verwendung von zeolithischen Materialien, wie oben beschrieben, zeichnen sich darüber hinaus dadurch aus, dass neben der Verringerung der Formaldehyd-Emission gleichzeitig in synergistischer Art und Weise eine weitere positive Wirkung des zeolithischen Materials, die nukleierende Wirkung bei der Herstellung einer Formmasse, genutzt wird.

Daher betrifft die vorliegende Erfindung weiterhin die Verwendung eines zeolithischen Materials, insbesondere eines wie oben als bevorzugt beschriebenen zeolithischen Materials, zur Verringerung der Formaldehyd-Emission einer Polyoxymethylen enthaltenden Formmasse und gleichzeitig als Nukleierungsmittel bei der Herstellung der Formmasse.

Weiter zeichnen sich die erfindungsgemäßen Formmassen und Formkörper durch eine geringe Formaldehyd-Emission bei gleichzeitigen guten mechanischen Eigenschaften aus.

Weiter zeichnen sich die erfindungsgemäßen Formmassen und Formkörper durch eine geringe Formaldehyd-Emission bei gleichzeitiger guter thermischer Stabilität aus.

Weiter zeichnen sich die erfindungsgemäßen Formmassen und Formkörper durch eine geringe Formaldehyd-Emission bei gleichzeitiger guter thermischer Stabilität und bei gleichzeitigen guten mechanischen Eigenschaften aus.

Bevorzugte Formkörper wie beispielsweise die beschriebenen bevorzugten Granulate zeichnen sich beispielsweise durch einen geringen Massenverlust von höchstens 0,5 %, weiter bevorzugt von höchstens 0,4 % wie beispielsweise von 0,1 %, 0,2 %, 0,3 % oder 0,4 %, wobei das Granulat für 2 h bei einer Temperatur von 222 °C unter Stickstoffatmosphäre gelagert wird, aus.

Bevorzugte Formkörper wie beispielsweise die beschriebenen bevorzugten Granulate zeichnen sich beispielsweise weiter durch einen geringen Massenverlust von höchstens 1,5 %, weiter bevorzugt von höchstens 1,4 % wie beispielsweise von 1,0 %, 1,1 %, 1,2 %, 1,3 % oder 1,4 %, wobei das Granulat für 2 h bei einer Temperatur von 222 °C unter Luft gelagert wird, aus.

Weiter weisen die Formkörper gemäß bevorzugten Ausführungsformen bis zu 50 Gew.-% der Komponente (A2) und/oder Komponente (A3) und/oder bis zu 40 Gew.-% der Komponente (D6) auf.

Demgemäß betrifft die vorliegende Erfindung auch ein wie oben beschriebenes Verfahren, zusätzlich umfassend Verarbeiten der Formmasse zu einem Formkörper.

Demgemäß betrifft die vorliegende Erfindung auch einen Formkörper, erhältlich durch ein wie oben beschriebenes Verfahren, mit einer Formaldehyd-Emission von höchstens 8 ppm, bevorzugt von höchstens 7 ppm, bestimmt über VDA 275.

Weiter betrifft die vorliegende Erfindung eine wie oben beschriebene Formmasse zur Herstellung eines Formkörpers, wobei der Formkörper ein Spielzeug oder ein Teil eines Spielzeugs, ein Auto-, Flugzeug- oder Schiffzubehörteils oder ein Teil eines Auto-, Flugzeug- oder Schiffzubehörteils, eine Verpackung oder ein Teil einer Verpackung, ein Behälter oder ein Teil eines Behälters, ein Haushaltsgerät oder ein Teil eines Haushaltsgeräts, ein medizinisches Gerät oder ein Teil eines medizinischen Geräts, ein Bestandteil eines kosmetischen Artikels, ein Teil einer elektrischen oder

elektronischen Vorrichtung oder eine beim Hausbau verwendete Vorrichtung oder ein Teil einer solchen ist.

Beispiele für spezifische Verwendungen sind beispielsweise Klipse, Befestigungselemente, Schnappverbindungen, Federelemente, Lautsprechergitter, Ventilkörper für WC-Spülkästen, Duschköpfe, Rollen, Hebel, Gleit- oder Führungslager, Führungen für beispielsweise Kfz-Schiebedächer, Zahnräder, Getriebekomponenten, Verstellantriebe, Lebensmittelverpackungen, Kosmetikverpackungen und Kosmetikverstellmechanismen wie beispielsweise bei Lippenstiften oder Deodorantien, Kaffee-Brüheinheiten, Transportkettenglieder, Tankeinbauteile wie beispielsweise Flansch, Schwalltopf oder Tankdeckel, Rahmen für Kraftstofffilter, Beregnungssysteme, Schalter, Kugelschalen für Gelenke, Pendelstützen für Kfz, Rückschlagventile, Scheibenwaschdüsen für Kfz, Innenrohre für Bowdenzügen, Halterungen für Sonnenblenden für Kfz, Drucktasten, Aufwickelmechanismen für Sicherheitsgurte, Mahlwerke, Outsert-Chassis, Stuhlrückenlehnen, Gaszähler (Messkammergehäuse und Funktionsteile), Isoliermassen, Füllmassen, Fenster- oder Türbeschläge, Computerteile, Druckerteile, Zierartikel.

Im folgenden sind bevorzugte erfindungsgemäße Ausführungsformen, d.h. bevorzugte Formmassen, Formkörper, Verfahren und Verwendungen aufgeführt, die sich aus den folgenden Ausführungsformen 1 bis 31 einschließlich der explizit angegebenen Kombinationen ergeben:

1. Formmasse, enthaltend 10 bis 99,999 Gew.-% mindestens eines Polyoxymethylens als Komponente (A1) und von 0,001 bis 10 Gew.-%, bezogen auf das Gewicht der in der Formmasse enthaltenen Komponente (A1), mindestens eines zeolithischen Materials mit einem Porendurchmesser im Bereich von 0,3 bis 0,5 nm, bestimmt gemäß DIN 66134 und DIN 66135, wobei die Partikel des zeolithischen Materials eine Größe im Bereich von 3 bis 7 μm, bestimmt gemäß ISO 13320, aufweisen.

2. Formmasse nach Ausführungsform 1, wobei der Porendurchmesser des zeolithischen Materials im Bereich von 0,37 bis 0,43 nm liegt.

3. Formmasse nach Ausführungsform 1 oder 2, wobei die Partikel des zeolithischen Materials eine Größe im Bereich von 4 bis 6 μm, bestimmt gemäß ISO 13320, aufweisen.

4. Formmasse nach einer der Ausführungsformen 1 bis 3, enthaltend von 0,05 bis 0,50 Gew.-% des zeolithischen Materials, bezogen auf das Gewicht der in der Formmasse enthaltenen Komponente (A1).

5. Formmasse nach einer der Ausführungsformen 1 bis 4, wobei das zeolithische Material ein molares Si:Al-Verhältnis, berechnet als molares Verhältnis $SiO_2$:$Al_2O_3$, im Bereich von bis zu 5:1 aufweist.

6. Formmasse nach einer der Ausführungsformen 1 bis 5, wobei mindestens 90 % der Primärkristalle des zeolithischen Materials eine Größe im Bereich von 1,5 bis 3,0 μm, bestimmt über SEM, aufweisen.

7. Formmasse nach einer der Ausführungsformen 1 bis 6, wobei mindestens 75 Gew.-% des zeolithischen Materials nicht in der H-Form vorliegen.

8. Formmasse nach einer der Ausführungsformen 1 bis 7, wobei das zeolithische Material ein molares Si:Al-Verhältnis, berechnet als molares Verhältnis $SiO_2$:$Al_2O_3$, im Bereich von 1:1 bis 2:1 aufweist, mindestens 95 % der Primärkristalle des zeolithischen Materials eine Größe im Bereich von 1,75 bis 2,75 μm, bestimmt über SEM, aufweisen und mindestens 95 Gew.-% des zeolithischen Materials nicht in der H-Form vorliegen.

9. Formmasse nach einer der Ausführungsformen 1 bis 8, wobei die Formmasse keine Spiro-Verbindung, umfassend mindestens einen Triazin-Ring, enthält.

10. Formmasse nach einer der Ausführungsformen 1 bis 9, wobei die Formmasse keine organische Verbindung mit einer monodispersen Molmassenverteilung, umfassend mindestens eine primäre Aminogruppe und/oder mindestens eine sekundäre Aminogruppe, enthält.

11. Formmasse nach einer der Ausführungsformen 1 bis 10, zusätzlich als Komponente (D 1) enthaltend 0,005 bis 2 Gew.-%, bezogen auf das Gewicht der Komponente (A1), eines Stabilisators.

12. Formmasse nach Ausführungsform 11, wobei die Komponente (D1) ein sterisch gehindertes Phenol ist und das Gewichtsverhältnis von Phenol zu zeolithischem Material im Bereich von 7:1 bis 1:2 liegt.

13. Formmasse nach einer der Ausführungsformen 1 bis 12, zusätzlich als Komponente (D2) enthaltend von 0,001

bis 2 Gew.-%, bezogen auf das Gewicht der Komponente (A1), mindestens eines Polyamids.

14. Formmasse nach einer der Ausführungsformen 1 bis 13, zusätzlich als Komponente (D3) enthaltend von 0,002 bis 2 Gew.-%, bezogen auf das Gewicht der Komponente (A1), eines Erdalkalisilikats und/oder eines Erdalkaliglycerophosphats.

15. Formmasse nach einer der Ausführungsformen 1 bis 14, zusätzlich als Komponente (D4) enthaltend von 0,01 bis 5 Gew.-%, bezogen auf das Gewicht der Komponente (A1),

- mindestens eines Esters, erhältlich durch Umsetzung mindestens einer gesättigten oder ungesättigten aliphatischen Carbonsäure mit 10 bis 40 C-Atomen mit mindestens einem Polyol oder mindestens einem aliphatischen gesättigten Alkohol mit 2 bis 40 C-Atomen,
  und/oder
- mindestens eines Amids, erhältlich durch Umsetzung mindestens einer gesättigten oder ungesättigten aliphatischen Carbonsäure mit 10 bis 40 C-Atomen mit einem Amin mit 2 bis 20 C-Atomen;
  und/oder
- mindestens eines Ethers, erhältlich durch Umsetzung mindestens eines Alkohols mit mindestens einem Ethylenoxid.

16. Formmasse nach einer der Ausführungsformen 1 bis 15, zusätzlich als Komponente (C) enthaltend von 0,01 bis 5 Gew.%, bezogen auf das Gewicht der Komponente (A1), Talkum.

17. Formmasse nach einer der Ausführungsformen 1 bis 16, zusätzlich als Komponente (D8) enthaltend von 0,01 bis 5 Gew.-%, bezogen auf das Gewicht der Komponente (A1), Weißöl.

18. Formmasse nach einer der Ausführungsformen 1 bis 17, wobei das mindestens eine Polyoxymethylen mindestens ein Polyoxymethylen-Homopolymer oder mindestens ein Polyoxymethylen-Copolymer oder eine Mischung aus mindestens einem Polyoxymethylen-Homopolymer und mindestens ein Polyoxymethylen-Copolymer ist.

19. Formmasse nach einer der Ausführungsformen 1 bis 18, zusätzlich als Komponente (A2) enthaltend von bis zu 55 Gew.-%, bezogen auf das Gewicht der Komponente (A1), mindestens ein Polyurethan.

20. Formmasse nach Ausführungsform 19, wobei das Polyurethan ein thermoplastisches Polyester-Polyurethan mit einer Shore-Härte A, bestimmt gemäß DIN 53505, im Bereich von 75 bis 90 ist.

21. Formmasse nach einer der Ausführungsformen 1 bis 20 mit einer Formaldehyd-Emission von höchstens 8 ppm, bevorzugt_von höchstens 7 ppm, bestimmt gemäß VDA 275.

22. Verwendung eines zeolithischen Materials als Bestandteil einer mindestens ein Polyoxymethylen enthaltenden Formmasse zur Verringerung der Formaldehyd-Emission der Formmasse.

23. Verwendung nach Ausführungsform 22, wobei das zeolithische Material einen Porendurchmesser im Bereich von 0,3 bis 0,5 nm, bestimmt gemäß DIN 66134 und DIN 66135, aufweist.

24. Verwendung nach Ausführungsform 22 oder 23, wobei die Partikel des zeolithischen Materials eine Größe im Bereich von 3 bis 7 μm, bestimmt gemäß ISO 13320, aufweisen.

25. Verwendung nach einer der Ausführungsformen 22 bis 24 zur Verringerung der Formaldehyd-Emission der Formmasse auf einen Wert von höchstens 8 ppm, bevorzugt von höchstens 7 ppm, bestimmt gemäß VDA 275.

26. Verwendung nach einer der Ausführungsformen 22 bis 25, wobei keine organische Verbindung mit einer monodispersen Molmassenverteilung mit einer primären Aminogruppe und/oder sekundären Aminogruppe als Bestandteil der Formmasse zur Verringerung der Formaldehyd-Emission der Formmasse eingesetzt wird.

27. Verfahren zur Herstellung einer Formmasse nach einer der Ausführungsformen 1 bis 21, umfassend Vermischen mindestens eines Polyoxymethylens mit einem zeolithischen Material mit einem Porendurchmesser im Bereich von 0,3 bis 0,5 nm, bestimmt gemäß DIN 66134 und DIN 66135, wobei die Partikel des zeolithischen Materials eine Größe im Bereich von 3 bis 7 μm, bestimmt gemäß ISO 13320, aufweisen.

28. Verfahren nach Ausführungsform 27, umfassend Extrudieren einer Masse, enthaltend Polyoxymethylen und zeolithisches Material, bei einer Temperatur im Bereich von 100 bis 270 °C.

29. Verfahren nach Ausführungsform 27 oder 28, zusätzlich umfassend Verarbeiten der Formmasse zu einem Formkörper.

30. Formkörper, erhältlich durch ein Verfahren gemäß Ausführungsform 29, mit einer Formaldehyd-Emission von höchstens 8 ppm, bevorzugt von höchstens 7 ppm, bestimmt über VDA 275.

31. Verwendung einer Formmasse gemäß einer der Ausführungsformen 1 bis 21 oder einer Formmasse, erhältlich durch ein Verfahren gemäß Ausführungsform 27 oder 28, zur Herstellung eines Formkörpers, wobei der Formkörper ein Spielzeug oder ein Teil eines Spielzeugs, ein Auto-, Flugzeug- oder Schiffzubehörteils oder ein Teil eines Auto-, Flugzeug- oder Schiffzubehörteils, eine Verpackung oder ein Teil einer Verpackung, ein Behälter oder ein Teil eines Behälters, ein Haushaltsgerät oder ein Teil eines Haushaltsgeräts, ein medizinisches Gerät oder ein Teil eines medizinischen Geräts, ein Bestandteil eines kosmetischen Artikels, ein Teil einer elektrischen oder elektronischen Vorrichtung oder eine beim Hausbau verwendete Vorrichtung oder ein Teil einer solchen ist.

Die Figuren 1 bis 9 und die Beispiele illustrieren die vorliegende Erfindung.

Figurenbeschreibung

Fig. 1: zeigt einen Vergleich der Partikelgrößen eines erfindungsgemäßen zeolithischen Materials und eines Vergleichsmaterials. Die gezeigten Kurven wurden gemäß ISO 13320 ermittelt. Auf der Rechtswertachse ist in logarithmischer Auftragung die Partikelgröße in μm aufgetragen. Auf der Hochwertachse ist in linearer Auftragung der Durchgang der Teilchen in % aufgetragen.
Das erfindungsgemäße zeolithische Material ist ein Zeolith in der Natrium-Form vom LTA-Typ mit einem molaren Si:Al-Verhältnis, berechnet als $SiO_2$:$Al_2O_3$, von 1:1, 8-Ring-Poren und einem Porendurchmesser, bestimmt über DIN 66134 und DIN 66135, von 0,41 nm. Das Material ist kommerziell erhältlich (Purmol 4ST der Firma Zeochem, CH). In der graphischen Auftragung entspricht diesem Material das Symbol □.
Das Vergleichsmaterial stellt ebenfalls einen Zeolith in der Natrium-Form vom LTA-Typ mit einem molaren Si:Al-Verhältnis, berechnet als $SiO_2$:$Al_2O_3$, von 1:1, 8-Ring-Poren und einem Porendurchmesser, bestimmt über DIN 66134 und DIN 66135, von ungefähr 0,4 nm dar. Das Material ist kommerziell erhältlich (Zeosorb 42 der Firma Tricat Zeolites GmbH, Bitterfeld, Deutschland). In der graphischen Auftragung entspricht diesem Material das Symbol Δ.

Fig. 2: zeigt ein erfindungsgemäßes Material (Purmol 4ST, siehe Beschreibung zu Fig. 1) in einer SEM-Aufnahme in einer Vergrößerung von 2.000:1.

Fig. 3: zeigt ein erfindungsgemäßes Material (Purmol 4ST, siehe Beschreibung zu Fig. 1) in einer SEM-Aufnahme in einer Vergrößerung von 10.000:1.

Fig. 4: zeigt ein erfindungsgemäßes Material (Purmol 4ST, siehe Beschreibung zu Fig. 1) in einer SEM-Aufnahme in einer Vergrößerung von 10.000:1.

Fig. 5: zeigt ein Vergleichsmaterial (Zeosorb 42, siehe Beschreibung zu Fig. 1) in einer SEM-Aufnahme in einer Vergrößerung von 2.000:1.

Fig. 6: zeigt ein Vergleichsmaterial (Zeosorb 42, siehe Beschreibung zu Fig. 1) in einer SEM-Aufnahme in einer Vergrößerung von 10.000:1.

Fig. 7: zeigt ein Vergleichsmaterial (Zeosorb 42, siehe Beschreibung zu Fig. 1) in einer SEM-Aufnahme in einer Vergrößerung von 10.000:1.

Fig. 8: zeigt das im Rahmen der vorliegenden Erfindung zur Bestimmung der Formaldehyd-Emission gemäß VDA 275 und zur Herstellung der Platten verwendete Plattenwerkzeug. Auf der rechten Seite der Fig. 8 ist das Plattenwerkzeug in einem Schnitt von der Seite dargestellt. Oben und unten befinden sich die beiden Kavitäten,

die durch den sich von rechts nach links erweiternden, kegelstumpfförmigen Einlass und die beiden Zuführöffnungen miteinander verbunden sind. Durch den auf der rechten Seite der Fig. 8 abgebildeten, sich von rechts nach links erweiternden kegelförmigen Einlass wird das zu Platten auszuformende Material eingespritzt und verteilt sich nach oben und unten in den beiden Zuführöffnungen. Diese Zuführöffnungen sind auf der linken Seite der Fig. 8 in der mittig angeordneten, gestrichelt dargestellten Struktur als die sich zu den beiden Kavitäten oben und unten hin erweiternden dreieckigen Ausformungen abgebildet. Auf der linken Seite der Fig. 8 ist das Plattenwerkzeug in der Aufsicht dar gestellt. Sämtliche Zahlenangaben verstehen sich als mm-Angaben.

Fig. 9: zeigt im Seitenschnitt die zur Bestimmung der Thermostabilität (siehe untenstehender Abschnitt "Beispiele - Messverfahren - Thermostabilität") verwendete Glas-Apparatur mit zwei Öffnungen oben und auf der rechten Seite. Sämtliche Zahlenangaben verstehen sich als mm-Angaben.

**Beispiele**

**Weitere Messverfahren**

**Molmassenbestimmung**

Die Molmassenbestimmung der Polymere erfolgte durch Größenausschlusschromatographie in einer SEC-Apparatur. Diese SEC-Apparatur bestand aus folgender Trennsäulenkombination: eine Vorsäule der Länge 5 cm und des Durchmessers 7,5 mm, eine zweite lineare Säule der Länge 30 cm und des Durchmessers 7,5 mm. Trennmaterial war in beiden Säulen PL-HFIP-Gel der Firma Polymer Laboratories. Als Detektor wurde ein Differentialrefraktometer der Firma Agilent G1362 A verwendet. Eine Mischung aus Hexafluoroisopropanol mit 0,05 % Trifluoressigsäure-Kaliumsalz diente als Eluent. Die Durchflussgeschwindigkeit betrug 0,5 ml/min bei einer Säulentemperatur von 40 °C. 60 Mikroliter einer Lösung der Konzentration 1,5 g Probe pro 1 Liter Eluent wurden injiziert. Diese Probenlösung wurde zuvor über Millipor Millex GF (Porenweite 0,2 Mikrometer) filtriert. Die Kalibrierung erfolgte mit eng verteilten PMMA-Standards der Firma PSS (Mainz, DE) mit Molekulargewichten von M = 505 bis 2.740.000 g/mol.

**Thermostabilität**

GV $N_2$: Der Gewichtsverlust (GV) in Prozent einer Probe aus 1,2 g Granulat bei 2-stündigem Erhitzen auf 222 °C unter Stickstoff.

GV Luft: Gewichtsverlust (GV) in Prozent einer Probe aus 1,2 g Granulat bei 2-stündigem Erhitzen auf 222 °C unter Luft. Zur verwendeten Apparatur siehe Fig. 9 und die diesbezügliche Figurenbeschreibung.

Zu Beginn der Bestimmung von GV wurde die dafür verwendete Waage justiert. In einem Doppelmantelgefäß, bestehend aus zwei ineinander gestellten Reagenzgläsern (normales Reagenzglas, 100 x 10 mm; speziell angefertigtes, dickwandiges Reagenzglas 100 x 12,5 mm) wurde die Probe mit einer Genauigkeit von 0,1 mg eingewogen.

An dem oberen Wulst des äußeren Glases wurde ein etwa 400 mm langer dünner Kupferdraht befestigt. Mit diesem wurden die Doppelmantelgefäße in eine spezielle Apparatur eingehängt (siehe Fig. 9 sowie die diesbezügliche Figurenbeschreibung). Bei der GV-Bestimmung unter Stickstoff geschah dies zur Anpassung der speziellen Atmosphäre für 15 min in der oberen Apparaturhälfte, also ohne Temperaturerhöhung. Anschließend wurden die Reagenzgläser auf den Boden abgesenkt und dort für 2 h bei 222 °C belassen. Der Stickstoffstrom betrug 15 l/h und wurde bei jedem einzelnen Reagenzglas mit Hilfe eines Rotas kontrolliert.

Nach Ablauf von 2 h wurden die Doppelmantelgefäße mit Hilfe des Kupferdrahtes aus der Apparatur geholt und für 20 bis 25 min an der Luft abgekühlt. Dann wurde auf der Waage zurückgewogen und GV gemäß

$$\text{GV [\%]} = (\text{Verlust} \times 100 / \text{Einwaage})$$

berechnet.

**Zug-E-Modul**

Die Bestimmung des Zug-E-Moduls erfolgte gemäß ISO 527 (23 °C; 1 mm/min).

**Streckspannung (Yield-Stress)**

Die Bestimmung der Streckspannung erfolgte gemäß ISO 527 (23 °C, 50 mm/min).

**DSC / Kristallisationsgeschwindigkeit**

Die Kristallisationstemperatur $T_{KP}$ und die Kristallisationsgeschwindigkeit wurden gemäß DIN EN 53765 bestimmt.

**Eingesetzte Komponenten für die Beispiele gemäß den Tabellen 1 bis 4**

**Komponente (A1)**

Polyoxymethylencopolymerisat aus 96,2 Gew.-% Trioxan und 3,8 Gew.-% Butandiolformal. Das Produkt enthielt noch ungefähr 6-8 Gew.-% nicht umgesetztes Trioxan und 5 Gew.-% thermisch instabile Anteile. Nach Abbau der thermisch instabilen Anteile hatte das Copolymer eine Schmelzvolumenrate von 7,5 $cm^3$/10 min (190°C/2,16 kg, nach ISO 1133).

**Zeolithisches Material**

B1: Purmol 4ST der Firma Zeochem AG, Uetikon, CH B2: 6278/03-48: Zn-MOF5, ein zinkhaltiges, poröses kristallines Material; Oberfläche 2380 $m^2$/g; Porenvolumen von 0,84 ml/g; durchschnittliche Porengröße 2,3 nm

B3: Zeocat ZZ/0176 der Firma Zeochem AG, Uetikon, CH, MFI-Struktur, Natriumform, Si:Al-Verhältnis = 420, 10-Ring-Poren, Porendurchmesser 0,55 nm

B4: Zeocat Z6-02-03 der Firma Zeochem AG, Uetikon, CH, FAU-Struktur, Natriumform, Si:Al-Verhältnis = 2,75, 12-Ring-Poren, Porendurchmesser 0,74 nm

B5: Zeocat Z6-01-01 der Firma Zeochem AG, Uetikon, CH, FAU-Struktur, Natriumform, Si:Al-Verhältnis = 2,7 - 3, 12-Ring-Poren, Porendurchmesser 0,74 nm

B6: Zeocat PZ 2/25 der Firma Zeochem AG, Uetikon, CH, MFI-Struktur, Natriumform, Si:Al-Verhältnis = 12, 10-Ring-Poren, Porendurchmesser 0,55 nm

B7: Zeosorb 42; siehe Beschreibung zu Fig. 1

B8: Zeocat PZ 2/50 der Firma Zeochem AG, Uetikon, CH, MFI-Struktur, H-Form, Si:Al-Verhältnis = 12, 10-Ring-Poren, Porendurchmesser 0,55 nm

B9: FM-8 der Firma Zeochem AG, Uetikon, CH, MOR-Struktur, Natriumform, Si:Al-Verhältnis = 6,12-Ring-Poren, Porendurchmesser 0,7 nm

**Komponente (C)**

Talkum (Mikro-Talc I.T. Extra)

| Teilchengröße | % |
|---|---|
| < 20 μm | 100 |

(fortgesetzt)

| | |
|---|---|
| < 10 μm | 99 |
| < 5 μm | 85 |
| < 3 μm | 60 |
| < 2 μm | 43 |

bestimmt mittels Sedimentationsanalyse.

**Komponente (D1)**

Irganox® 245 der Firma Ciba

**Komponente (D2)**

Polyamid-Oligomeres mit einem Molekulargewicht von etwa 3.000 g/mol, hergestellt aus Caprolactam, Hexamethylendiamin, Adipinsäure und Propionsäure (als Molekular gewichtsregler) in Anlehnung an die Beispiel 5-4 der US 3,960,984 ("PA-dicapped"): im Unterschied zu diesem Beispiel wurde statt Essigsäure Propionsäure verwendet.
Die molaren Verhältnisse HMD : Adipinsäure : Caprolactam : Propionsäure betrugen 13,1 : 11,2 : 17 : 4,2, während gemäß dem Beispiel 5-4 der US 3,960,984 die molaren Verhältnisse HMD : Adipinsäure : Caprolactam : Essigsäure bei 13,1 : 12,1 : 13,6 : 2 lagen.
Aufgrund des vergleichsweise hohen Propionsäureanteils konnte ein deutlich geringerer Anteil von 18 bis 35 mval/kg an freien Amino-Endgruppen erreicht werden (Beispiel 5-4 der US 3,960,984: 62,5 equiv. / 1 Mio g).

**Komponente (D3)**

Synthetisches Mg-Silikat (Ambosol®, Firma PQ France) mit folgenden Eigenschaften:

| | |
|---|---|
| Gehalt an MgO | ≥ 14,8 Gew.-% |
| Gehalt an $SiO_2$ | ≥ 59 Gew.-% |
| Verhältnis $SiO_2$ : MgO | 2,7 mol/mol |
| Schüttdichte | 20 bis 30 g/100 ml |
| Glühverlust | < 25 Gew.-% |

**Komponente (D4)**

Loxiol® P 1206 der Firma Cognis (Glycerindistearat)

**Eingesetzte Komponenten für die Beispiele gemäß Tabelle 5**

**Komponente (A1)**

Polyoxymethylencopolymerisat aus 96,2 Gew.-% Trioxan und 3,5 Gew.-% Ethandiolformal. Das Produkt enthielt noch ungefähr 2-5 Gew.-% nicht umgesetztes Trioxan und 5 Gew.-% thermisch instabile Anteile. Nach Abbau der thermisch instabilen Anteile hatte das Copolymer eine Schmelzvolumenrate von 7,5 $cm^3$/10 Min. (190°C/2,16 kg, nach ISO 1133).

**Zeolithisches Material**

B1: Purmol 4ST der Firma Zeochem AG, Uetikon, CH

**Komponente (D1)**

Irganox® 245 der Firma Ciba

**Komponente (D2)**

Polyamid Ultramid® C 3101 der Firma BASF AG, Ludwigshafen

**Komponente (D4)**

Loxiol® P 1206 der Firma Cognis (Glycerindistearat)

**Komponente (D8)**

Weißöl

**Herstellung der Formmassen**

Zur Herstellung der Formmassen wurde die Komponente (A1) mit den in der Tabelle angegebenen Mengen der Komponenten (Bi), (C) und (Di) in einem Trockenmischer bei einer Temperatur von 23 °C gemischt. Die so erhaltene Mischung wurde in einem Doppelschneckenextruder mit Entgasungsvorrichtung (ZSK 30 der Firma Werner & Pfleiderer) eingebracht, bei 230 °C homogenisiert, entgast und das homogenisierte Gemisch durch eine 3 mm-Düse als Strang ausgepresst und mittels eines Stranggranulators der Firma Scheer granuliert. Das zylindrische Granulat war 3 mm lang und hatte einen Durchmesser von 2,5 mm.

Anschließend wurde eine Nachentgasung durchgeführt, wobei 6 kg POM-Granulat bei 145 °C im Schachttrockner mit einem Luftdurchfluss von 0,6 m/s bei einem Volumenstrom von 12 1/h und einer Wasserdampfmenge von 50 g/(kg Luft) über 5 h im Gegenstrom behandelt wurden.

**Formkörper und experimentelle Ergebnisse**

Die Zusammensetzungen der Formkörper und die Ergebnisse der Messungen sind den Tabellen 1 bis 5 zu entnehmen.

**Tabelle 1**

| Ansatz: je kg POM (= Komponente (A1)) | | | | | | | | |
|---|---|---|---|---|---|---|---|---|
| D1 [Gew.-%] | 0,3500 | 0,3500 | 0,3500 | 0,3500 | 0,3500 | 0,3500 | 0,3500 | 0,3500 |
| D2 [Gew.-%] | 0,0400 | 0,0400 | 0,0400 | 0,0400 | 0,0400 | 0,0400 | 0,0400 | 0,0400 |
| D3 [Gew.-%] | 0,0500 | 0,0500 | 0,0500 | 0,0500 | 0,0500 | 0,0500 | 0,0500 | 0,0500 |
| D4 [Gew.-%] | 0,1500 | 0,1500 | 0,1500 | 0,1500 | 0,1500 | 0,1500 | 0,1500 | 0,1500 |
| C [Gew.-%] | 0,1250 | | 0,1250 | | 0,1250 | | | |
| B1[Gew.-%] | | 0,100 | 0,100 | 0,200 | 0,200 | 0,250 | 0,350 | 0,400 |
| **Therm. Test unter $N_2$ (GV/%)** | 0,09 | 0,01 | 0,02 | 0,02 | 0,01 | 0,01 | 0,01 | 0,04 |
| **Therm. Test in Luft (GV/%)** | 1,63 | 1,30 | 1,32 | 1,24 | 1,29 | 1,40 | 1,26 | 1,34 |
| **VDA 275 [ppm]** | 7 | 4 | 5 | 3 | 4 | 2 | 3 | 3 |

**Tabelle 2**

| Ansatz: je kg POM (= Komponente (A1)) | | | | | | | | |
|---|---|---|---|---|---|---|---|---|
| D1 [Gew.-%] | 0, 3500 | 0, 3500 | 0, 3500 | 0, 3500 | 0, 3500 | 0, 3500 | 0, 3500 | 0,3500 |
| D2[Gew.-%] | 0,0400 | 0,0400 | 0,0400 | 0,0400 | 0,0400 | 0,0400 | 0,0400 | 0,0400 |
| D3 [Gew.-%] | 0,0500 | 0,0500 | 0,0500 | 0,0500 | 0,0500 | 0,0500 | 0,0500 | 0,0500 |
| D4 [Gew.-%] | 0,1500 | 0,1500 | 0,1500 | 0,1500 | 0,1500 | 0,1500 | 0,1500 | 0,1500 |
| C [Gew.-%] | 0,1250 | 0,1250 | 0,1250 | 0,1250 | 0,1250 | 0,1250 | 0,1250 | 0,1250 |

(fortgesetzt)

| Ansatz: je kg POM (= Komponente (A1)) | | | | | | | | |
|---|---|---|---|---|---|---|---|---|
| B1 [Gew.-%] | | 0,1 | | | | | | |
| B2 [Gew.-%] | | | 0,1 | | | | | |
| B3 [Gew.-%] | | | | 0,1 | | | | |
| B4 [Gew.-%] | | | | | 0,1 | | | |
| B5 [Gew.-%] | | | | | | 0,1 | | |
| B6 [Gew.-%] | | | | | | | 0,1 | |
| B7 [Gew.-%] | | | | | | | | 0,1 |
| **Therm. Test unter $N_2$ (GV/%)** | 0,17 | 0,04 | 0,50 | 0,13 | 0,62 | 0,16 | 0,17 | 0,13 |
| **Thertn.Test in Luft (GV/ %)** | 1,54 | 1,38 | 3,37 | 1,40 | 2,37 | 1,41 | 1,51 | 1,33 |
| **VDA 275 [ppm]** | 8 | 5 | 13 | 9 | 80 | 18 | 21 | 10 |

**Tabelle 3**

| Ansatz: je kg POM (= Komponente A) | | | | | | | |
|---|---|---|---|---|---|---|---|
| D1 [Gew.-%] | 0,350 | 0,350 | 0,350 | 0,350 | 0,350 | 0,350 | 0,350 |
| D4 [Gew.-%] | 0,150 | 0,150 | 0,150 | 0,150 | 0,150 | 0,150 | 0,150 |
| B3 [Gew.-%] | | 0,1 | | | | | |
| B1 [Gew.-%] | | | 0,1 | | | | |
| B2 [Gew.-%] | | | | 0,1 | | | |
| B6 [Gew.-%] | | | | | 0,1 | | |
| B8 [Gew.-%] | | | | | | 0,1 | |
| B9 [Gew.-%] | | | | | | | 0,1 |
| DSC ($T_{KP}$) [°C] | 138,9 | 139,5 | 139,4 | 140,7 | 139,1 | 139,5 | 139,3 |
| **Kristallisationsgeschwindigkeit [min]** | 0,883 | 0,843 | 0,883 | 0,607 | 0,730 | 0,773 | 0,823 |
| **Zug-E-Modul [MPa]** | 2.587 | 2.682 | 2.643 | 2.671 | 2.609 | 2.610 | 2.610 |
| **Streckspannung (Yield stress) [MPa]** | 62,19 | 63,95 | 63,05 | 63,76 | 63,52 | 62,63 | 63,18 |

**Bestimmung von Größen von Primärkristallen**

Zur Bestimmung der Größe von Primärkristallen wurden SEM-Aufnahmen der Materialien Purmol 4ST und Zeosorb 42 (siehe oben) angefertigt (vgl. Fig. 2 bis 7). Von jedem Material wurden 30 Teilchen zufällig ausgewählt und vermessen. Dabei ergaben sich die in Tabelle 4 aufgeführten Teilchengrößen:

**Tabelle 4**

| **Teilchen Nr.** | **Purmol 4ST** (Länge in μm) | **Zeosorb 42** (Länge in μm) |
|---|---|---|
| 1 | 2,70 | 1,65 |
| 2 | 2,60 | 1,68 |
| 3 | 1,65 | 1,53 |
| 4 | 2,34 | 1,60 |
| 5 | 2,59 | 1,20 |
| 6 | 2,65 | 1,60 |

(fortgesetzt)

| **Teilchen Nr.** | **Purmol 4ST** (Länge in μm) | **Zeosorb 42** (Länge in μm) |
|---|---|---|
| 7 | 1,14 | 1,68 |
| 8 | 1,69 | 1,43 |
| 9 | 2,79 | 1,39 |
| 10 | 2,23 | 1,31 |
| 11 | 2,46 | 1,12 |
| 12 | 2,19 | 1,37 |
| 13 | 2,28 | 1,37 |
| 14 | 1,83 | 0,97 |
| 15 | 2,41 | 1,36 |
| 16 | 1,94 | 1,32 |
| 17 | 2,42 | 2,09 |
| 18 | 2,15 | 1,31 |
| 19 | 2,35 | 0,84 |
| 20 | 2,88 | 1,38 |
| 21 | 2,78 | 1,88 |
| 22 | 2,25 | 1,65 |
| 23 | 3,27 | 1,19 |
| 24 | 2,56 | 1,68 |
| 25 | 1,84 | 1,23 |
| 26 | 2,68 | 1,01 |
| 27 | 1,74 | 1,94 |
| 28 | 2,54 | 1,02 |
| 29 | 1,47 | 1,25 |
| 30 | 2,13 | 1,70 |
| **Mittelwert** | 2,28 | 1,42 |
| **Standardabweichung** | 0,47 | 0,30 |

**Tabelle 5**

| | |
|---|---|
| A1 [Gew.-%] | 99,22 |
| D1 [Gew.-%] | 0,35 |
| D2 [Gew.-%] | 0,04 |
| D4 [Gew.-%] | 0,15 |
| D8 [Gew.-%] | 0,04 |
| B1 [Gew.-%] | 0,20 |
| **Therm. Test unter $N_2$ (GV / %)** | 0,03 |
| **Therm. Test in Luft (GV / %)** | 1,30 |
| **VDA 275 [ppm]** | 8 |
| **Zug-E-Modul [MPa]** | 2431 |

(fortgesetzt)

| | |
|---|---|
| **Streckspannung (Yield stress) [MPa]** | 59,9 |

**Patentansprüche**

**1.** Formmasse, enthaltend 10 bis 99,999 Gew.-% mindestens eines Polyoxymethylens als Komponente (A1) und von 0,001 bis 10 Gew.-%, bezogen auf das Gewicht der in der Formmasse enthaltenen Komponente (A1), mindestens eines zeolithischen Materials mit einem Porendurchmesser im Bereich von 0,3 bis 0,5 nm, bestimmt gemäß DIN 66134 und DIN 66135, wobei die Partikel des zeolithischen Materials eine Größe im Bereich von 3 bis 7 $\mu$m, bestimmt gemäß ISO 13320, aufweisen.

**2.** Formmasse nach Anspruch 1, wobei der Porendurchmesser des zeolithischen Materials im Bereich von 0,37 bis 0,43 nm liegt.

**3.** Formmasse nach Anspruch 1 oder 2, wobei die Partikel des zeolithischen Materials eine Größe im Bereich von 4 bis 6 $\mu$m, bestimmt gemäß ISO 13320, aufweisen.

**4.** Formmasse nach einem der Ansprüche 1 bis 3, enthaltend von 0,05 bis 0,50 Gew.-% des zeolithischen Materials, bezogen auf das Gewicht der in der Formmasse enthaltenen Komponente (A1).

**5.** Formmasse nach einem der Ansprüche 1 bis 4, wobei das zeolithische Material ein molares Si:Al-Verhältnis, berechnet als molares Verhältnis $SiO_2$:$Al_2O_3$, im Bereich von bis zu 5:1 aufweist.

**6.** Formmasse nach einem der Ansprüche 1 bis 5, wobei mindestens 90 % der Primärkristalle des zeolithischen Materials eine Größe im Bereich von 1,5 bis 3,0 $\mu$m, bestimmt über SEM, aufweisen.

**7.** Formmasse nach einem der Ansprüche 1 bis 6, wobei mindestens 75 Gew.-% des zeolithischen Materials nicht in der H-Form vorliegen.

**8.** Formmasse nach einem der Ansprüche 1 bis 7, wobei das zeolithische Material ein molares Si:Al-Verhältnis, berechnet als molares Verhältnis $SiO_2$:$Al_2O_3$, im Bereich von 1:1 bis 2:1 aufweist, mindestens 95 % der Primärkristalle des zeolithischen Materials eine Größe im Bereich von 1,75 bis 2,75$\mu$m, bestimmt über SEM, aufweisen und mindestens 95 Gew.-% des zeolithischen Materials nicht in der H-Form vorliegen.

**9.** Formmasse nach einem der Ansprüche 1 bis 8, wobei die Formmasse keine Spiro-Verbindung, umfassend mindestens einen Triazin-Ring, enthält.

**10.** Formmasse nach einem der Ansprüche 1 bis 9, wobei die Formmasse keine organische Verbindung mit einer monodispersen Molmassenverteilung, umfassend mindestens eine primäre Aminogruppe und/oder mindestens eine sekundäre Aminogruppe, enthält.

**11.** Formmasse nach einem der Ansprüche 1 bis 10, zusätzlich als Komponente (D1) enthaltend 0,005 bis 2 Gew.-%, bezogen auf das Gewicht der Komponente (A1), eines Stabilisators.

**12.** Formmasse nach Anspruch 11, wobei die Komponente (D1) ein sterisch gehindertes Phenol ist und das Gewichtsverhältnis von Phenol zu zeolithischem Material im Bereich von 7:1 bis 1:2 liegt.

**13.** Formmasse nach einem der Ansprüche 1 bis 12, zusätzlich als Komponente (D2) enthaltend von 0,001 bis 2 Gew.-%, bezogen auf das Gewicht der Komponente (A1), mindestens eines Polyamids.

**14.** Formmasse nach einem der Ansprüche 1 bis 13, zusätzlich als Komponente (D3) enthaltend von 0,002 bis 2 Gew.-%, bezogen auf das Gewicht der Komponente (A1), eines Erdalkalisilikats und/oder eines Erdalkaliglycerophosphats.

**15.** Formmasse nach einem der Ansprüche 1 bis 14, zusätzlich als Komponente (D4) enthaltend von 0,01 bis 5 Gew.-%, bezogen auf das Gewicht der Komponente (A1),

- mindestens eines Esters, erhältlich durch Umsetzung mindestens einer gesättigten oder ungesättigten aliphatischen Carbonsäure mit 10 bis 40 C-Atomen mit mindestens einem Polyol oder mindestens einem aliphatischen gesättigten Alkohol mit 2 bis 40 C-Atomen,
und/oder
- mindestens eines Amids, erhältlich durch Umsetzung mindestens einer gesättigten oder ungesättigten aliphatischen Carbonsäure mit 10 bis 40 C-Atomen mit einem Amin mit 2 bis 20 C-Atomen;
und/oder
- mindestens eines Ethers, erhältlich durch Umsetzung mindestens eines Alkohols mit mindestens einem Ethylenoxid.

**16.** Formmasse nach einem der Ansprüche 1 bis 15, zusätzlich als Komponente (C) enthaltend von 0,01 bis 5 Gew.-%, bezogen auf das Gewicht der Komponente (A1), Talkum.

**17.** Formmasse nach einem der Ansprüche 1 bis 16, zusätzlich als Komponente (D8) enthaltend von 0,01 bis 5 Gew.-%, bezogen auf das Gewicht der Komponente (A1), Weißöl.

**18.** Formmasse nach einem der Ansprüche 1 bis 17, wobei das mindestens eine Polyoxymethylen mindestens ein Polyoxymethylen-Homopolymer oder mindestens ein Polyoxymethylen-Copolymer oder eine Mischung aus mindestens einem Polyoxymethylen-Homopolymer und mindestens ein Polyoxymethylen-Copolymer ist.

**19.** Formmasse nach einem der Ansprüche 1 bis 18, zusätzlich als Komponente (A2) enthaltend von bis zu 55 Gew.-%, bezogen auf das Gewicht der Komponente (A1), mindestens ein Polyurethan.

**20.** Formmasse nach Anspruch 19, wobei das Polyurethan ein thermoplastisches Polyester-Polyurethan mit einer Shore-Härte A, bestimmt gemäß DIN 53505, im Bereich von 75 bis 90 ist.

**21.** Formmasse nach einem der Ansprüche 1 bis 20 mit einer Formaldehyd-Emission von höchstens 8 ppm, bevorzugt von höchstens 7 ppm, bestimmt gemäß VDA 275.

**22.** Verwendung eines zeolithischen Materials als Bestandteil einer mindestens ein Polyoxymethylen enthaltenden Formmasse zur Verringerung der Formaldehyd-Emission der Formmasse.

**23.** Verwendung nach Anspruch 22, wobei das zeolithische Material einen Porendurchmesser im Bereich von 0,3 bis 0,5 nm, bestimmt gemäß DIN 66134 und DIN 66135, aufweist.

**24.** Verwendung nach Anspruch 22 oder 23, wobei die Partikel des zeolithischen Materials eine Größe im Bereich von 3 bis 7$\mu$m, bestimmt gemäß ISO 13320, aufweisen.

**25.** Verwendung nach einem der Ansprüche 22 bis 24 zur Verringerung der Formaldehyd-Emission der Formmasse auf einen Wert von höchstens 8 ppm, bevorzugt von höchstens 7 ppm, bestimmt gemäß VDA 275.

**26.** Verwendung nach einem der Ansprüche 22 bis 25, wobei keine organische Verbindung mit einer monodispersen Molmassenverteilung mit einer primären Aminogruppe und/oder sekundären Aminogruppe als Bestandteil der Formmasse zur Verringerung der Formaldehyd-Emission der Formmasse eingesetzt wird.

**27.** Verfahren zur Herstellung einer Formmasse nach einem der Ansprüche 1 bis 21, umfassend Vermischen mindestens eines Polyoxymethylens mit einem zeolithischen Material mit einem Porendurchmesser im Bereich von 0,3 bis 0,5 nm, bestimmt gemäß DIN 66134 und DIN 66135, wobei die Partikel des zeolithischen Materials eine Größe im Bereich von 3 bis 7$\mu$m, bestimmt gemäß ISO 13320, aufweisen.

**28.** Verfahren nach Anspruch 27, umfassend Extrudieren einer Masse, enthaltend Polyoxymethylen und zeolithisches Material, bei einer Temperatur im Bereich von 100 bis 270 °C.

**29.** Verfahren nach Anspruch 27 oder 28, zusätzlich umfassend Verarbeiten der Formmasse zu einem Formkörper.

**30.** Formkörper, erhältlich durch ein Verfahren gemäß Anspruch 29, mit einer Formaldehyd-Emission von höchstens 8 ppm, bevorzugt von höchstens 7 ppm, bestimmt über VDA 275.

31. Verwendung einer Formmasse gemäß einem der Ansprüche 1 bis 21 oder einer Formmasse, erhältlich durch ein Verfahren gemäß Anspruch 27 oder 28, zur Herstellung eines Formkörpers, wobei der Formkörper ein Spielzeug oder ein Teil eines Spielzeugs, ein Auto-, Flugzeug- oder Schiffzubehörteils oder ein Teil eines Auto-, Flugzeug- oder Schiffzubehörteils, eine Verpackung oder ein Teil einer Verpackung, ein Behälter oder ein Teil eines Behälters, ein Haushaltsgerät oder ein Teil eines Haushaltsgeräts, ein medizinisches Gerät oder ein Teil eines medizinischen Geräts, ein Bestandteil eines kosmetischen Artikels, ein Teil einer elektrischen oder elektronischen Vorrichtung oder eine beim Hausbau verwendete Vorrichtung oder ein Teil einer solchen ist.

## Claims

1. A molding composition, comprising from 10 to 99.999% by weight of at least one polyoxymethylene as component (A1) and from 0.001 to 10% by weight, based on the weight of component (A1) present in the molding composition, of at least one zeolitic material whose pore diameter is in the range from 0.3 to 0.5 nm, determined to DIN 66134 and DIN 66135, where the size of the particles of the zeolitic material is in the range from 3 to 7 μm, determined to ISO 13320.

2. The molding composition according to claim 1, where the pore diameter of the zeolitic material is in the range from 0.37 to 0.43 nm.

3. The molding composition according to claim 1 or 2, where the size of the particles of the zeolitic material is in the range from 4 to 6 μm, determined to ISO 13320.

4. The molding composition according to any of claims 1 to 3, comprising from 0.05 to 0.50% by weight of the zeolitic material, based on the weight of component (A1) present in the molding composition.

5. The molding composition according to any of claims 1 to 4, where the molar Si:Al ratio, calculated as molar $SiO_2$:$Al_2O_3$ ratio, of the zeolitic material is in the range up to 5:1.

6. The molding composition according to any of claims 1 to 5, where the size of at least 90% of the primary crystals of the zeolitic material is in the range from 1.5 to 3.0 μm, determined by way of SEM.

7. The molding composition according to any of claims 1 to 6, where at least 75% by weight of the zeolitic material is not present in the H form.

8. The molding composition according to any of claims 1 to 7, where the molar Si:Al ratio, calculated as molar $SiO_2$:$Al_2O_3$ ratio, of the zeolitic material is in the range from 1:1 to 2:1, the size of at least 95% of the primary crystals of the zeolitic material is in the range from 1.75 to 2.75 μm, determined by way of SEM, and at least 95% by weight of the zeolitic material is not present in the H form.

9. The molding composition according to any of claims 1 to 8, where the molding composition comprises no spiro compound comprising at least one triazine ring.

10. The molding composition according to any of claims 1 to 9, where the molding composition comprises no organic compound having monodisperse molar mass distribution comprising at least one primary amino group and/or at least one secondary amino group.

11. The molding composition according to any of claims 1 to 10, also comprising from 0.005 to 2% by weight, based on the weight of component (A1), of a stabilizer as component (D1).

12. The molding composition according to claim 11, where component (D1) is a sterically hindered phenol and the ratio by weight of phenol to zeolitic material is in the range from 7:1 to 1:2.

13. The molding composition according to any of claims 1 to 12, also comprising from 0.001 to 2% by weight, based on the weight of component (A1), of at least one polyamide as component (D2).

14. The molding composition according to any of claims 1 to 13, also comprising from 0.002 to 2% by weight, based on the weight of component (A1), of an alkaline earth metal silicate and/or of an alkaline earth metal glycerophosphate

as component (D3).

**15.** The molding composition according to any of claims 1 to 14, also comprising from 0.01 to 5% by weight, based on the weight of component (A1),

- of at least one ester obtainable via reaction of at least one saturated or unsaturated aliphatic carboxylic acid having from 10 to 40 carbon atoms with at least one polyol or with at least one saturated aliphatic alcohol having from 2 to 40 carbon atoms,
and/or
- of at least one amide obtainable via reaction of at least one saturated or unsaturated aliphatic carboxylic acid having from 10 to 40 carbon atoms with an amine having from 2 to 20 carbon atoms;
and/or
- of at least one ether obtainable via reaction of at least one alcohol with at least one ethylene oxide,
as component (D4).

**16.** The molding composition according to any of claims 1 to 15, also comprising from 0.01 to 5% by weight, based on the weight of component (A1), of talc as component (C).

**17.** The molding composition according to any of claims 1 to 16, also comprising from 0.01 to 5% by weight, based on the weight of component (A1), of white oil as component (D8).

**18.** The molding composition according to any of claims 1 to 17, where the at least one polyoxymethylene is at least one polyoxymethylene homopolymer or at least one polyoxymethylene copolymer, or a mixture composed of at least one polyoxymethylene homopolymer and at least one polyoxymethylene copolymer.

**19.** The molding composition according to any of claims 1 to 18, also comprising up to 55% by weight, based on the weight of component (A1), of at least one polyurethane as component (A2).

**20.** The molding composition according to claim 19, where the polyurethane is a thermoplastic polyester polyurethane whose Shore hardness A, determined to DIN 53505, is in the range from 75 to 90.

**21.** The molding composition according to any of claims 1 to 20, whose formaldehyde emission is at most 8 ppm, preferably at most 7 ppm, determined to VDA 275.

**22.** The use of a zeolitic material as a constituent of a molding composition comprising at least one polyoxymethylene for reduction of the formaldehyde emission of the molding composition.

**23.** The use according to claim 22, where the pore diameter of the zeolitic material is in the range from 0.3 to 0.5 nm, determined to DIN 66134 and DIN 66135.

**24.** The use according to claim 22 or 23, where the size of the particles of the zeolitic material is in the range from 3 to 7 $\mu$m, determined to ISO 13320.

**25.** The use according to any of claims 22 to 24 for reduction of the formaldehyde emission of the molding composition to a value of at most 8 ppm, preferably at most 7 ppm, determined to VDA 275.

**26.** The use according to any of claims 22 to 25, where no organic compound having monodisperse molar mass distribution and having a primary amino group and/or secondary amino group is used as a constituent of the molding composition for reduction of the formaldehyde emission of the molding composition.

**27.** A process for preparation of a molding composition according to any of claims 1 to 21, comprising mixing of at least one polyoxymethylene with a zeolitic material whose pore diameter is in the range from 0.3 to 0.5 nm, determined to DIN 66134 and DIN 66135, where the size of the particles of the zeolitic material is in the range from 3 to 7 $\mu$m, determined to ISO 13320.

**28.** The process according to claim 27, comprising extrusion of a composition, comprising polyoxymethylene and zeolitic material, at a temperature in the range from 100 to 270°C.

29. The process according to claim 27 or 28, also comprising processing of the molding composition to give a molding.

30. A molding, obtainable via a process according to claim 29, whose formaldehyde emission is at most 8 ppm, preferably at most 7 ppm, determined by way of VDA 275.

31. The use of a molding composition according to any of claims 1 to 21, or of a molding composition, obtainable via a process according to claim 27 or 28, for production of a molding, where the molding is a toy or a part of a toy, or is an automobile accessory, aircraft accessory, or ship accessory, or a part of an automobile accessory, of an aircraft accessory, or of a ship accessory, or is packaging or a part of packaging, or is a container or a part of a container, or is a household device or a part of a household device, or is a medical device or a part of a medical device, or is a constituent of a cosmetic item, or is a part of an electrical or electronic apparatus, or is an apparatus used in house construction or a part of such an apparatus.

## Revendications

1. Matière de moulage, contenant 10 à 99,999 % en poids d'au moins un polyoxyméthylène comme composant (A1) et 0,001 à 10 % en poids, sur base du poids du composant (A1) présent dans la matière de moulage, d'au moins un matériau zéolitique avec un diamètre des pores situé dans la plage allant de 0,3 à 0,5 nm, déterminé selon DIN 66134 et DIN 66135, les particules du matériau zéolitique présentant une taille située dans la plage allant de 3 à 7 μm, déterminée selon ISO 13320.

2. Matière de moulage selon la revendication 1, dans laquelle le diamètre des pores du matériau zéolitique se situe dans la plage allant de 0,37 à 0,43 nm.

3. Matière de moulage selon la revendication 1 ou 2, dans laquelle les particules du matériau zéolitique présentent une taille située dans la plage allant de 4 à 6 μm, déterminée selon ISO 13320.

4. Matière de moulage selon l'une des revendications 1 à 3, contenant 0,05 à 0,50 % en poids du matériau zéolitique, sur base du poids du composant (A1) présent dans la matière de moulage.

5. Matière de moulage selon l'une des revendications 1 à 4, dans laquelle le matériau zéolitique présente un rapport molaire Si:Al, calculé comme le rapport molaire $SiO_2$:$Al_2O_3$, situé dans la plage allant jusqu'à 5:1.

6. Matière de moulage selon l'une des revendications 1 à 5, dans laquelle au moins 90 % des cristaux primaires du matériau zéolitique présentent une taille située dans la plage allant de 1,5 à 3,0 μm, déterminée selon SEM.

7. Matière de moulage selon l'une des revendications 1 à 6, dans laquelle au moins 75 % en poids du matériau zéolitique ne sont pas présents sous la forme H.

8. Matière de moulage selon l'une des revendications 1 à 7, dans laquelle le matériau zéolitique présente un rapport molaire Si:Al, calculé comme le rapport molaire $SiO_2$ : $Al_2O_3$, situé dans la plage allant de 1:1 à 2:1, au moins 95 % des cristaux primaires du matériau zéolitique présentent une taille située dans la plage allant de 1,75 à 2,75 μm, déterminée selon SEM, et au moins 95 % en poids du matériau zéolitique ne sont pas présents sous la forme H.

9. Matière de moulage selon l'une des revendications 1 à 8, dans laquelle la matière de moulage ne contient aucun composé spiro, comprenant au moins un cycle triazine.

10. Matière de moulage selon l'une des revendications 1 à 9, dans laquelle la matière de moulage ne contient aucun composé organique avec une distribution monodispersée de la masse molaire, comprenant au moins un groupe amino primaire et/ou au moins un groupe amino secondaire.

11. Matière de moulage selon l'une des revendications 1 à 10, contenant en outre, comme composant (D1), 0,005 à 2 % en poids, sur base du poids du composant (A1), d'un stabilisant.

12. Matière de moulage selon la revendication 11, dans laquelle le composant (D1) est un phénol stériquement encombré et le rapport pondéral du phénol au matériau zéolitique se situe dans la plage allant de 7:1 à 1:2.

**13.** Matière de moulage selon l'une des revendications 1 à 12, contenant en outre, comme composant (D2), 0,001 à 2 % en poids, sur base du poids du composant (A1), d'au moins un polyamide.

**14.** Matière de moulage selon l'une des revendications 1 à 13, contenant en outre, comme composant (D3), 0,002 à 2 % en poids, sur base du poids du composant (A1), d'un silicate alcalino-terreux et/ou d'un glycérophosphate alcalino-terreux.

**15.** Matière de moulage selon l'une des revendications 1 à 14, contenant en outre, comme composant (D4), 0,01 à 5 % en poids, sur base du poids du composant (A1) .

- d'au moins un ester, obtenu par réaction d'au moins un acide carboxylique aliphatique saturé ou insaturé ayant 10 à 40 atomes C avec au moins un polyol ou au moins un alcool aliphatique saturé ayant 2 à 40 atomes C, et/ou
- d'au moins un amide, obtenu par réaction d'au moins un acide carboxylique aliphatique saturé ou insaturé ayant 10 à 40 atomes C avec une amine ayant 2 à 20 atomes C, et/ou
- d'au moins un éther, obtenu par réaction d'au moins un alcool avec au moins un oxyde d'éthylène.

**16.** Matière de moulage selon l'une des revendications 1 à 15, contenant en outre, comme composant (C), 0,01 à 5 % en poids, sur base du poids du composant (A1), de talc.

**17.** Matière de moulage selon l'une des revendications 1 à 16, contenant en outre, comme composant (D8), 0,01 à 5 % en poids, sur base du poids du composant (A1), d'huile blanche.

**18.** Matière de moulage selon l'une des revendications 1 à 17, dans laquelle le au moins un polyoxyméthylène est au moins un homopolymère de polyoxyméthylène ou au moins un copolymère de polyoxyméthylène ou un mélange d'au moins un homopolymère de polyoxyméthylène et d'au moins un copolymère de polyoxyméthylène.

**19.** Matière de moulage selon l'une des revendications 1 à 18, contenant en outre, comme composant (A2), jusqu'à 55 % en poids, sur base du poids du composant (A1), d'au moins un polyuréthanne.

**20.** Matière de moulage selon la revendication 19, dans laquelle le polyuréthanne est un polyester-polyuréthanne thermoplastique avec une dureté Shore A, déterminée selon DIN 53505, située dans la plage allant de 75 à 90.

**21.** Matière de moulage selon l'une des revendications 1 à 20, ayant une émission de formaldéhyde de maximum 8 ppm, de préférence maximum 7 ppm, déterminée selon VDA 275.

**22.** Utilisation d'un matériau zéolitique comme constituant d'une matière de moulage contenant au moins un polyoxyméthylène, pour diminuer l'émission de formaldéhyde de la matière de moulage.

**23.** Utilisation selon la revendication 22, dans laquelle le matériau zéolitique présente un diamètre des pores situé dans la plage allant de 0,3 à 0,5 nm, déterminé selon DIN 66134 et DIN 66135.

**24.** Utilisation selon la revendication 22 ou 23, dans laquelle les particules du matériau zéolitique présentent une taille située dans la plage allant de 3 à 7 μm, déterminée selon ISO 13320.

**25.** Utilisation selon l'une des revendications 22 à 24, pour diminuer l'émission de formaldéhyde de la matière de moulage jusqu'à une valeur de maximum 8 ppm, de préférence de maximum 7 ppm, déterminée selon VDA 275.

**26.** Utilisation selon l'une des revendications 22 à 25, dans laquelle aucun composé organique avec une distribution monodispersée de la masse molaire avec un groupe amino primaire et/ou un groupe amino secondaire, n'est mis en oeuvre comme constituant de la matière de moulage pour diminuer l'émission de formaldéhyde de la matière de moulage.

**27.** Procédé de préparation d'une matière de moulage selon l'une des revendications 1 à 21, comprenant le mélange d'au moins un polyoxyméthylène avec un matériau zéolitique ayant un diamètre des pores situé dans la plage allant de 0,3 à 0,5 nm, déterminé selon DIN 66134 et DIN 66135, les particules du matériau zéolitique présentant une taille située dans la plage allant de 3 à 7 μm, déterminée selon ISO 13320.

**28.** Procédé selon la revendication 27, comprenant l'extrusion d'une masse, contenant le polyoxyméthylène et le matériau zéolitique, à une température située dans la plage allant de 100 à 270 °C.

**29.** Procédé selon la revendication 27 ou 28, comprenant en outre la transformation de la matière de moulage en un corps moulé.

**30.** Corps moulé, obtenu par un procédé selon la revendication 29, avec une émission de formaldéhyde de maximum 8 ppm, de préférence de maximum 7 ppm, déterminée selon VDA 275.

**31.** Utilisation d'une matière de moulage selon l'une des revendications 1 à 21 ou d'une matière de moulage obtenue par un procédé selon la revendication 27 ou 28, pour la préparation d'un corps moulé, le corps moulé étant un jouet ou une partie d'un jouet, des pièces d'accessoires d'automobile, d'avion ou de bateau ou des parties de pièces d'accessoires d'automobile, d'avion ou de bateau, un emballage ou une partie d'emballage, un récipient ou une partie de récipient, un appareil ménager ou une partie d'un appareil ménager, un appareil médical ou une partie d'un appareil médical, un constituant d'un article cosmétique, une partie d'un dispositif électrique ou électronique ou un dispositif utilisé dans la construction des bâtiments ou une partie de celui-ci.

FIG.1

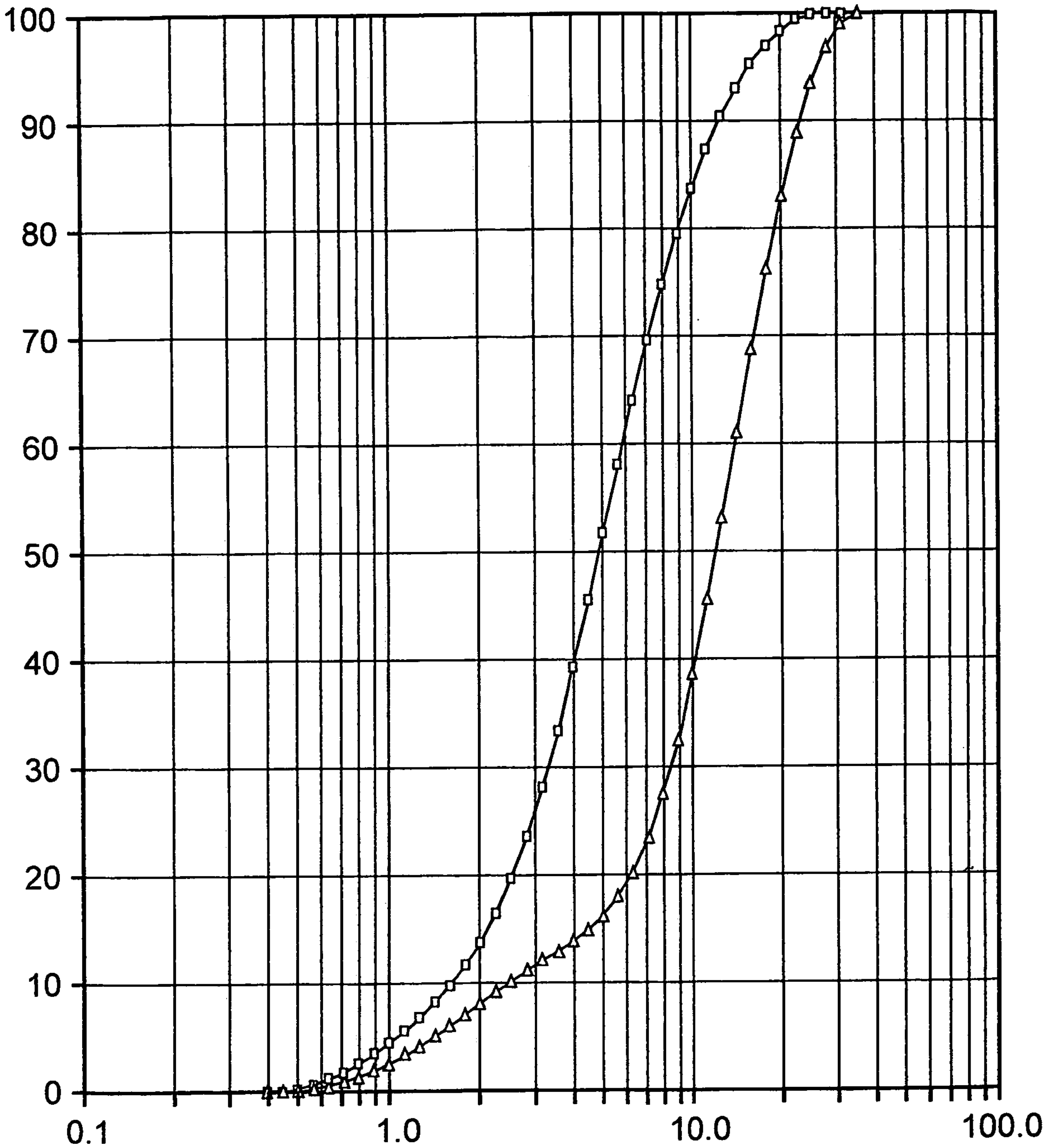

FIG.2

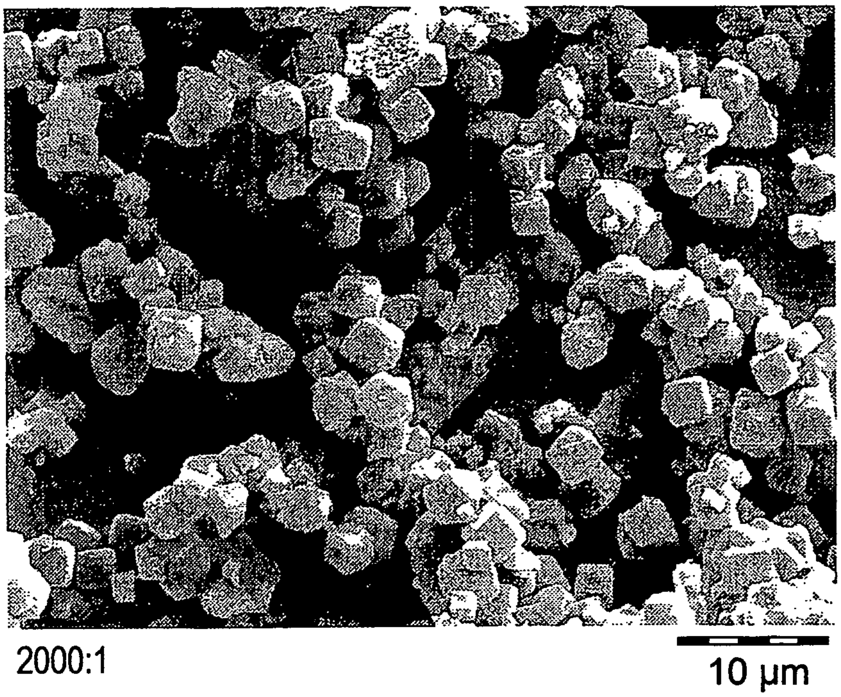
2000:1
10 µm

FIG.3

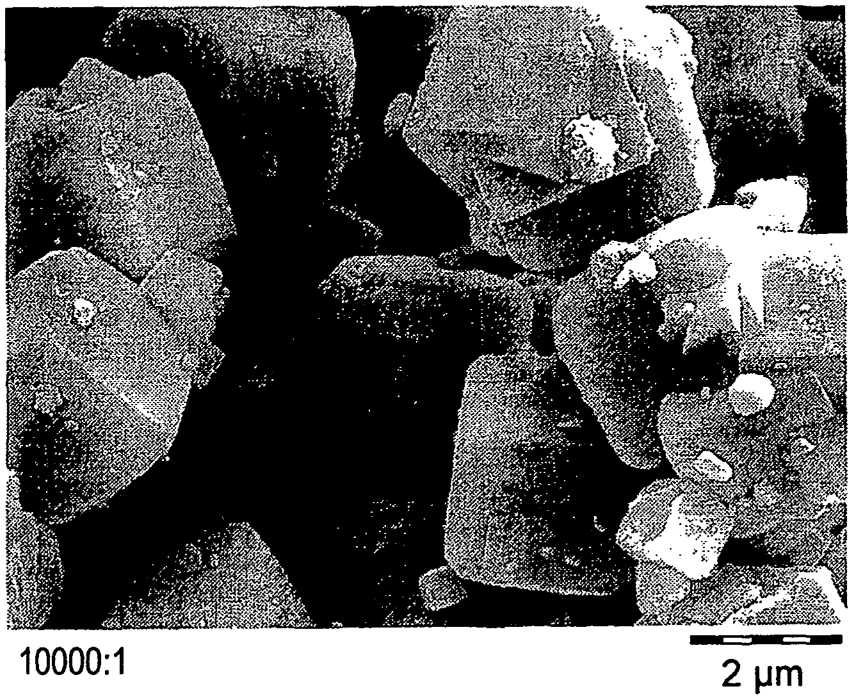

FIG.4

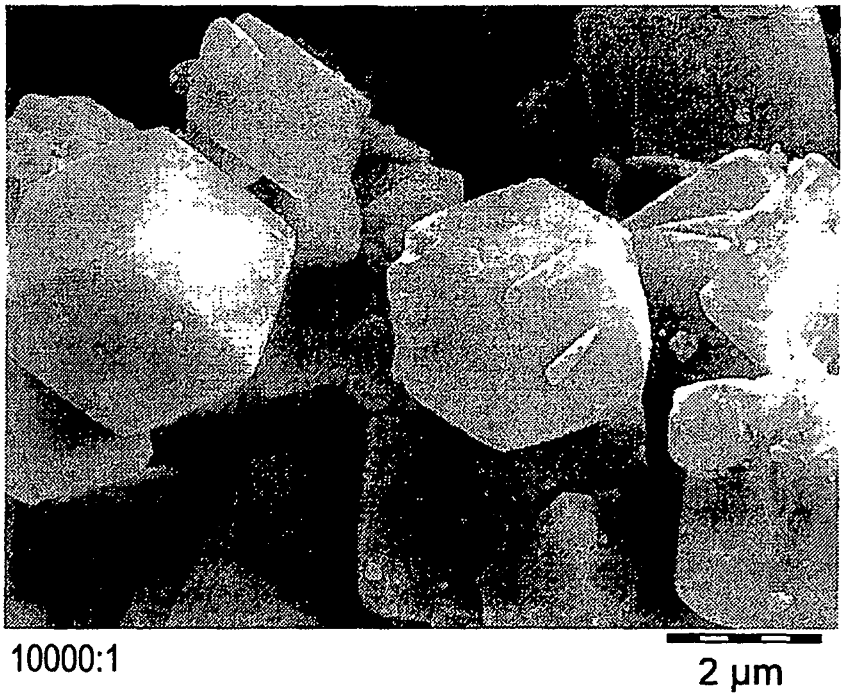

FIG.5

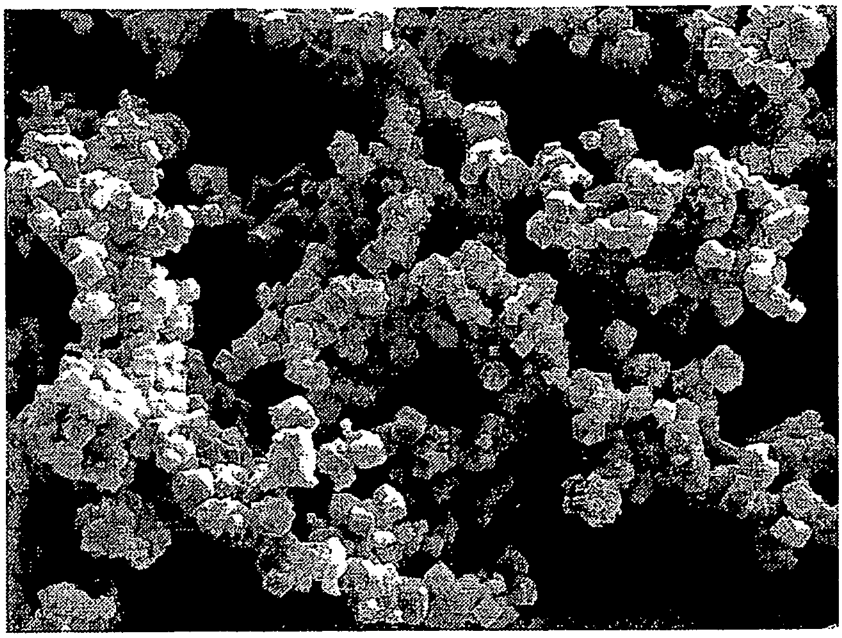

FIG.6

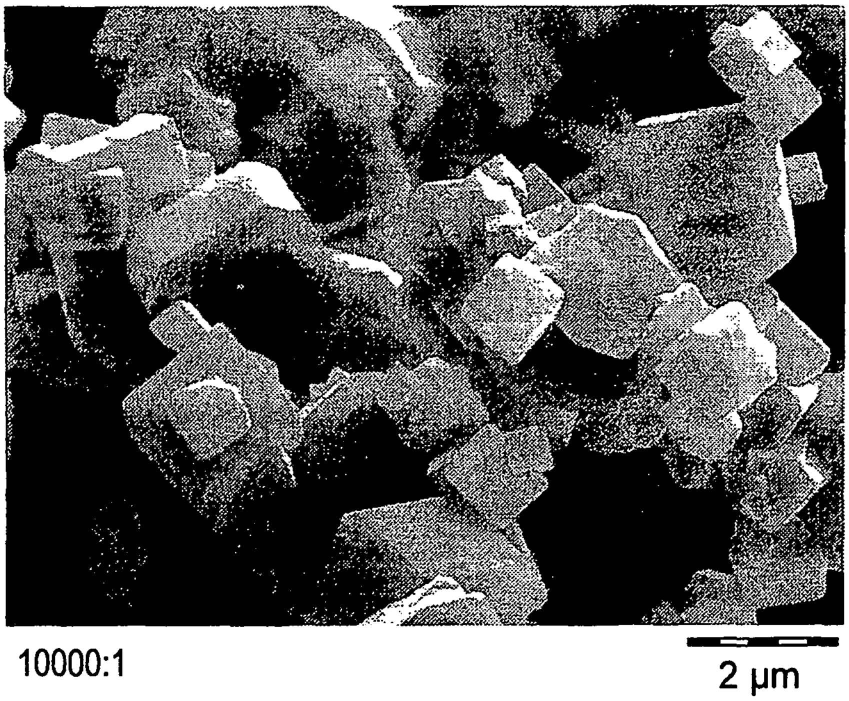

FIG.7

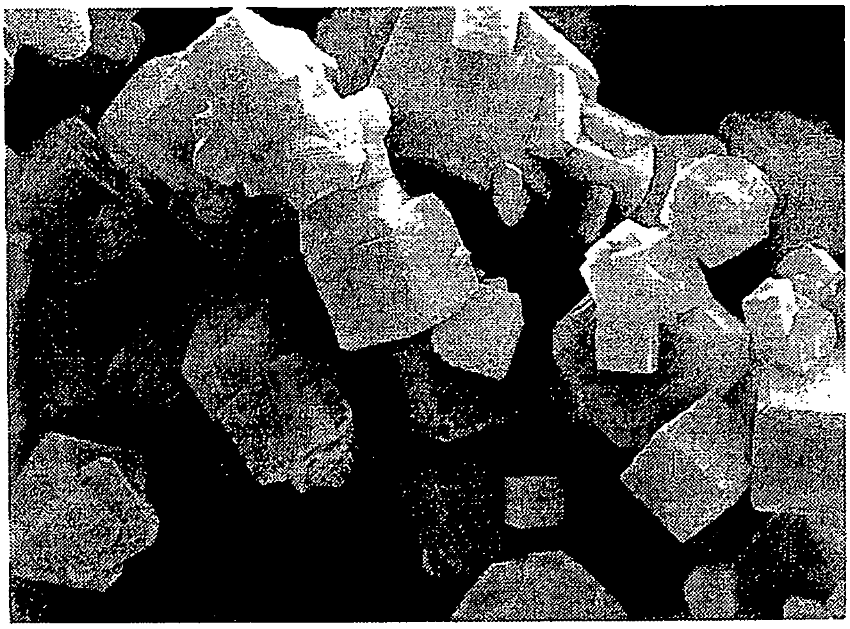

FIG.8

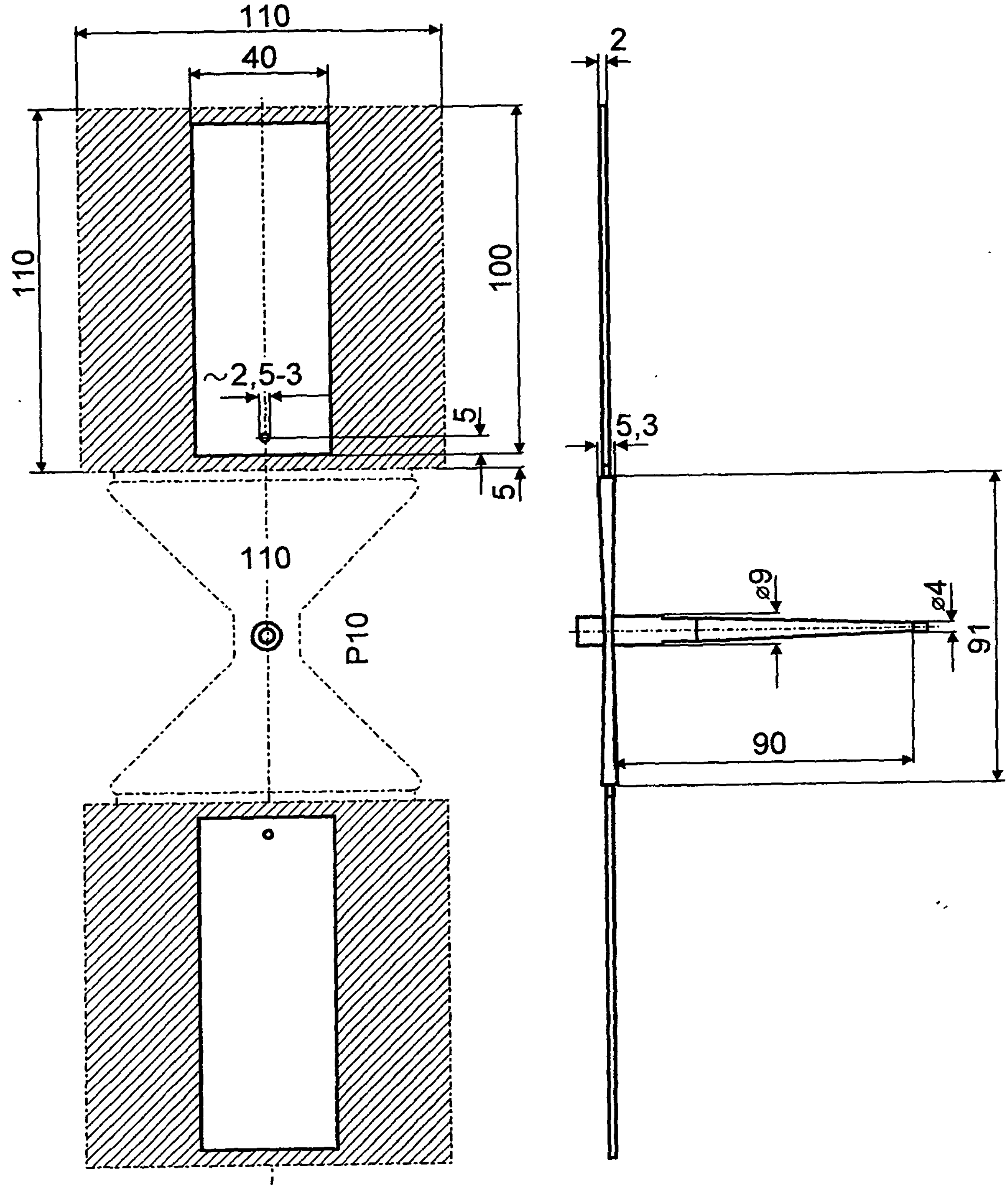

FIG.9

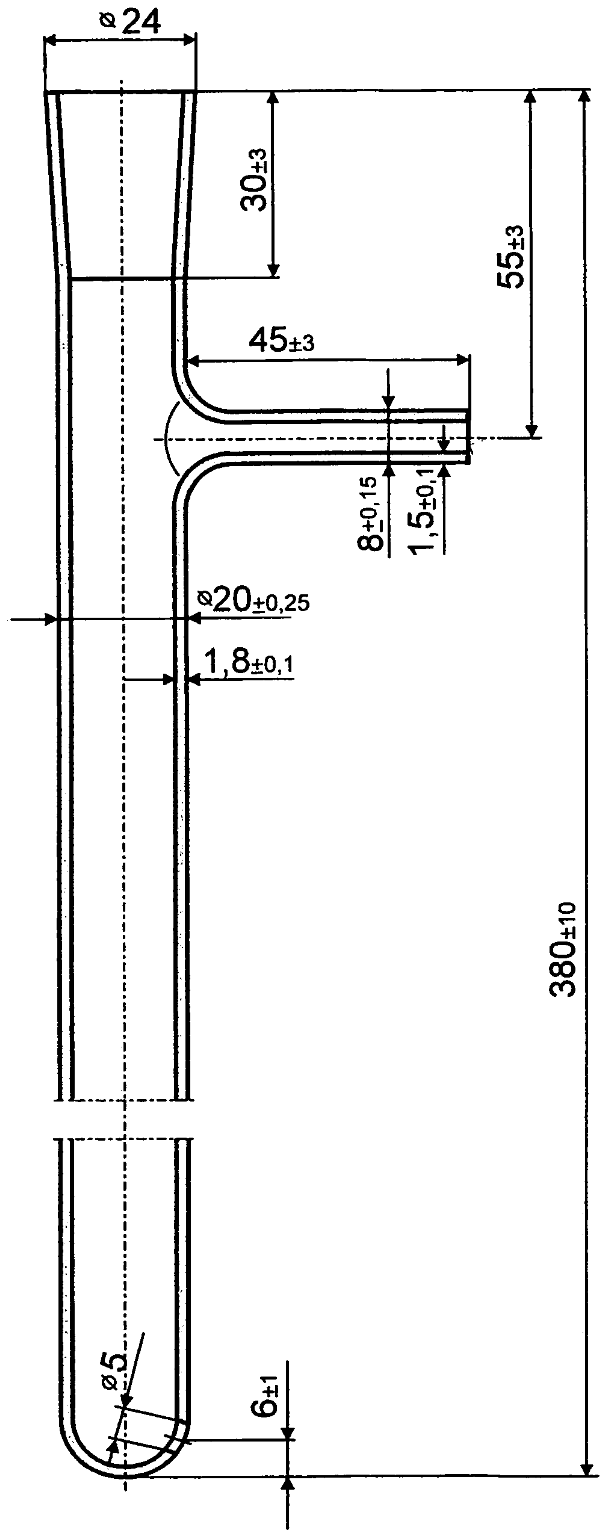

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0789049 A1
- US 6753363 B1
- EP 0288063 A2
- EP 1264858 A1
- US 20040010064 A1
- US 5710189 A
- US 5847017 A
- DE 2702661 A1
- US 4360617 A
- EP 0115846 A2
- EP 0115847 A2
- EP 0117664 A1
- EP 0208187 A2
- EP 0050265 A1
- US 4148846 A
- CH 62780348 B2
- US 3960984 A
- US 3960984625 A


### In der Beschreibung aufgeführte Nicht-Patentliteratur


- Römpp Chemie-Lexikon. Georg Thieme Verlag, 1999, vol. V, 3490, 3406-3407
- **M. W. MEIER ; D. H. OLSON ; CH. BAERLOCHER.** Atlas of Zeolite Structure Types. Elsevier, 2001
- Encyclopedia of Polymer Science and Engineering. John Wiley & Sons, Inc, 1988, vol. 11, 315-489
- Plastics Additives Handbook. Nucleating Agents for Semicrystalline Polymers. Hanser Verlag, 2001, vol. 5, 949ff.956-969
- Polycarbonate, Polyacetale, Polyester, Celluloseester. Kunststoffhandbuch. Hanser Verlag, 1992, vol. 3-1, 323
- Emulsion Polymerization. **D.C. BLACKLEY.** Monographie. Applied Science Publishers LTD, 1975